# EUROPEAN PATENT SPECIFICATION

(11) **EP 0 691 058 B1**
(45) Date of publication and mention of the grant of the patent: **07.01.1998**
(21) Application number: 94912175.0
(22) Date of filing: 02.03.1994
(51) Int. Cl.: H04M 1/24, H04M 3/08, H04M 3/22, H04M 11/00, H04Q 7/00, H04B 17/00

(54) **SELF-DIAGNOSTIC SYSTEM FOR CELLULAR-TRANSCEIVER SYSTEMS**
SELBSTDIAGNOSESYSTEM FÜR ZELLULARE FUNKSYSTEME
SYSTEME D'AUTODIAGNOSTIC POUR SYSTEMES A TRANSDUCTEURS CELLULAIRES

(30) Priority: 25.03.1993 US 37627
(43) Date of publication of application: 10.01.1996
(73) Proprietor: TELULAR INTERNATIONAL, INC., Euynabo, Puerto Rico 00968 (US)
(72) Inventor: ORTIZ, Luis R., 10-D-5 Chestnut Hill Avenue, San Juan, Puerto Rico 00926 (US); TORRES, Alexis, Carolina, Puerto Rico 00632 (US)
(74) Representative: Ruschke, Hans Edvard, Dipl.-Ing.
(86) International application number: US9402281
(87) International publication number: WO9422255

(56) References cited:
- EP-A- 0 295 373
- GB-A- 2 232 850
- US-A- 4 554 410
- US-A- 4 658 096
- US-A- 4 788 711
- US-A- 5 073 919
- US-A- 5 095 500

## Description

A portion of the disclosure of this patent document contains material which is subject to copyright protection. The copyright owner has no objection to facsimile reproduction by anyone of the patent document or the patent disclosure, as it appears in the Patent & Trademark Office patent file or records, but otherwise reserves all copyright rights whatsoever.

### BACKGROUND OF THE INVENTION

The present invention is directed to a self-diagnosis system for checking all functions of a cellular-transceiver system. The present invention has especial relevance to a cellular-interface system, such as that disclosed in U.S. Patent Nos. 4,658,096 and 4,737,975, which are incorporated by reference herein. In the systems of these patents, an interface unit couples a standard telephone set, facsimile machine, modem, or other communications devices, to a cellular, or cellular-like, transceiver, which interface unit allows for normal operation of the communications device through the radio transceiver. The interface unit may also convert DTMF or pulse-type of dialing signals into digital format for transmission to the radio transceiver, whereby the dialed number made may be used to call a number over the radio system by means of the transceiver. The system of the invention tests for the proper operation of all functions of the adapter interface unit, as well other characteristics, such as the power output of the radio transceiver, which can be varied by either signals from the transceiver or from the radio network, or the frequency at which the transceiver is utilizing, which can be changed selectively by either the transceiver or the cellular network.

The diagnostic and testing system of the present invention may be used in any cellular-like system, such as a pure cellular system, or cellular-like systems, such ISDN and other personal communication systems, where a cellular-like adapter or interface unit is provided for converting the DTMF or pulse-type of dialing signals into digital format for transmission to the cellular-like transceiver associated with the cellular-like system.

It is known to provide diagnostic and testing equipment for entire cellular systems. It is also known to provide a self-contained unit that tests itself. The latter is disclosed in U.S. Patent Number 5,016,269 - Rogers, which is incorporated by reference herein, which discloses a cellular-telephone, emergency call-box. This patent discloses self-diagnostics that are performed by the call-box itself. The call-box of this patent has self-diagnostics within it, and periodically reports the status of items checked to a central station through the cellular network. Rogers discloses a cellular handset and transceiver and associated auto-diagnostic system for checking on the system and for reporting back to a central station. However, this patent does not disclose the monitoring and self-diagnostic function of a DTMF converter, such as used in the above-mentioned U.S. Patent Nos. 4,658,096 and 4,737,975, nor does Rogers disclose the initiation of a ring-back tone from the central office to check on proper working of the system.

The types of cellular-like systems, besides the pure-type of cellular systems, in which the present invention may be used, are those that relate generally to a wireless digital personal communications systems having a plurality of intelligent base stations and intelligent portable handset terminals, each having a predetermined radio cell coverage area, and more particularly to a digital, radio cell, radiotelephone, personal communications system (or PCS) having a full ISDN interface, thereby facilitating direct interconnection and switching of PCS call traffic through the ISDN interface and the public switched telephone network, or any switched network, the personal communications system having voice/data/image (or any combination thereof) and two-way full-duplex incoming and outgoing calling capability, and being fully operational and compatible with any modulation approach selected, with the intercell protocol hand-off being provided through distributed logic which is implemented in software that is resident in the intelligent portable handset terminals, the intelligent base stations, and the public switched telephone network (or any switched network) equipped with a PCS service control data base.

The increasing availability of mobile and portable communications over the past decade is freeing business and residential users from the physical constraints of a totally wired telecommunications network. Particularly, cellular communications systems, together with paging and other complementary services, brought true mobility to telecommunications services for the first time. Significant technical advances in mobile and portable technologies, as well as in new technologies such as digital transmission with respect to wireless telecommunications, have substantially expanded the number and types of wireless telecommunications services using the radio spectrum that can be made available to the user. These prospective services include, but are not limited to, advanced forms of cellular telephone service, advanced digital cordless telephone service, portable facsimile services, wireless centrex, wireless private branch exchange services, and wireless local area network services, and may be used through the existing public switched network or through alternative local wired networks (such as cable television systems). As such, digital personal communications systems can exist independently of, and in conjunction with, local wired networks, filling gaps that are existing in current communications systems, and also in creating new markets, many of which are yet to be defined. The advent of PCS will have a great impact on the future development and configuration of all telecommunications networks by significantly improving their flexibility and functionality. Accordingly, providers of PCS will have the ability to reach and serve existing and new markets nationally in an economic and responsive manner.

Personal communications requirements in the United States are rapidly changing as the demand for instantaneous communications increases due to increased mobility of the user. One of the advantages of PCS is that it will use a single communications device to reach anyone, anytime, anywhere. PCS will facilitate increased mobility and flexibility of the user, since this approach solves the underlying problem of being in constant communications with user. PCS wireless will enable users not to miss important calls, as well as reduce the time and expense in returning calls. PCS combines the functionality of radio and the Public Switched Telephone Network (PSTN) technologies and infrastructure, and will accommodate full-duplex capabilities (two-way incoming and outgoing calling) and hand-off between radio cells (allowing users to freely move from one radio cell to another without interrupting the user's call). It is important to remember that there has been a steady increasing demand for new PCS services and technologies for numerous, sometimes incompatible, applications, namely, wireless private branch exchanges, smaller lighter portable cellular phones, portable fax machines, multi-channel cordless telephones, and additional services which are targeting the facilitation of contacting a particular individual user (rather than contacting a particular station). Current radio equipment and related services presently offered (i.e., cordless telephones, radio paging, and cellular radio) cannot fully meet the demands for these new types of PCS services. For example, cordless telephones are used in and around the home or office, operate on only a very few channels (10 or so) that are congested, and are limited to use in the immediate vicinity of their associated base station. Radio paging services are only one-way and have limited capabilities. Cellular and specialized mobile radio services cannot meet the full range of expected demand for PCS. Over time, PCS will have standardized equipment with common modules in hardware resulting in improved reliability in the associated equipment which will also be less vulnerable to transient interference from external sources, have automatic call registration, automatic call forwarding, voice mail, faxing capability, easy roaming features, remote data transfer, increased privacy protection/caller ID/class services, increased battery life, and common protocols. In order to best fulfill this marketplace mandate, a digital PCS is a necessity. Wireless PCS may eventually eliminate the need to have a building hard-wired for communications. Generally speaking, PCS will facilitate communications equipment with additional features. A digital PCS will facilitate improvements in technical communications equipment, systems and design.

The present invention, therefore, may be used in those ISDN or other PCS systems where there is provided a cellular-type adapter or interface board that allows for the use of a standard, land-type telephone instrument in this system, or other communications device, by converting the DTMF or pulse signals thereof into digital format that may be sent to a PCS transceiver unit, or by providing other functions that may be specific to the system. For example, in dedicated alarm systems where only outgoing calls are made by the radio transceiver, the interface unit need not provide ring generation, busy signal generation, and the like. Alternatively, in those systems where only incoming calls are required, the interface unit need not convert dialed DTMF or pulse signals into digital format. Such a PCS-cellular adapter also provides all of the other functions required, such as the generation of dial tone, ringing, and the like, as the cellular interface board set forth in U.S. Patent Nos. 4,658,096 and 4,737,975.

### SUMMARY OF THE INVENTION

It is, therefore, the primary objective of the present invention to provide a self-diagnostic system for a checking the functions of a cellular-transceiver cellular-interface unit, which interface unit couples a standard, land-like telephone set, or other communications device, to a cellular transceiver, or to a cellular-like, such as a PCS or ISDN transceiver, which interface unit converts the DTMF or pulse-type of dialing signals into digital format for transmission to the cellular, or cellular-like, transceiver, whereby the dialed number made on the land-type of telephone instrument, or its equivalent, may be used to call a number over the cellular, or cellular-like, system. The present invention is defined in the appended claims and consists of three aspects, a testing apparatus, a radio transceiver unit and a method of testing.

The testing apparatus of the invention is capable of being coupled to an interface unit which couples a communications device to a radio transceiver for either calling out or receiving calls through the radio transceiver, the testing apparatus having its own diagnostics for monitoring and reporting the proper functioning of the interface unit.

The testing apparatus alternately couples the diagnostics to the interface unit, which said diagnostics simulates the functions performed by a communications device, such as a land line telephone, facsimile machine, modem, and the like, for generating in the interface unit respective, corresponding responses in the interface unit, in order to determine if the interface unit is operating correctly.

The testing apparatus may for example generate an off-hook signal to the interface unit, as well as detect the presence of a dial-tone signal generated from the interface unit in response to the of the off-hook signal.

The testing apparatus may generate a DTMF signal and send the signal to the interface unit, as well as detecting the DTMF signal output by the interface unit in response to the DTMF signal generated.

The testing apparatus may generate an on-hook signal to the interface unit, as well as an off-hook signal to the interface unit during the time that the interface unit is generating its ring-signal, in order to determine that the interface unit properly disconnects the ring-signal upon the answering of an incoming telephone call. The testing apparatus also may generates an outgoing telephone call through the telephone network, when said the interface unit is coupled to a transceiver, and back to the transceiver, whereby the diagnostics causes the transceiver to make a telephone call to itself, with the diagnostics detecting the generation of a busy-signal by the transceiver in response to the telephone call.

### BRIEF DESCRIPTION OF THE DRAWINGS

The invention will be more readily understood with reference to the accompanying drawing, wherein:
Figs. 1A and 1B show a general flow chart for the steps involved for self-testing in apparatus embodying the invention;
Fig. 2 is a flow chart showing the steps involved for the subroutine of the self-testing of an off-hook condition;
Figs. 3 is a flow chart showing the steps involved for the subroutine of the self-testing of dial tone generation;
Fig. 4 is a flow chart showing the steps involved for the subroutine of the self-testing of DTMF tone generation;
Figs. 5A through 5C show a flow chart for the steps involved for the subroutine of the self-testing of ring generation;
Fig. 6 is a flow chart showing the steps involved for the subroutine of the self-testing of ring-answer process;
Figs. 7A and 7B show a flow chart showing the steps involved for the subroutine of the call-test which checks for proper call-detection and answering of an incoming call according to the invention;
Figs. 8A and 8B show the error-code generation subroutine according to the invention;
Fig. 9 is a flow chart showing the reset subroutine according to the invention;
Fig. 10 is a block diagram of the system of the invention;
Figs. 11 - 14 are schematics showing the various circuits used for testing the cellular, or cellular-like, interface and transceiver by simulating the events to be tested.

### DETAILED DESCRIPTION OF THE INVENTION

The auto-diagnostic maintenance system of the present invention is for use in cellular, or cellular-like, interface boards and systems, such as those disclosed in U.S. Patent Nos. 4,658,096 and 4,737,975. In addition, the auto-diagnostic maintenance system of the present invention may be used with other radio-transceiver systems, such as IMTS, where there is provided a wireless link between a base station and master stations, and which transceiver is associated with an adapter interface board, such as that disclosed in U.S. Patent Nos. 4,658,096 and 4,737,975, for example, which allows for connection and normal functioning of a communications-type instrument, such as a land-line telephone, facsimile machine, modem, and the like, to the radio transceiver. The interface unit provides a number of functions depending upon its intended use. For example, in dedicated alarm systems, where only outgoing calls are made by the radio transceiver, the interface unit need not provide ring generation, busy signal generation, and the like, to the communications device. Alternatively, in those systems where only incoming calls are required, the interface unit need not convert dialed DTMF or pulse signals into digital format. Software is provided which communicates with the microprocessor of the cellular interface board or other radio-transceiver interface board, disclosed in U.S. Patent Nos. 4,658,096 and 4,737,975, which software may be activated either manually or automatically for activating an auto-diagnostic interface board of the invention, which software diagnoses the proper functioning of all the software and hardware systems contained within the entire system of these above-mentioned patents. Every single item can be checked. For example, on the interface board, the DTMF converter will be checked, the four-line interface to two-wire connection will be checked, the busy-tone software will be checked, as well as all other functioning aspects of the interface. In addition, the transceiver will be checked, the battery will be checked, as well as any other aspects of the interface. The maintenance system is capable of making a call over the cellular, or cellular-like, network to a predetermined telephone number of a central station, or base station, which central station will then send back either a tone-back or will dial the current number of the interface system to get a busy signal. This will be considered a test. The system will also send another telephone number over the cellular, or cellular-like, system to call the same or a different central station, so that it may send back a 1000 hertz precision tone, whereby the software of the present invention will compare that 1000 hertz tone to its own predetermined configuration in order to determine whether there is a line-connection and that the cellular, or cellular-like, system is operating correctly. This is a particularly useful system, since it allows the end-user to activate the phone in the event the user believes there is a problem with a phone. This test will then tell the telephone company whether or not the error is at the cellular system's central office or it is a problem with the base unit of the end-user.

Typically there are two different modules. The first one is the telemaintenance circuit and the second is the teletariff circuit. The telemaintenance circuit generates a multiple test, as set forth below in detail, that includes a generation of a telephone call to a predetermined number. The circuit will report the results of the test to this particular number. In addition, the circuit can dial out to its own number in order to assure that the reception and transmission of the unit is working by receiving a busy signal. These sets of tests can be initiated by the subscriber by pressing a push button that is located on the side of the unit. When the button is pressed, the LED located near the button will continue flashing identifying the test is in progress. If at the end of the test the LED continues to stay on, that indicates there is a problem with the unit. This test generally takes no more than 40 seconds maximum. On the other hand, if the LED stops blinking and turns off, it indicates that the test was successful, and that the unit is in proper working order for the items that were checked on the test. As an option, the software and hardware provide that the test can be conducted from an outside number, provided that the transmission media allows it, (i.e., that the transceiver is in working order to receive a phone number).

The second circuit consists of the following: It utilizes the tariffing signal from the cellular, or cellular-like, system and generates the corresponding tariffing pulses for a standard table phone or pay phone. The device interprets the signal coming in from the cellular, or cellular-like, system, and does not need any local tariff. It operates in a similar manner for generating the long tones. It can be used with any cellular, or cellular-like, system that is capable of sending the tariff signals.

### Telemaintenance Modules Flow Chart Description

The user may invoke the operational test sequence by pressing the autodiagnostic push button. When invoked, the interface board control is transferred to the autodiagnostic main subroutine of the telemaintenance module for performing the auto-testing.

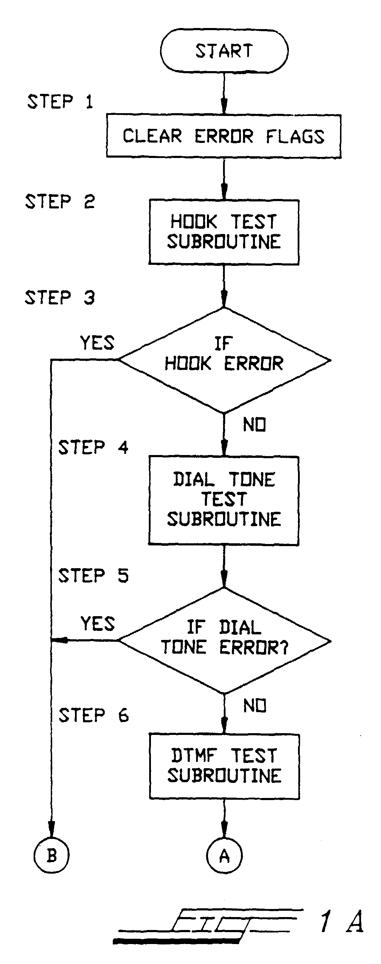

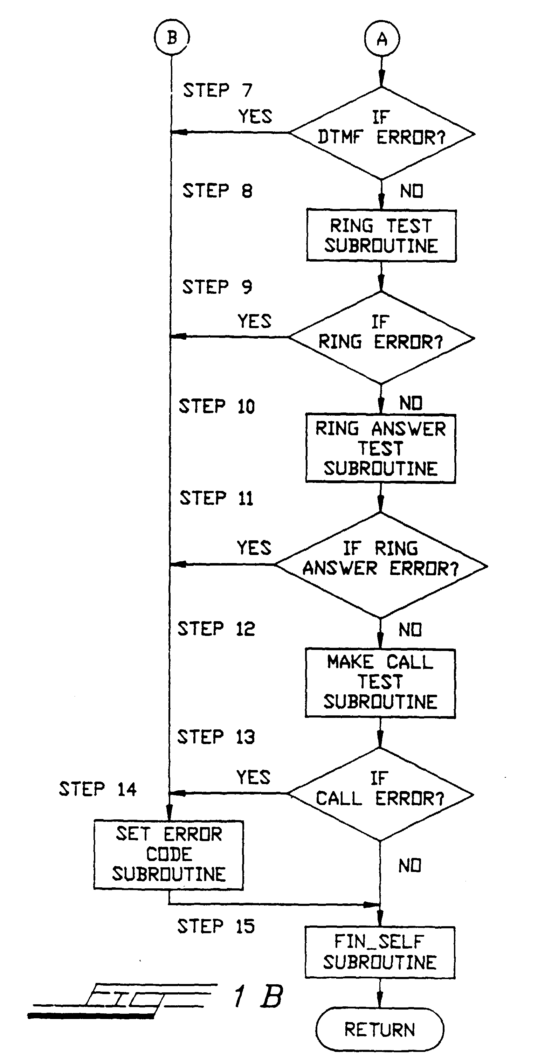

FIGS. 1A and 1B show the DO_TEST subroutine, or the autodiagnostic main subroutine. A number of calls to various test procedures are performed. After each procedure, the error flags are checked. In the event of any failure, the test sequence is stopped. Then, the status is coded, and the result is shown to the user through four LEDs, as described below.

Referring to FIG. 1A, In STEP 1, the operational test sequence starts with the initialization of variables and flags. In STEP 2, the program calls up the Hook_Test subroutine. In Hook_Test, the user's telephone is disconnected from the TIP & RING lines, while the Telemaintenance Module (described below in detail) is connected in its place, to the interface board, such as that disclosed in U.S. Patent Nos. 4,658,096 and 4,737,975, in preparation for the test. STEP 3 checks for any error detected in Hook_Test. If any error was found, the test sequence stops, and the program proceeds to STEP 14 in FIG. 1B. However, if no error was detected, the program calls up the Dial_Tone Test subroutine in STEP 4. STEP 5 checks for any dial tone error. If any error was found, the test sequence stops, and the program proceeds to STEP 14 in FIG. 1B. However, if no error was detected, the program calls up the next test, the DTMF_Test subroutine in STEP 6. The program continues in FIG. 1B STEP 7, where any DTMF_Tone subroutine is checked. If any error was found, the test sequence stops and the program proceeds to STEP 14. However, if no error was detected, the program calls up the next test, the Ring_Test subroutine in STEP 8. STEP 9 checks for any ring error. If any error was found, the test sequence stops and the program proceeds to STEP 14. However, if no error was detected, the program calls up the next test, the Ring_Answer_Test subroutine in STEP 10. STEP 11 checks for any ring-answer error. If any error was found, the test sequence stops, and the program proceeds to STEP 14. However, if no error was detected, the program calls up the next test, the Make_Call_Test subroutine in STEP 12. STEP 13 checks for any calling-out error. If any error was found, the test sequence stops, and the program proceeds to STEP 14. However, if no error was detected, the program calls up the next test, the Fin_Self_Test subroutine in STEP 15. If any error was found during the execution of any subroutine, the program jumps to STEP 14. In STEP 14, the program calls up the Error_Acc subroutine. Finally, the test sequence ends after STEP 15 has cleared all variables and flags, returning the control back to the telephone set, and resuming normal operations of the Interface.

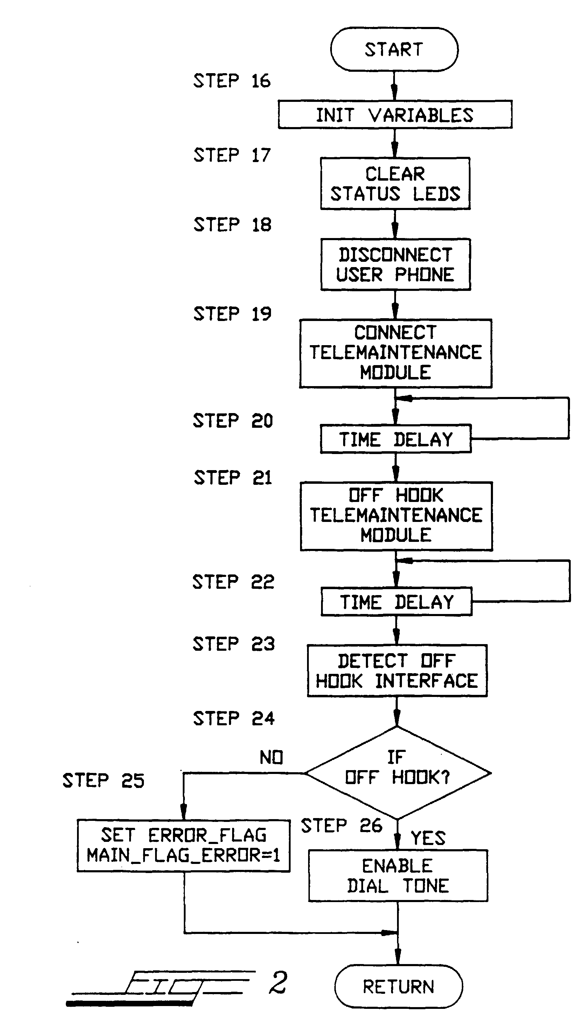

The following explanations of FIG. 2 to FIG. 9 correspond, and describe in detail, the individual test-subroutines above-mentioned.

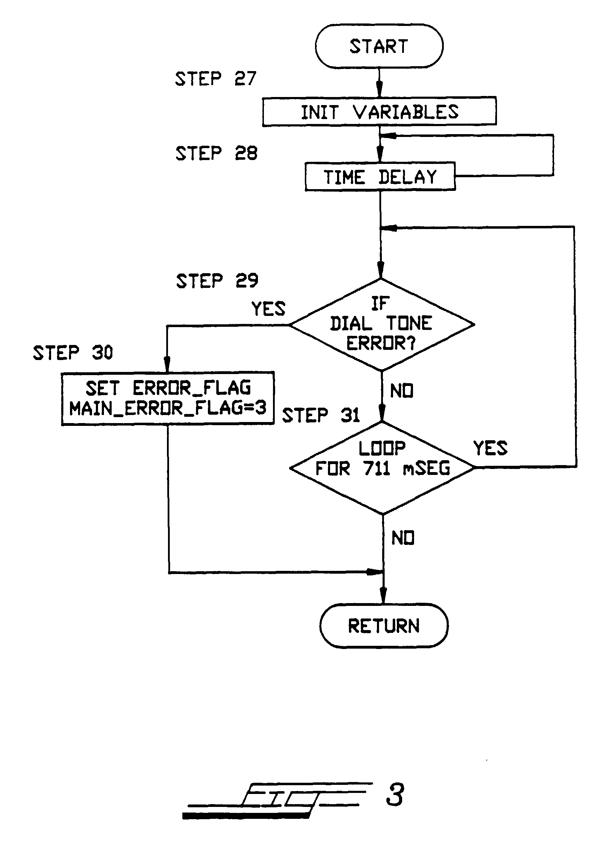

Referring to FIG. 2, the Hook_Test subroutine (Step 2 of FIG. 1A) starts with the initialization of variables and flags in STEP 16. In STEP 17, the program clears any output of the LEDs. In STEP 18, the user's telephone is disconnected from the TIP & RING lines of the interface board, while in STEP 19, the telemaintenance module of the invention is connected in place of the telephone. STEP 20 is a time delay to allow enough reaction time for such connection. In STEP 21, the telemaintenance module of the invention simulates and generates an off-hook. STEP 22 is a time delay to allow enough time for the off-hook. In STEP 23, the program checks the hook status of the interface board, which has now been coupled to the telemaintenance module. STEP 24 test for off-hook. If off-hook is not detected, the program continues to STEP 25, where the ERROR_FLAG is set and the MAIN_FLAG_ERROR is set to 1. However, if no error was detected, the program continues to STEP 26, where the dial tone is enabled for the next test shown in FIG. 3. Finally, this subroutine ends, and the program returns to the main subroutine Do_Test of FIGS. 1A and 1B.

Referring to FIG. 3, the Dial_Test subroutine starts with the initialization of variables and flags in STEP 27. STEP 28 is a time delay to allow enough time for a proper dial tone. STEP 29 tests the dial tone. If the dial tone fails, the program continues to STEP 30, where the ERROR_FLAG is set and the MAIN_FLAG_ERROR is set to 3. However, if no error was detected, the program continues to STEP 31, where the program loops back to STEP 29, testing the dial tone for at least 711 milliseconds. After no errors have been detected after the 711 milliseconds has expired, this subroutine ends, and the program returns to the main subroutine Do_Test of FIGS. 1A and 1B.

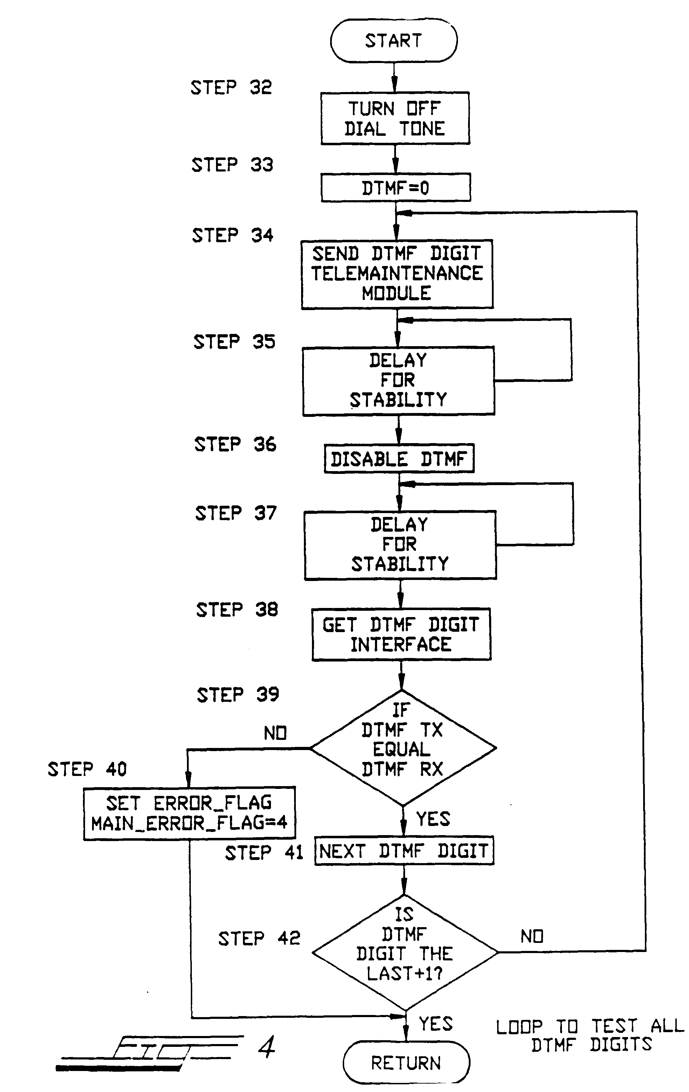

Referring the FIG. 4, the DTMF_Test subroutine, which tests for the proper DTMF conversion into digital data by the interface board, starts in STEP 32 by disabling the dial tone from the previous subroutine test. STEP 33 sets the first DTMF tone to 0. In STEP 34, the telemaintenance module sends the DTMF tone corresponding to this value. STEP 35 is a time delay to allow enough time for the tone to be on. STEP 36 disables the DTMF tone. STEP 37 is a time delay to allow the interface to detect the DTMF tone pulse. In STEP 38, the interface reads the tone. STEP 39 checks the received DTMF tone. If the DTMF tone sent is not equal to DTMF tone received, or no DTMF tone is received, then the program continues to STEP 40, where the ERROR_FLAG is set, and the MAIN_FLAG_ERROR is set to 4. However, if the DTMF tones are equal, the program continues to STEP 41, and the next DTMF digit is selected. In STEP 42, the program verifies that all DTMF tones have been tested; otherwise the program loops back to test the next digit. Finally, after all the DTMF tones have been tested, the subroutine ends, and the program returns to the main subroutine called Do_Test of FIGS. 1A AND 1B.

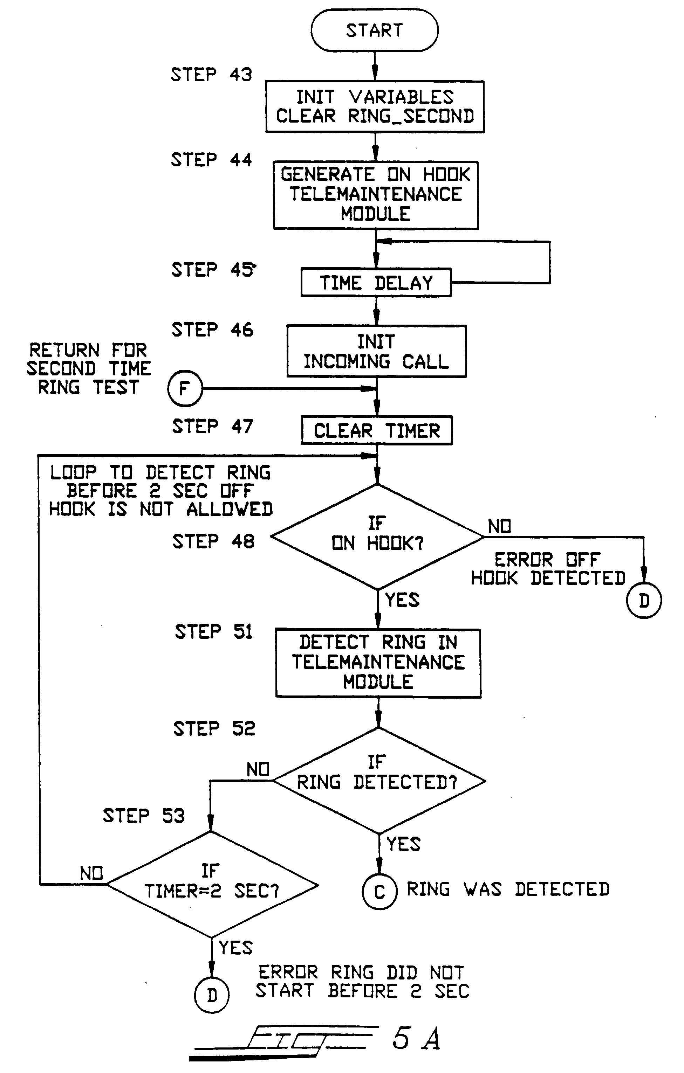

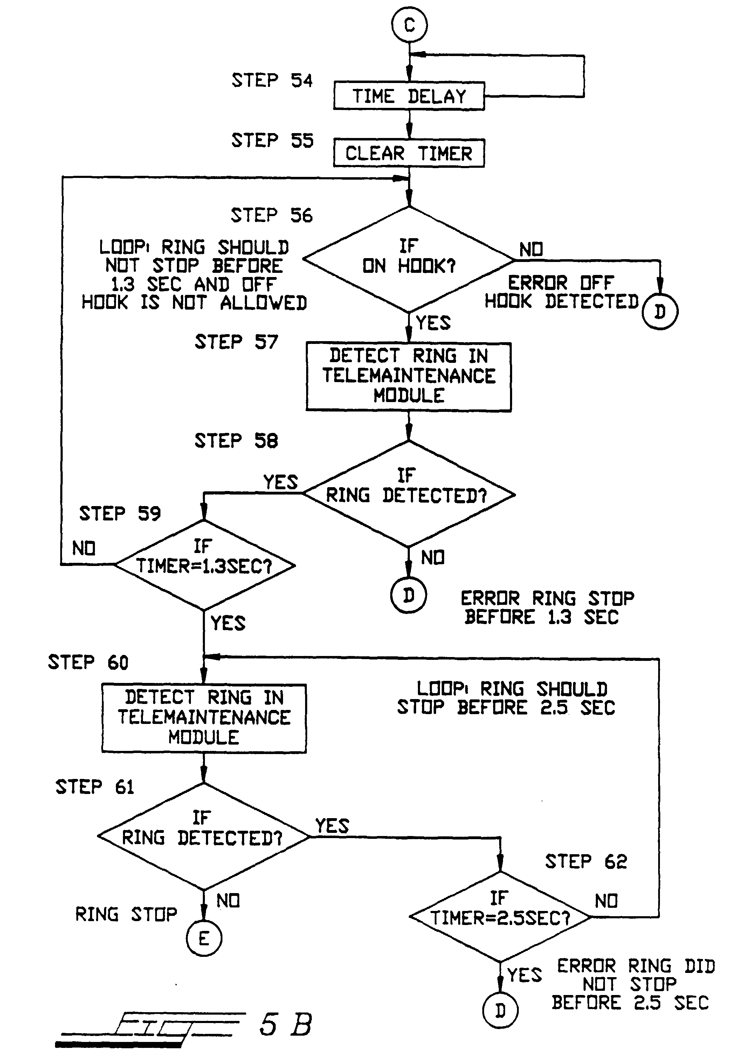

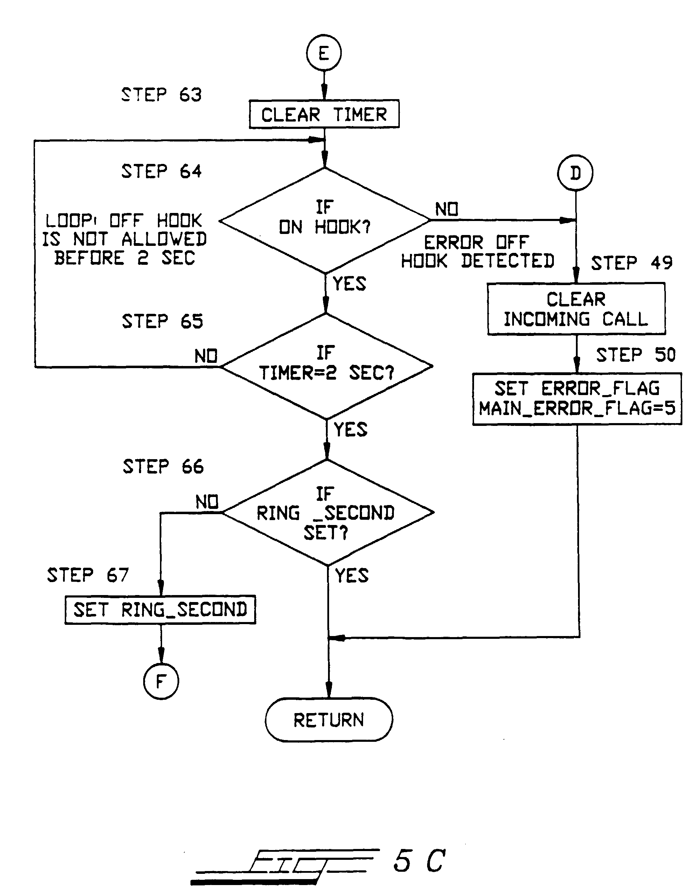

Referring to FIGS. 5A & 5B, the Ring_Test subroutine is shown. This subroutine tests the timing of the two pulses of the ring generated by the ring circuitry of the interface board. Referring to FIG. 5A, the subroutine starts with the initialization of variables and flags in STEP 43. In STEP 44, the telemaintenance module generates an on-hook. Step 45 is a time delay to allow the interface to detect the on-hook. In STEP 46, the interface is set to believe that an incoming call is in progress; therefore, the interface board will generate its ring sequence. The objective of STEPS 47 to 53 is to verify that the ring starts within the next two seconds, and that off-hook is not detected. In STEP 47, the timer is cleared. STEP 48 tests for off-hook. If off-hook is detected, then the test is stopped, and the program jumps to STEP 49 in FIG. 5C for error-indication. However, when on-hook is detected, the program continues to STEP 51, where the telemaintenance module checks for the ring to be active. STEP 52 tests if the ring has started. If the ring has started, the program continues to STEP 54 in FIG 5B. However, if the ring had not yet started, the program checks the timer in STEP 53. If the time is less than two seconds, the program keeps looping back to STEP 48 until the ring starts. However, if the two second timer had expired, the test stops and the program jumps to STEP 49 in FIG. 5C for indicating error. Referring to FIG. 5B, STEP 54 is a time delay. The objective of STEP 55 to STEP 59 is to verify that the ring will last for at least one 1.3 seconds, and that off-hook is not detected. In STEP 55, the timer is cleared. STEP 56 tests for on-hook. If off-hook is detected, the test stops, and the program jumps to STEP 49 in FIG 5C for indicating error. However, when on-hook is detected, the program goes to STEP 57, where the telemaintenance module checks for the Ring to be active. STEP 58 tests if the ring has stopped. If the ring has stopped, the program continues to STEP 49 in FIG. 5C. However, if the ring has not yet stopped, the program checks the timer in STEP 59. If the timer is less than 1.3 seconds, the program keeps looping back to STEP 56 until the ring stops. However, if the time has expired, the test stops, and the program jumps to STEP 49 in FIG. 5C. The objective of STEP 60 to STEP 62 is to verify that the ring will not last more than 2.5 seconds. In STEP 60, the telemaintenance module checks if the ring is active. STEP 61 tests if the ring has stopped. If stopped, the program jumps to STEP 63 in FIG. 5C. However, if the ring has not yet stopped, the program checks the timer in STEP 62. If the timer is less than 2.5 seconds then, the program keeps looping back to STEP 60 until the ring stops. However, if the time has expired, the test stops and the program jumps to STEP 49 in FIG. 5C.

Referring to FIG. 5C, the objective of STEP 63 to STEP 65 is to verify that no off-hook is detected for a period of two seconds. In STEP 63, the timer is cleared. STEP 64 tests for on-hook. If off-hook is detected, then the test stops and the program continues in STEP 49 for indicating error. However, if off-hook is not detected, the program checks the timer in STEP 65. If the timer is less than two seconds, the program keeps looping back to STEP 64 until the ring starts. However, if the time has expired, then the program continues in STEP 66, where the program checks how many cycles this subroutine has tested the ring. If the ring has been tested for only one cycle, the program continues in STEP 67, where the flag called Ring_Second is set. Thereafter, the program loops back up to STEP 47 in order to test the ring for a second time. However, if the ring has been tested twice, the subroutine ends and the program returns to the main subroutine called Do_Test. If an error was detected during any part of the Ring_Test subroutine, the program jumps to STEP 49. STEP 49 clears the incoming call status; therefore, the ring sequence stops. Then, the program continues in STEP 50, where the ERROR_FLAG is set and the MAIN_FLAG_ERROR is set to 5. Then, the subroutine ends, and the program returns to the main subroutine called Do_Test.

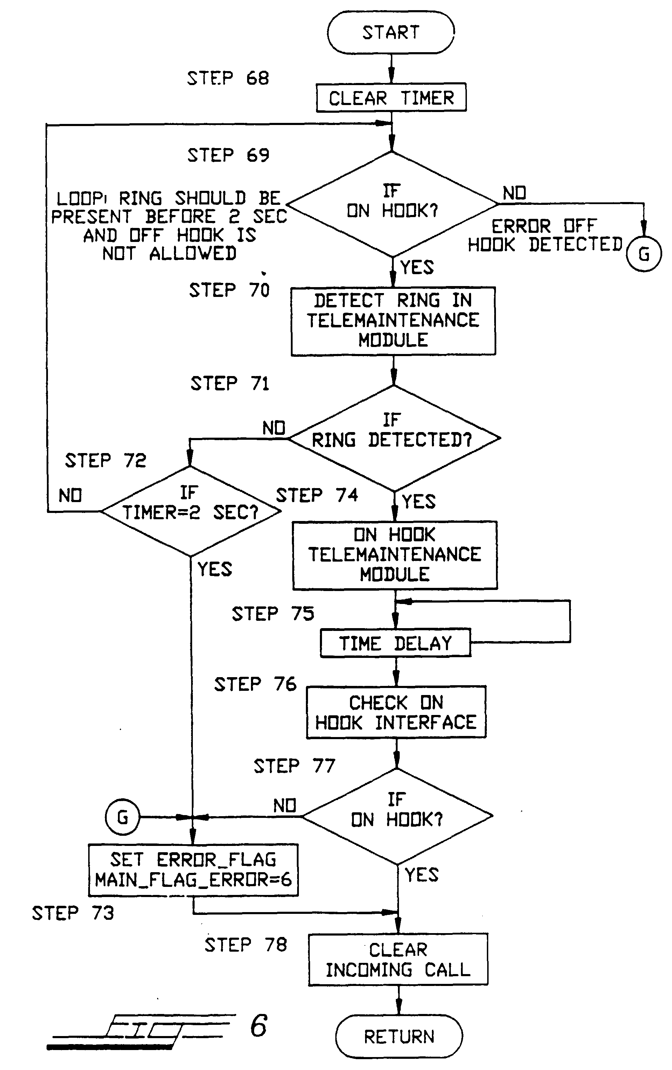

Referring to FIG. 6, the Ring_Answer_Test subroutine is shown. This subroutine tests the response of the interface board when an off-hook is presented to the interface board during the ring-cycle, when answering the telephone for an incoming call. The objective of STEP 68 to STEP 69 is to verify that the ring will start within the next two seconds and that off-hook is not detected. In STEP 68, the timer is cleared. STEP 69 tests for on-hook. If off-hook is detected, then the test stops and the program jumps to STEP 73. However, if on-hook is detected, the program continues with the ring active. STEP 71 tests if the ring has started. If the ring has started, the program continues to STEP 74. However, if the ring has not yet started, the program checks the timer in STEP 72. If the timer is less than two seconds, then the program loops back to STEP 69 waiting for the ring to start. However, if the two-second timer has expired, the test stops and the program jumps to STEP 73. STEP 75 is a time delay that allows the interTEP 74, the telemaintenance module generates an off-hook. STEP 75 is a time delay that allows the interface board to detect the off-hook. In STEP 76, the interface checks the hook-status. If off-hook is not detected in STEP 77, then the test stops and the program jumps to STEP 73. However, if the interface board detects the off-hook, the program continues in STEP 78. If an error was detected during any part of the Ring_Answer_Test subroutine, then the program jumps to STEP 73, where the ERROR_FLAG is set and the MAIN_FLAG_ERROR is set to 6. Then, the program continues in STEP 78. In STEP 78, the incoming call status is cleared; therefore, the interface board will stop the ring sequence. Then, the subroutine ends, and the program returns to the main subroutine called Do_Test.

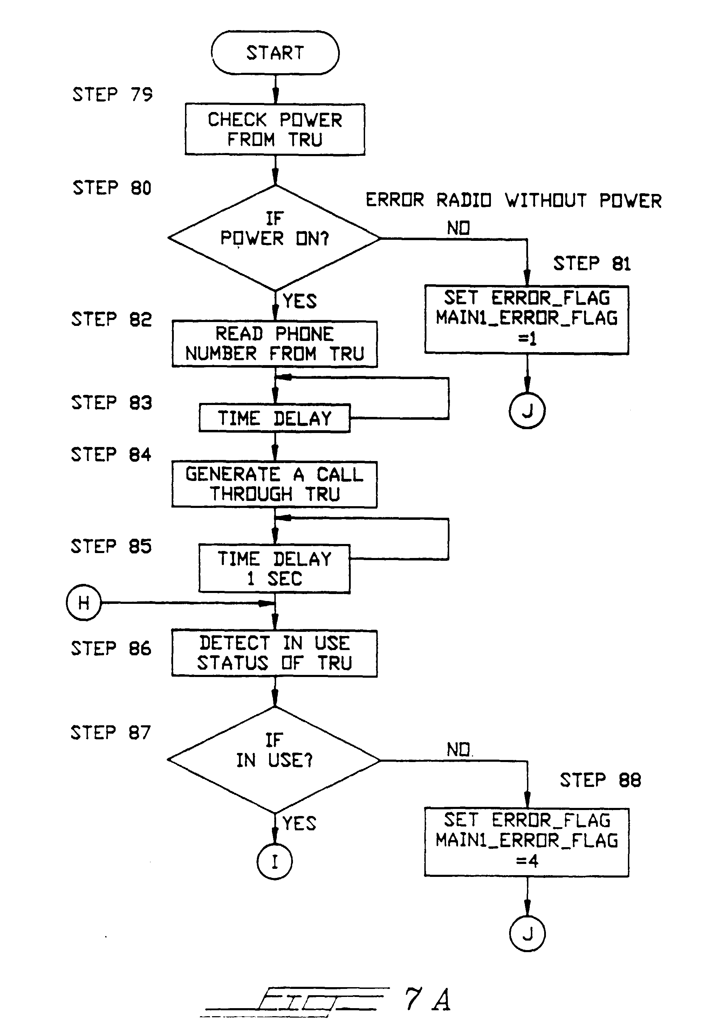

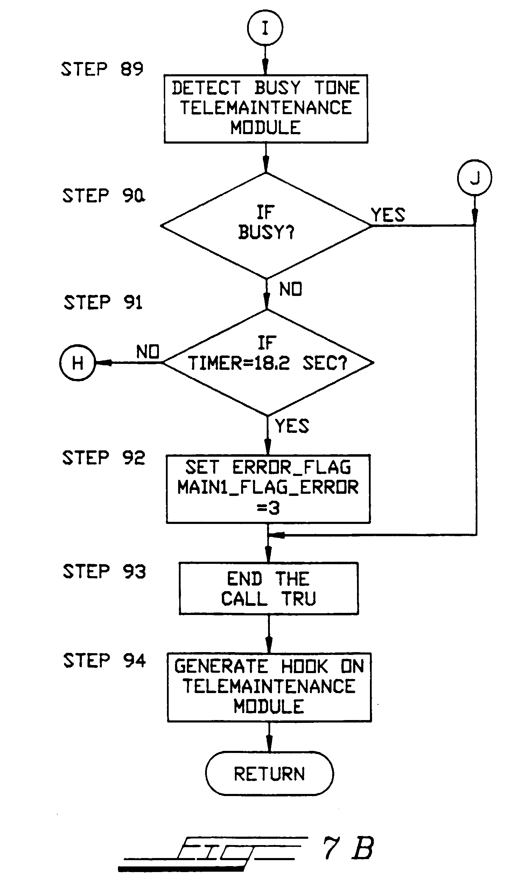

Referring to FIGS. 7A & 7B, the Call_Test subroutine is shown. This subroutine tests the cellular, or cellular-like, transceiver coupled to the interface board, by first checking the power, and, secondly, generating a call to its own telephone number. Referring to FIG. 7A, STEP 79 checks if the transceiver's power is "on". If the power is "off", the MAIN1_FLAG_ERROR is set to 1 in STEP 81, and then the program jumps to STEP 93 in FIG. 7B. However, if the power is "on", the program proceeds to STEP 82, where the interface board requests and gets the transceiver's assigned telephone number. STEP 83 is a time delay to allow reaction time for the transceiver. In STEP 84, the interface board generates a telephone call to itself. STEP 85 is a time delay to allow time for connection between the cellular, or cellular-like, network and the transceiver. In STEP 86, the interface board requests the IN USE status from the transceiver. STEP 87 checks the status of the call. If the status is not IN USE, the MAIN1_FLAG_ERROR is set to 4 in STEP 88, and then the program jumps to STEP 93 in FIG. 7B. However, if the transceiver is IN USE, the program proceeds to STEP 89 in FIG 7B. In FIG. 7B, the telemaintenance module checks the busy-tone in STEP 89. If the busy-tone is detected in STEP 90, then the program jumps to STEP 93 for an indication that all is operating correctly. However, if the busy-tone is not detected, the program proceeds to STEP 91, where the timer is checked. If the timer is less than 18.2 seconds, then the program loops back to STEP 86. This allows more time to the cellular, or cellular-like, network to return the busy-response. However, if the time has expired, the program proceeds to STEP 92, where the MAIN1_FLAG_ERROR is set to 3. In STEP 93, the interface board sends an END of call to the transceiver. Then, the telemaintenance module presents an on-hook to the interface board in STEP 94. Finally, the subroutine ends and the program returns to the main subroutine Do_Test.

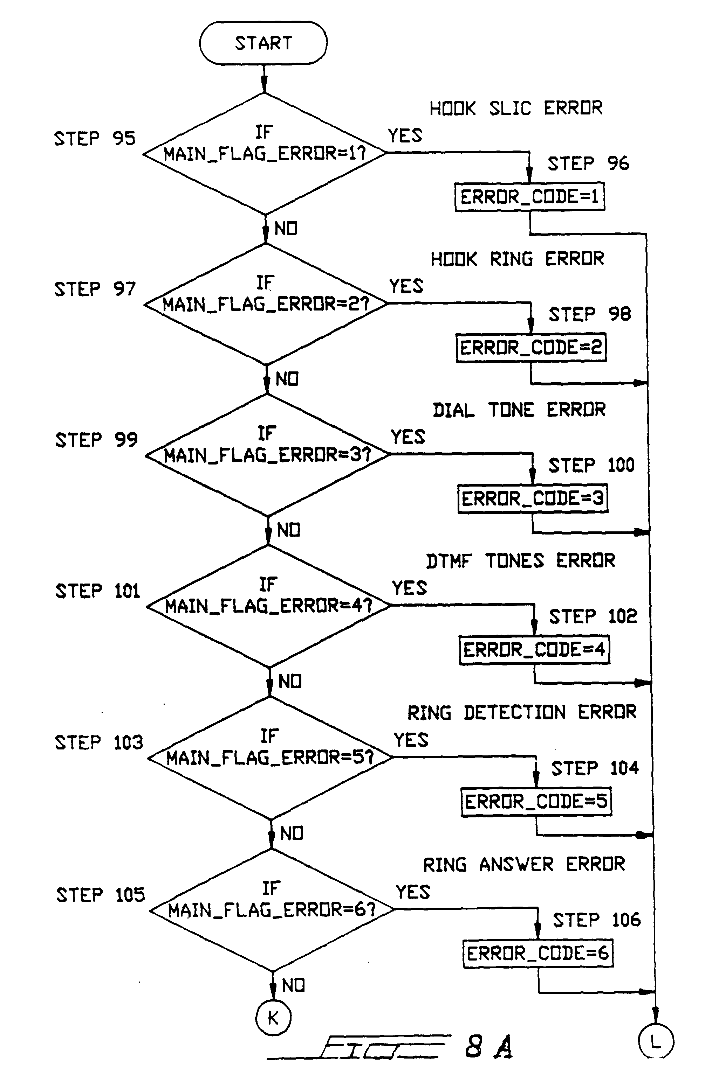

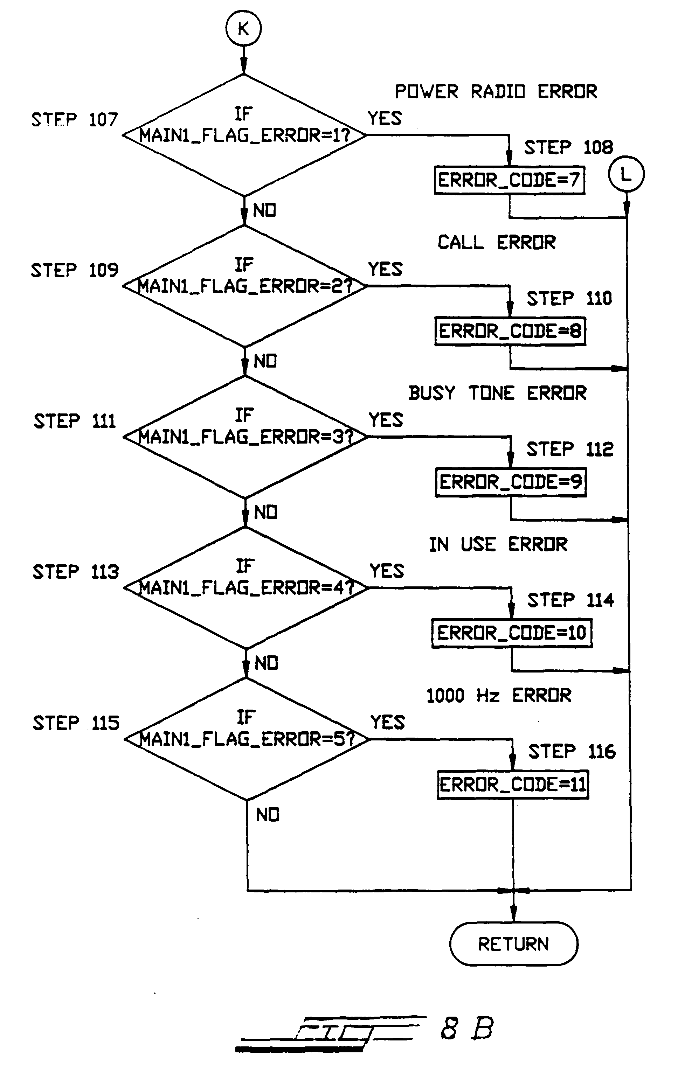

The objective of FIG. 8A and FIG. 8B is to generate a an ERROR_CODE from the previously-described error flags, in such a way that the results can be output later through LEDs. Referring to FIG. 8A, the subroutine starts checking the value of one of two error flags, the MAIN_FLAG_ERROR. STEP 95 checks if MAIN FLAG ERROR is equal 1 or Hook Slic Error. If true, the ERROR_CODE is set to 1 in STEP 96, and then the program returns to the main subroutine Do_Test. However, if false, the program continues in STEP 97. STEP 97 checks if MAIN_FLAG_ERROR is equal 2 or hook-ring error. If true, the ERROR_CODE is set to 2 in STEP 98, and then the program returns to the main subroutine Do_Test. However, if false, the program continues in STEP 99. STEP 99 checks if MAIN_FLAG_ERROR is equal 3 or dial-tone error. If true, the ERROR_CODE is set to 3 in STEP 100, and then the program returns to the main subroutine Do_Test. However, if false, the program continues in STEP 101. STEP 101 checks if MAIN_FLAG_ERROR is equal 4 or DTMF tone error. If true, the ERROR_CODE is set to 4 in Step 102, and then the program returns to the main subroutine Do_Test. However, if false, the program continues in STEP 103. STEP 103 checks if MAIN_FLAG_ERROR is equal 5 or ring-detection error. If true, the ERROR_CODE is set to 5 in STEP 104, and then the program returns to the main subroutine Do_Test. However, if false, the program continues in STEP 105. STEP 105 checks if MAIN_FLAG_ERROR is equal 6 or ring-answer error. If true, the ERROR_CODE is set to 6 in STEP 106, and then the program returns to the main subroutine Do_Test. However, if false, the program jumps to STEP 107 in FIG. 8B. In FIG 8.B, the subroutine starts checking the value of the second error flag, the MAIN1_FLAG_ERROR. STEP 107 checks if MAIN1_FLAG_ERROR is equal 1 or power-radio error. If true, the ERROR_CODE is set to 7 in STEP 108, and then the program returns to the main subroutine Do_Test. However, if false, the program continues in STEP 109. STEP 109 checks if MAIN1_FLAG_ERROR is equal 2 or call error. If true, the ERROR_CODE is set to 8 in STEP 110, and then the program returns to the main subroutine Do_Test. However, if false, the program continues in STEP 111. STEP 111 checks if MAIN1_FLAG_ERROR is equal 3 or busy-tone error. If true, the ERROR_CODE is set to 9 in STEP 112, and then the program returns to the main subroutine Do_Test. However, if false, the program continues in STEP 113. STEP 113 checks if MAIN1_FLAG_ERROR is equal 4 or "In Use" error. If true, the ERROR_CODE is set to 10 in Step 114, and then the program returns to the main subroutine Do-Test. However, if false, the program continues in STEP 115. STEP 115 checks if MAIN1_FLAG_ERROR is equal 5 or 1000 Hz. error. If true, the ERROR_CODE is set to 11 to STEP 116 Do_Test. However, if false, the program returns to the main subroutine Do_Test.

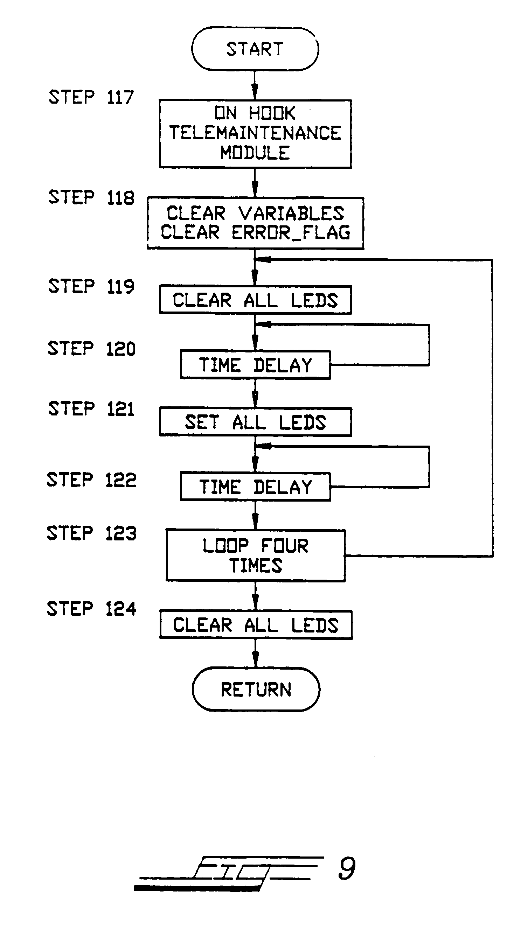

Referring FIG. 9, FIN_SELF subroutine, the objective of this subroutine is to reset the interface board to its normal functioning, and to show the end of the test by flashing the LEDs four times. The subroutine starts with STEP 117, where the telemaintenance module generates an on-hook. In STEP 118, all variables and error flags are cleared. STEP 119 turns off all LEDs. STEP 120 is a time delay. STEP 121 turns on all LED's. STEP 122 is a time delay. STEP 123 permits to loop back to STEP 119, so that the flashing is performed four times. Finally, STEP 124 clears all LEDs, and then the program returns to the main subroutine Do_Test of FIGS. 1A & 1B.

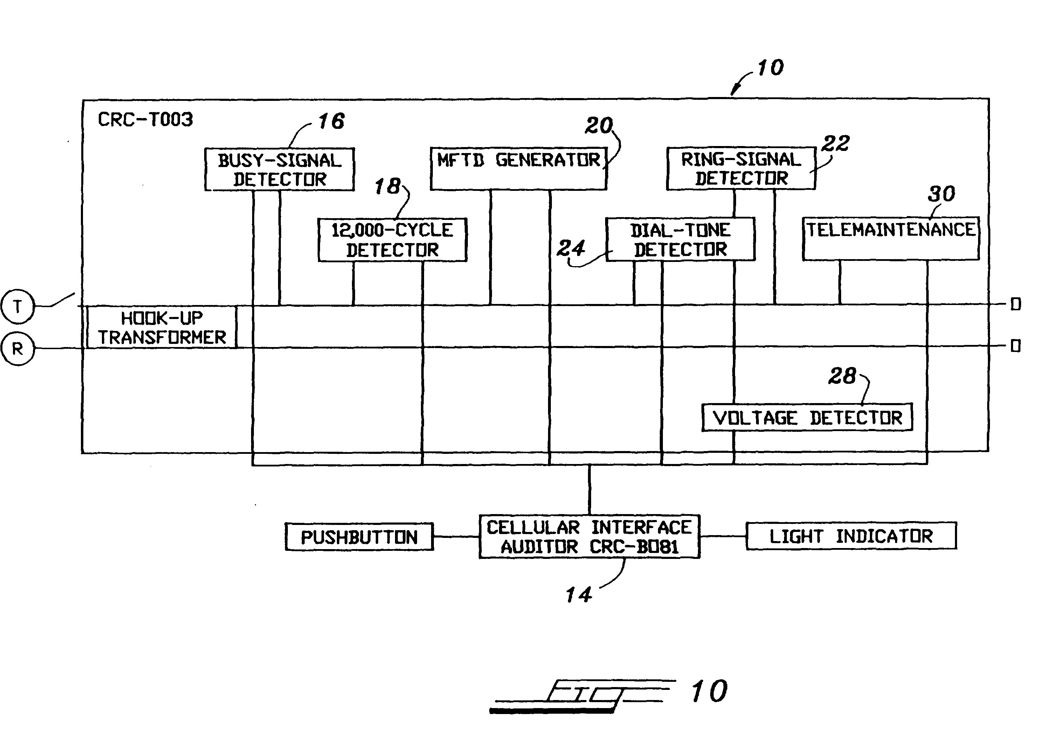

The following is a description of the operation of the of the system, with reference being had to Fig. 10, which is followed by the description of the individual circuits used for carrying out the above-described auto-test, which is followed by the software program for carrying out the operations detailed therein.

Referring to FIG. 10, there is shown a block diagram of the telemaintenance circuit module, which is indicated generally by reference numeral 10. The telemaintenance circuit module 10 is installed in a cellular, or cellular-like, adaptor system such as that disclosed in U.S. Patent Nos. 4,658,096 and 4,737,975, and is designed to initiate a process of automatic testing from the facilities of the telephone subscriber by push-button activation or by automatic testing at intervals of approximately 12 hours, according to the flow charts of Figs. 1A - 9, as described above in detail. The final result of this autotest will be provided to the user by way of an orange-colored light indicator (LED) installed in the right wall of the cellular, or cellular-like, adaptor. The telemaintenance circuit module 10 has the capacity of reporting the results of the test to a remote service center. This report will be accomplished by way of an automatic call to the assigned number for the service center. This function requires that the service center be equipped with the hardware and software necessary to establish communication, and to interpret the received reports. The autodiagnostic test verifies the correct operation of the cellular, or cellular-like, adaptor, including its components, such as: principal circuits of the interface card, data cable between the radio and interface, transmission line, antenna, cellular, or cellular-like, transceiver, tollcharge circuit and supply source. The telemaintenance circuit has been configured in order to call the same number assigned to the adaptor transceiver where the test is carried out. The autodiagnostic circuit is programmed to detect a busy or line-congestion signal as an indication that a call can be made, and that the transmission circuit is operating correctly.

The telemaintenance circuit module 10 is designed to be utilized in the cellular, or cellular-like, adaptor unit in order to verify that the latter is operating correctly without necessitating sending technical personnel to the site where the equipment is installed. The telemaintenance circuit module 10 is supplied directly from the cellular, or cellular-like, interface board. The advanced telemaintenance circuit is not an autonomous circuit. Its operation depends on control signals that it receives from the auditor localized in the cellular, or cellular-like, interface board. The auditor compares the results of the tests with the parameters of the system's operating program. The auto-diagnostic circuit of the telemaintenance circuit module 10 conducts the following tests: Answering errors [wrong number] - This test is conducted by two alternate methods; ring voltage - the circuit generates a call and detects the presence of ring voltage that the interface card produces; Call answer - verifies that the ring stops once it is answered; Dial tone - verifies the presence of the dial tone; MFTD Operation - assures that the interface card properly detects the receipt of the MFTD [multifrequency tone detector] tones; transceiver test; reception circuit test; transmission circuit test; tollcharge circuit test - verifies the frequency characteristic of the pulses generated at 12 KHz; transceiver power supply; performance of the power supply system. These tests have been detailed above in the description of the flow charts of FIGS. 1A to 9.

The telemaintenance circuit module 10 is connected to the conventional, cellular, or cellular-like, interface card by a 20-position plug connector. The test routine is initiated by way of a manual switch installed on the right side of the adaptor box. Upon finding an abnormality in the operation of the telephone, as, for example, not hearing the dial tone upon picking up the receiver, the subscriber proceeds to the adaptor box and presses a test pushbutton, which is properly identified. The telemaintenance circuit module 10 proceeds to disconnect the connection of the subscriber's telephone to the cellular, or cellular-like, interface board, and to accomplish a sequence of autodiagnostic tests, as described above. The telemaintenance circuit module 10 is also programmed to initiate the test routine automatically at intervals of approximately 12 hours from the moment the cellular, or cellular-like, interface board is turned on. When the test is automatically initiated, the sequence of the outgoing test call is not generated. By means of further development, the autodiagnostic test start-up function can be initiated from a remote center. This telemaintenance function carries a modification to the operating software of the interface board, and has an auxiliary development for the hardware and software of the telemaintenance center. Upon initiating the autotest routine, the orange-colored light indicator (LED) will flash to indicate to the subscriber that the test is taking place. There are pauses in the indicate flash of approximately one second between each of the tests accomplished by the circuit. The complete test will last approximately 40 seconds. Upon finishing the test, the success of the test is shown by the light indicator remaining on. In this case, the existing problem would be related to the wiring or to the telephone apparatus connected to the cellular, or cellular-like, interface board. Once the light indicator stays lit continuously, the cellular, or cellular-like, interface board returns to its normal operating condition. When a breakdown of the cellular, or cellular-like, interface board is determined from the tests, the light indicator will be extinguished indefinitely. This indicates to the user that a breakdown exists in the cellular, or cellular-like, adaptor. Once the test routine is finished, the cellular, or cellular-like, interface board returns to its normal operating condition irrespective of what breakdown was detected. The user may continue using the adaptor even with the existing limitations due to the detected breakdown.

The 4-light indicator (LEDs) in the circuit of the cellular, or cellular-like, interface board will be utilized to identify the detected breakdown. This presentation is of help to the service technician who can gain access to the inside of the box in order to ascertain the nature of a possible breakdown. The combination of "on" and "off" LED's will identify the primary detected breakdown in the test. This combination will remain lit for 60 seconds once the test ends. A list of the possible breakdown codes indicated by the LED's of the cellular, or cellular-like, interface board is given below.

On concluding the autotest, a call will be initiated to the telemaintenance center if a breakdown has been detected. Once the communication is established, the detected breakdown will be reported. This telemaintenance function will allow the establishment of a database for each unit. If the test was manually initiated by way of the pushbutton, the complete result of the finished test, irrespective of whether breakdowns were detected, will be reported to the telemaintenance center.

The following is a listing of the codes as displayed by the LED array:

### 4.10 ERROR CODE

| Type of Error | LED 5 | LED 4 | LED 3 | LED 2 |
|---|---|---|---|---|
| No Breakdowns | OFF | OFF | OFF | OFF |
| Loop Error | OFF | OFF | OFF | ON |
| Loop Error | OFF | OFF | ON | OFF |
| Dial Tone | OFF | OFF | ON | ON |
| MFTD Detector | OFF | ON | OFF | OFF |
| Ring Detector | OFF | ON | OFF | ON |
| Call Answer | OFF | ON | ON | OFF |
| Transceiver Feed | OFF | ON | ON | ON |
| Transmitter (Call) | ON | OFF | OFF | OFF |
| Receiver (Busy) | ON | OFF | OFF | ON |
| Tone Detection at 12 KHz | ON | OFF | ON | ON |
| Feed from Power Source | ON | OFF | ON | OFF |
| "NO SERVICE" | ON | ON | ON | ON |
| Transmission Circuit | ON | ON | ON | OFF |
| Undetermined | ON | ON | OFF | ON |
| Undetermined | ON | ON | OFF | OFF |

The sequence of the autotest is as follows. The first action accomplished by the telemaintenance circuit is disconnecting the installation of the subscriber. Then, a condition of "answer the subscriber's telephone" is simulated. In this condition, the correct detection of the loop closing can be checked, thus generating the dial tone. Then, the correct generation of the dial tone can be verified within a minimum frequency and level range. Next, a test of the multi-frequency tone detector of MFTD begins. This consists of the telemaintenance circuit module's autodiagnostic card generating the entire sequence of 16 MFTD tones, sending it to the conventional, cellular, or cellular-like, interface board of the cellular, or cellular-like, adapter, and verifying that these tones are correctly detected. Then, a test is carried out for verifying the correct functioning of the ring generator. The ring-current is generated, verifying its frequency and level within an established minimum range. Then, the condition of answering the telephone is simulated anew, or call answer, in order to check the function of the ring circuit, which should deactivate before the telephone is answered. The next test detects the capacity of the tollcharge circuit to generate pulses at 12 KHz within a minimum frequency and level range, for the case of cellular, or cellular-like, -adapter pay telephones. The pulses generated by the tollcharge card will be detected by a precise pulse detector in the telemaintenance circuit module 10 in a manner that is well-known. For cellular, or cellular-like, adapter systems that do not have a tollcharge module, then the connector J1.3 of the cellular, or cellular-like, interface card is configured with the bridge removed. The bridge will be installed in those units that have the tollcharge module installed.

The next tests verify the functioning of the cellular, or cellular-like, transceiver. First, supply to the transceiver is verified. This test is made by means of the detection of +12 VDC derived from the data connector of the transceiver. Secondly, the transceiver is verified that it is in a condition of providing cellular, or cellular-like, access-service, indicated by the absence of the "NO SERVICE" signal. The presence of the "NO SERVICE" signal will be recognized as a breakdown. This condition can be caused by a cover defect, and not just a breakdown of the cellular, or cellular-like, transceiver. Next, a call is generated through the cellular, or cellular-like, network, to the number owned by the subscriber. The transceiver function is checked in this manner, detecting it as receiving a busy signal from the system, since, it is calling itself. In the case of finding the network congested, this will inform the transceiver of a "PATH ENGAGED" condition. The transceiver then generates a congestion (busy) tone. This tone is interpreted as a correct transceiver function, the same as the busy signal. This test will be accomplished only when the routine is manually initiated by pushbutton. This test will not be accomplished in units that initiate the process automatically. The voltage of the supply system power is also checked. If the voltage is less than 13.5 VDC, a breakdown in the supply source is detected.

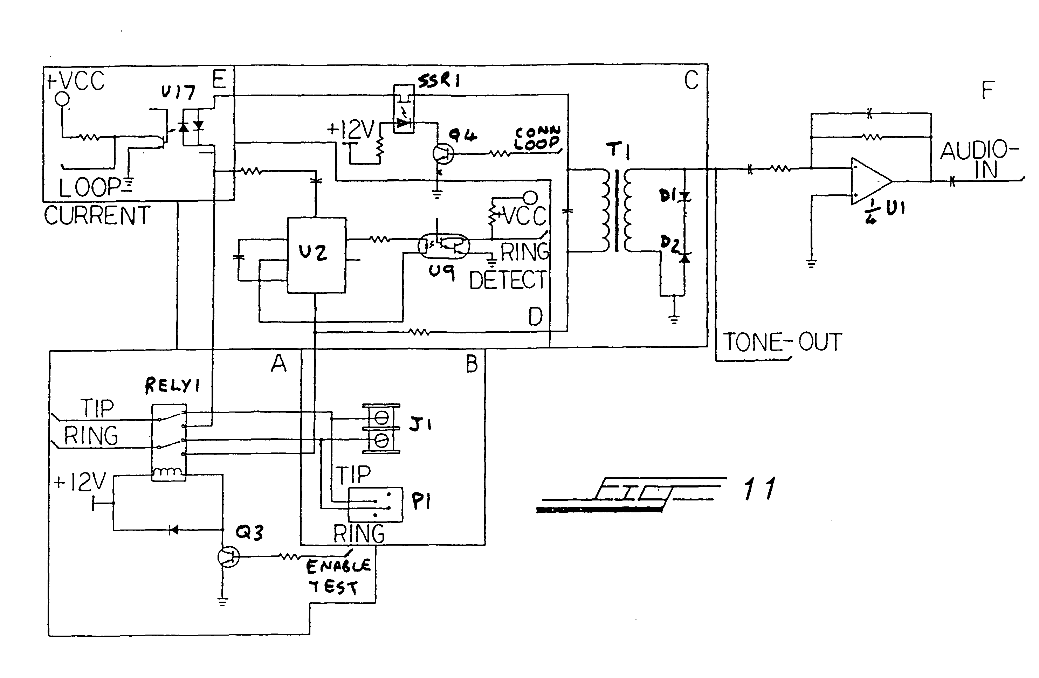

In Fig. 10, the main telemaintenance module 10 is coupled to the standard cellular, or cellular-like, adapter or interface board 14. Within the telemaintenance module, there are a number of individual circuits that are used for performing the self-diagnosing tests, as described above. These circuits are: The busy-signal detector 16 used during the test for proper reception of a call made by the telemaintenance module during the call-back self-testing described above with reference to Fig. 7A; the 12,000-cycle detector circuit 18 used for tollcharge testing, which verifies the frequency characteristic of the pulses generated at 12 KHz; the MFTD generator circuit 20, which generates the DTMF signals converted by the cellular, or cellular-like, interface card, as described above with reference to Fig. 4; the ring-signal detector circuit 22, which is used for detecting the ring-signal generated by the cellular, or cellular-like, adapter interface board during the ring-test and ring-answer subroutines, described above with reference to Figs. 5A through 6; the dial-tone detector circuit 24, which detects for the proper generation of dial tone by the cellular, or cellular-like, adapter interface board 14, as described above with reference to Fig. 3; the voltage-detector circuit 28 for testing the power supply of the transceiver and the entire system; and the telemaintenance control unit 30, which is the control unit and which is also used for calling and reporting to the central reporting station the results of the autotest. The actual configuration of each of the above-noted circuits is shown in Figs. 11-14, which are described below in detail.

Referring now to the FIGS. 11-14, there are shown the hardware circuits for performing the simulation tests described above during the entire self-testing process. Referring to Fig. 11, there is shown the interconnection circuit of the telemaintenance circuit module 10. The part of the schematic of Fig. 11 labeled "A" shows the location where the telemaintenance circuit is hooked into the lines of TIP & RING of the conventional cellular, or cellular-like, adapter interface board. The relay labeled "RELY1" is used to disconnect the user's telephone from the cellular, or cellular-like, interface during the maintenance operation test. Instead thereof, the telemaintenance circuit is hooked up to the TIP & RING in order to perform the tests. When the "ENABLE-TEST" signal is set to HI, the transistor Q3 is forced into saturation, and then energizes RELY1, connecting the maintenance circuit to the TIP and RING. The part of the schematic of Fig. 11 labeled "B" shows the user-telephone hook-up connector, where the user's telephone can be hooked to the board in two possible ways. J1 is a two terminal connector and P1 is a normal RJ11 telephone type socket.

The section of the schematic of Fig. 11 labeled "C" is the audio interface circuit, which is used as an interface between the TIP and RING lines and the Audio. T1 is a telephone matching transformer. Its function is to maintain similar AC and DC current characteristics of a telephone while allowing audio signals to be received and transmitted. Zener diode D1 & D2 are used to cut up any signal with voltages higher than +/-4.5V. Also included is an opto-isolator SSR1 that, in conjunction with transistor Q4, offers a mechanism to close the TIP & RING circuit. When the "Conn-Loop" signal is set to HI, the transistor Q4 is forced into saturation, which then energizes SSR1, closing the circuit and performing an off-hook.

The section of the schematic of Fig. 11 labeled "D" is the ring-detection circuit, which contains two main parts: U2, which is a ring-detector integrated circuit, and U9 which is an opto-isolator that provides a proper Cmos signal level output. A current is provide between pin 4 and pin 7 of U2 as an output signal when a ring-voltage is present at the TIP & RING lines. This current is then transformed by the opto-isolator U9, which then provides an active Low signal to the J/O.

The section of the schematic of Fig. 11 labeled "E" shows the loop-current detector, which contains an opto-isolator used to detected loop current. When the test is enabled (the "Enable-Test" signal is HI in part A) and an off-hook is performed, (the "Conn-Loop" signal is HI in part C), the TIP & RING lines go into close-circuit providing an off-hook current. This current is then transformed by U17 into an active Low signal to the I/O.

The section of the schematic of Fig. 11 labeled "F" is the input-output audio circuitry composed of 1/4 of U1, an operational amplifier IC. The main function of this circuitry is to isolate and pre-amplify the incoming audio signals. The output of this circuit is called "Audio-In". Also, in this section the DTMF output generated by the telemaintenance circuit is sent to the TIP & RING lines. This DTMF signal is labeled as "Tone-Out".

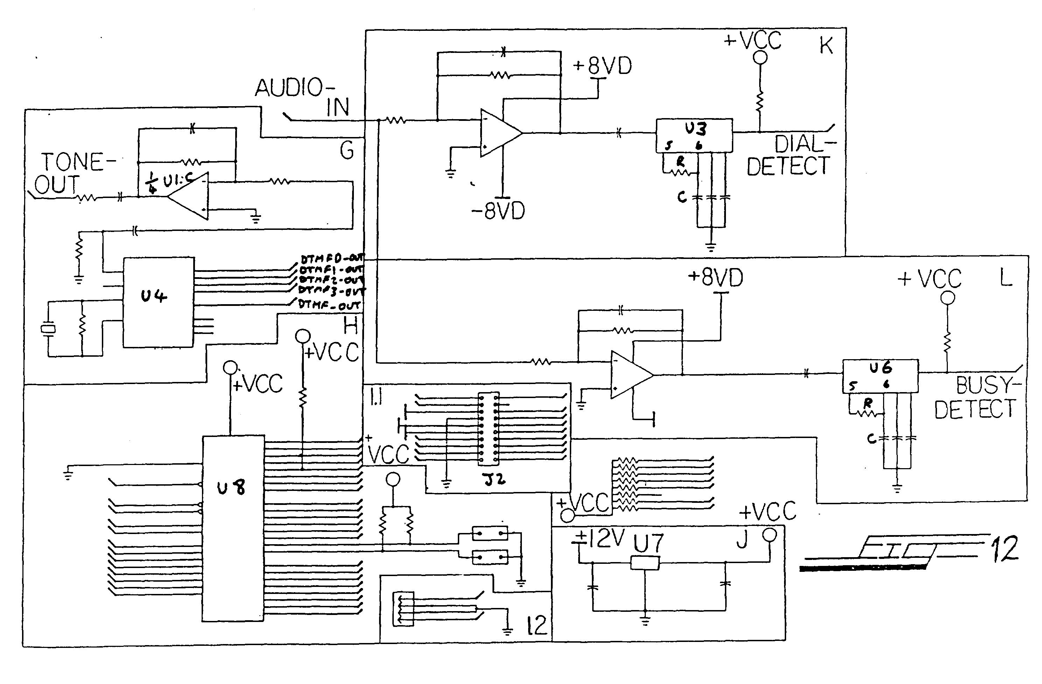

Referring now to Fig. 12, the part of the schematic of Fig. 12 labeled "G" is the DTMF tone generator, which is composed of U4, a DTMF tone generator, and 1/4 of U1 used as an output amplifier. To generate a DTMF tone, first a four bit code is presented to the input pins labeled "DTMFO-OUT", "DTMF1-OUT", "DTMF2-OUT" and "DTMF3-OUT" in U4. Then, while keeping the four bit code, the enable signal labeled "DTMF-OUT" is changed from Low to HI level, thus allowing the tone to be generated. The audio is output at "TONE-OUT" after the audio had been amplified by U1:C. To stop the tone, the "DTMF-OUT" signal is returned to low level.

The section of the schematic of Fig. 12 labeled "H" is the input/output port, the I/O Port IC labeled U8. This integrated circuit is used by the microcontroller of the cellular, or cellular-like, interface board to read the input data and to control all of the output of the telemaintenance module. Ports A and C are input ports, while port B is an output port. Jumper J4 is the selector for the automatic periodic test with possible selections of 12 or 24 hours. J5 is used as an enable for the call to the "automatic answer".

The sections of the schematic of Fig. 12 labeled "I.1" and "I:2" are the power, data and control connectors, and contain J2, a 2 by 10 male header connector used to bring power, as well to send and receive data to the I/O Port. It also includes a 4 pin header connector for the external LED used to show the status of the test, and an external push button used to manually activate the test. The section of the schematic of Fig. 12 labeled "J" is the power regulator, and has U7, a 5 Volt fix-positive regulator that supplies the voltage necessary for the digital circuits.

The telemaintenance module 10 contains six single tone detectors used for testing the receiving audio path, frequency and timing cadence of ROH, Dial, Busy and Congestion tones. Each of the tone detectors is composed of an operational amplifier and a single tone detector IC. The input of the Opamp is connected to line "AUDIO-IN". The frequency of detection is set by a resistor located between pin 5 and 6 and a capacitor located between pin 6 and ground. When a valid tone matches the programmed tone by the RC, the tone detector output pin is forced from HI to Low.

Section "K" of Fig. 12 shows the dial-tone detector circuit. When a valid dial tone is present at the input of U3, the "DIAL-DETECT" line is forced to go Low. Section "L" shows the busy-tone detector circuit. When a valid busy tone is present at the input of U6, the "BUSY-DETECT" line is forced to go Low.

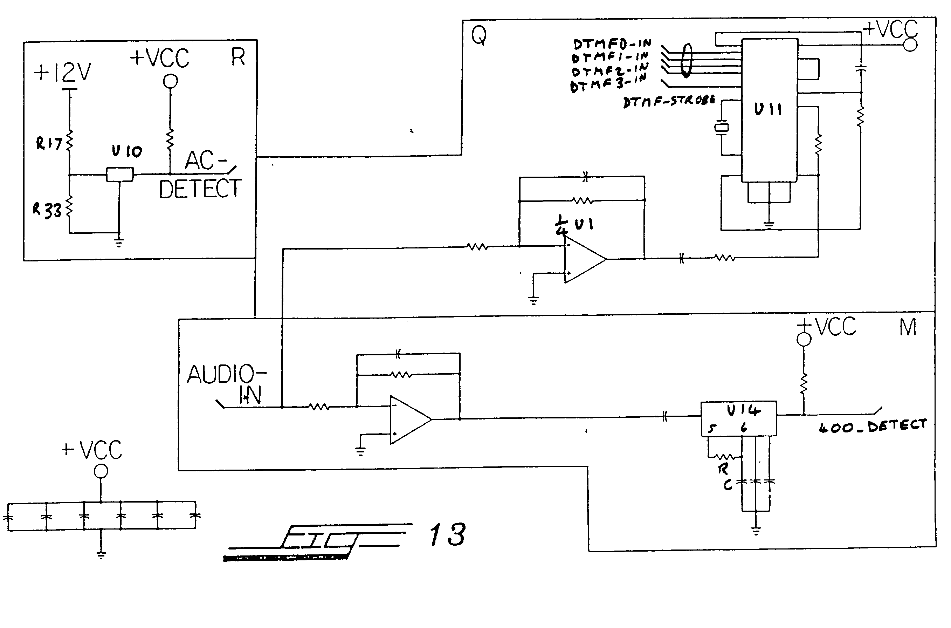

Section "M" of FIG. 13 shows a 400 Hz. tone-detector circuit. When a valid 400 Hz. tone is present at the input of U14, the "400-DETECT" line is forced to go Low.

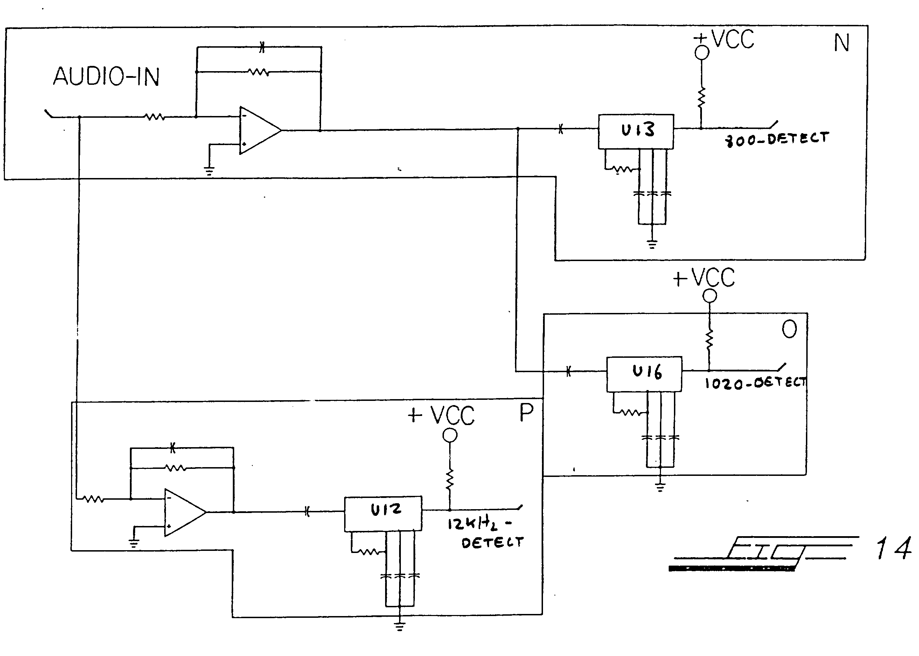

Section "N" of FIG. 14 shows a 800 Hz. tone-detector circuit. When a valid 800 Hz. tone is present at the input of U13, the "800-DETECT" line is forced Low. Section "O" shows a 1020 Hz. tone-detector circuit. When a valid 1020 Hz. tone is present at the input of U16, the "1020-DETECT" line is forced Low. Section "P" shows a 12 KHz. tone-detector circuit. When a valid 12 KHz. tone is present at the input of U12, the "12KHz-DETECT" line is forced Low.

Section "Q" of FIG. 13 shows a DTMF tone decoder, which is composed of U11, a DTMF tone detector and 1/4 of U1 used as an input pre-amplifier. When a valid DTMF tone is present at the input pin (IN-), the control line "DTMF-STROBE" is forced Low, while the IC is decoding. After the tone has been decoded, a four bit code is output to pins labeled "DTMF0-IN", "DTMF1-IN", "DTMF2-IN" and "DTMF3-IN" in U11. The control line "DTMF-STROBE" is then returned to HI again. Section R is an AC monitor, having U10, a 4.5V under-voltage detector. Resistors R17 and R33 form a voltage divider that will make U10 sense voltage under 13 volts instead of 4.5 volts. The circuit works on the assumption that when the supply voltage comes from the power supply, a 14V is present at the entrance of the telemaintenance module. On the event of an AC power failure, the voltage drops to the battery back-up level, which is not greater than 13 volts. The circuit will detect the drop, and U10 will drive line labeled "AC-DETECT" to Low.

The following is a listing of the source code for performing the functions described above.

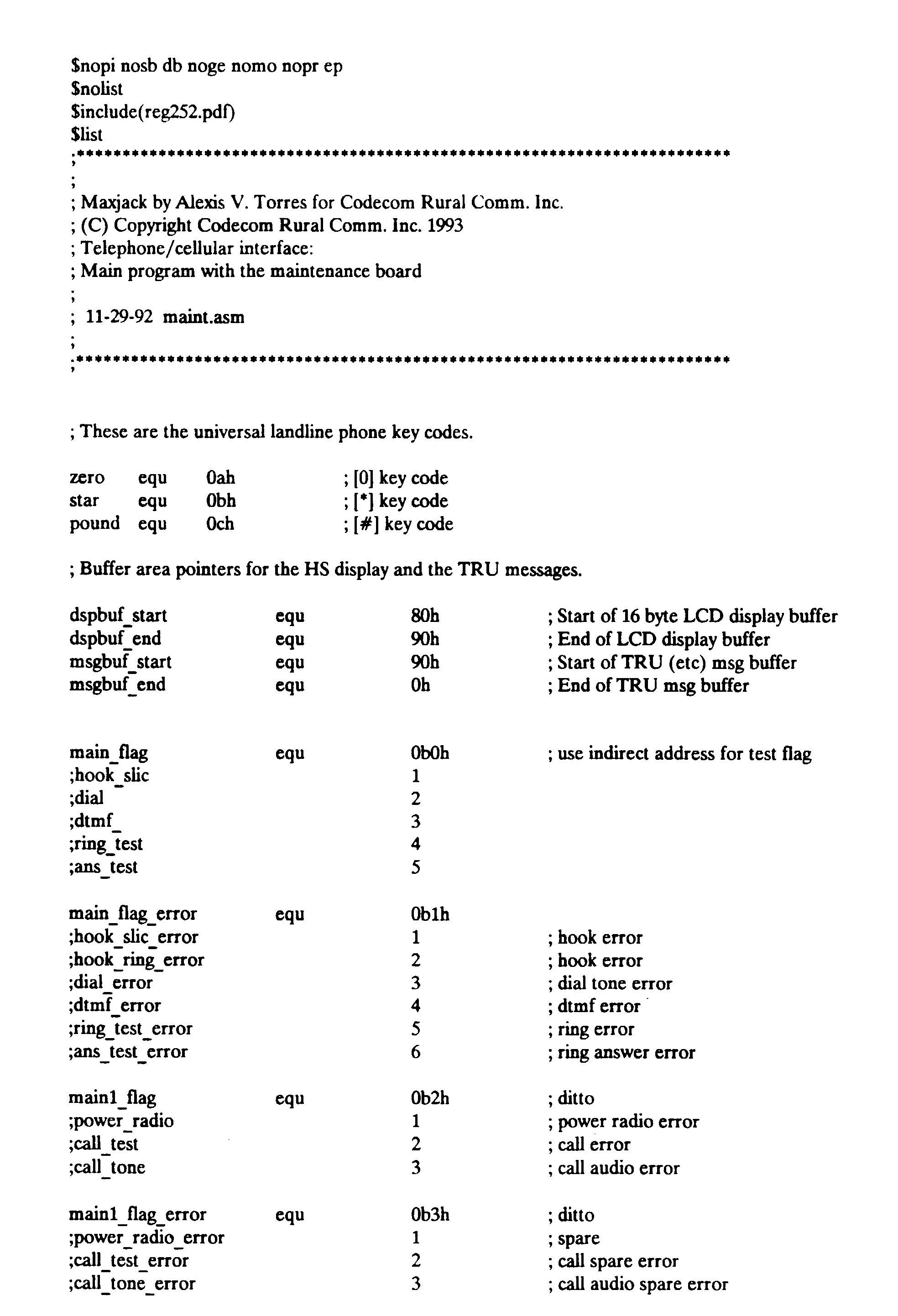

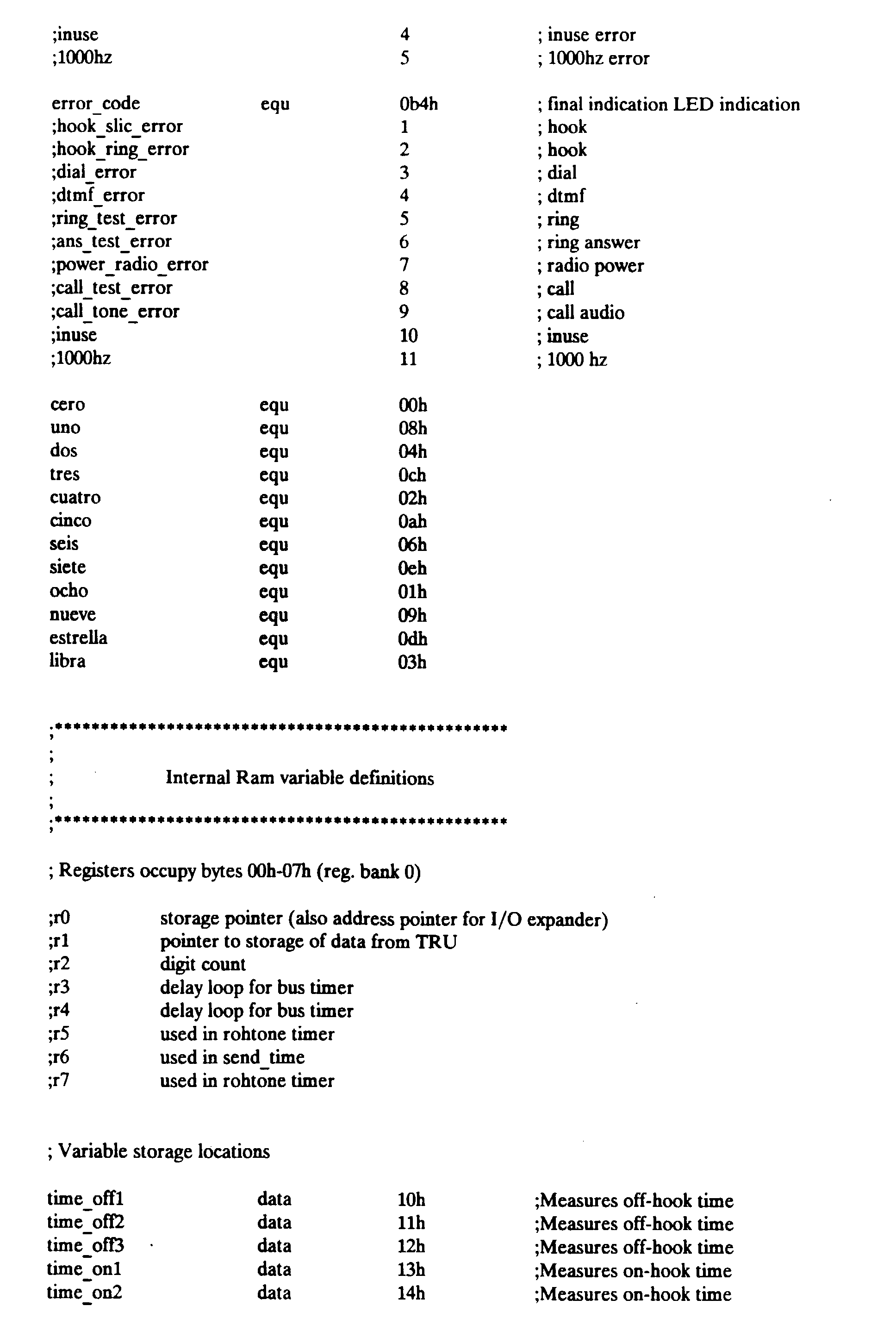

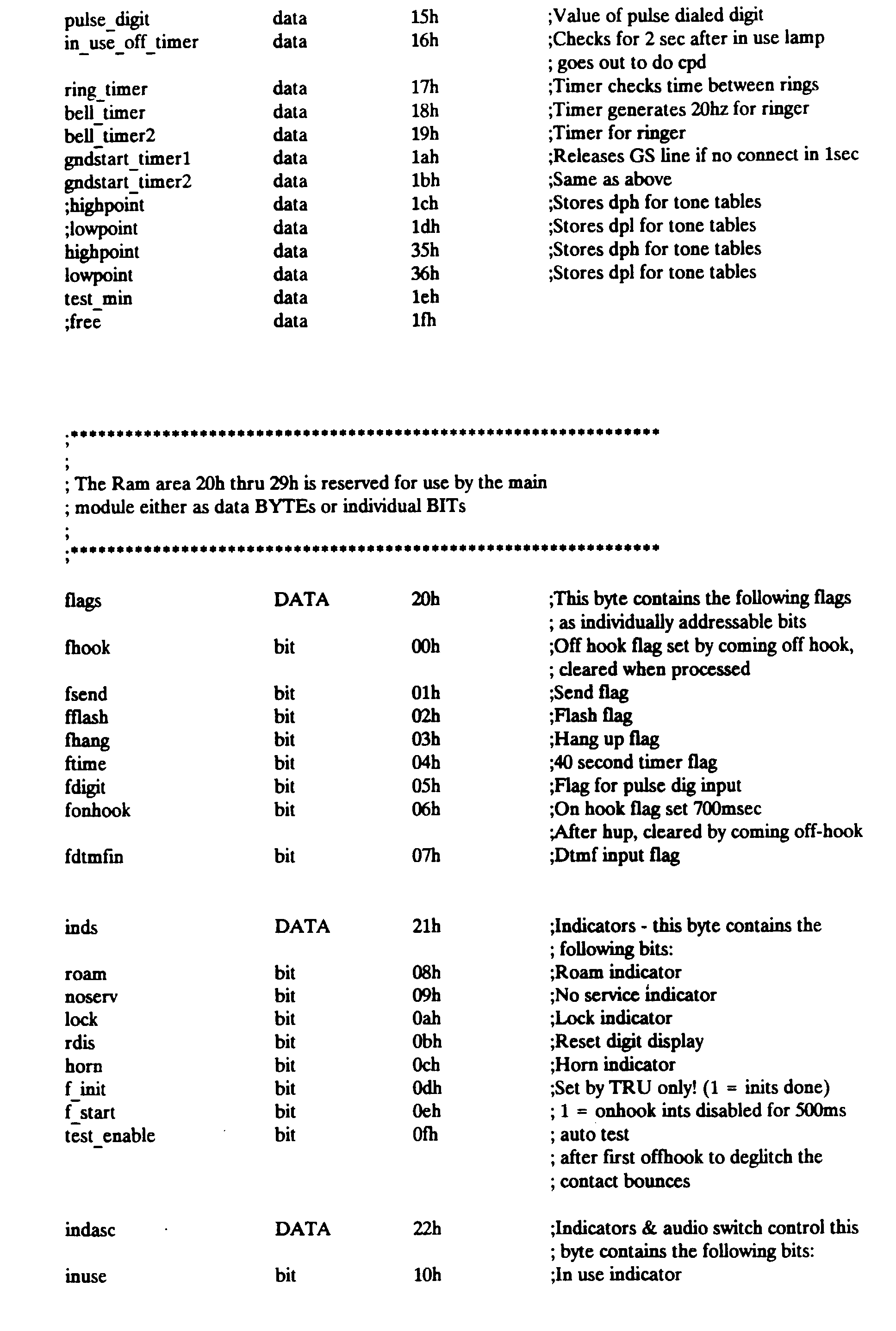

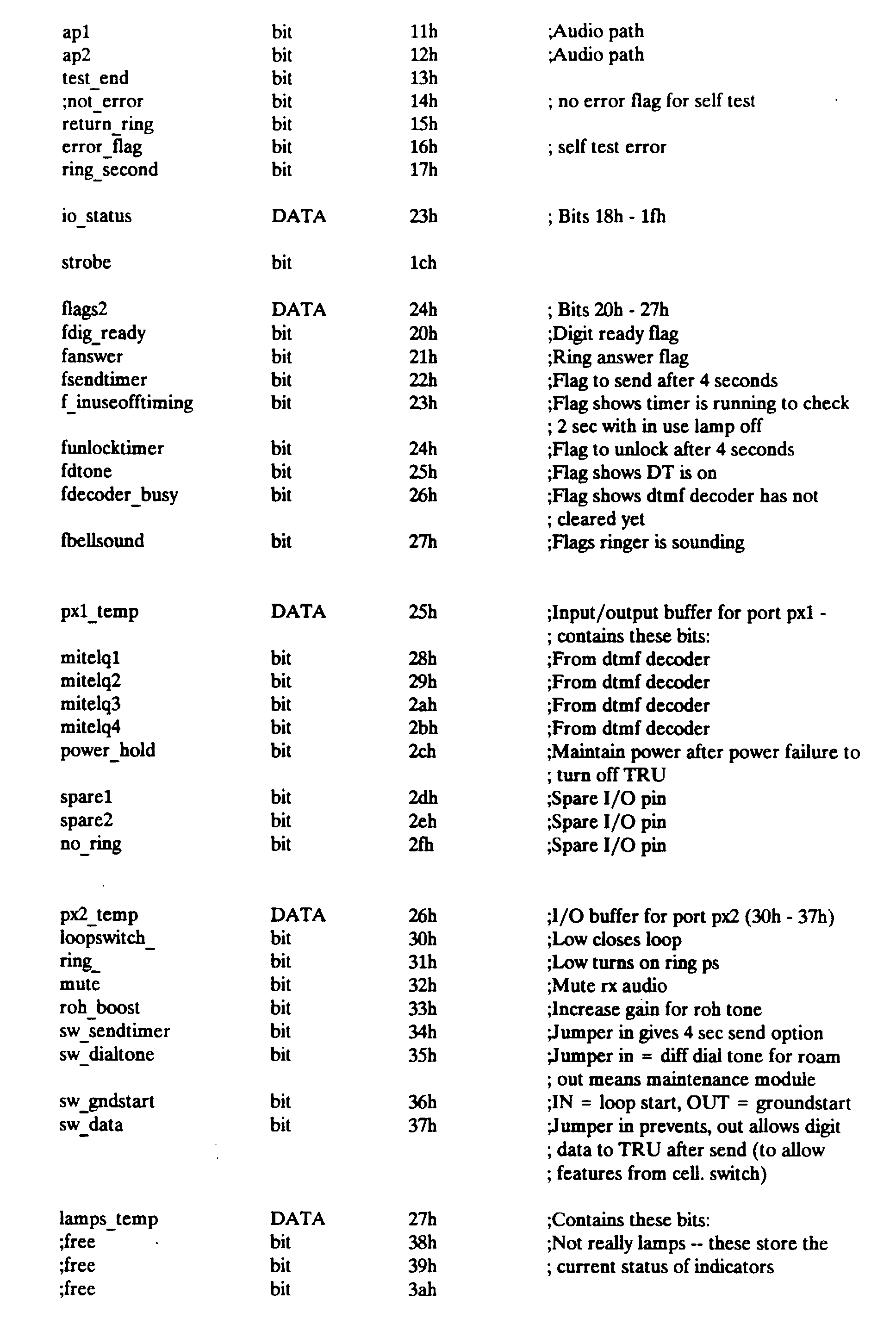

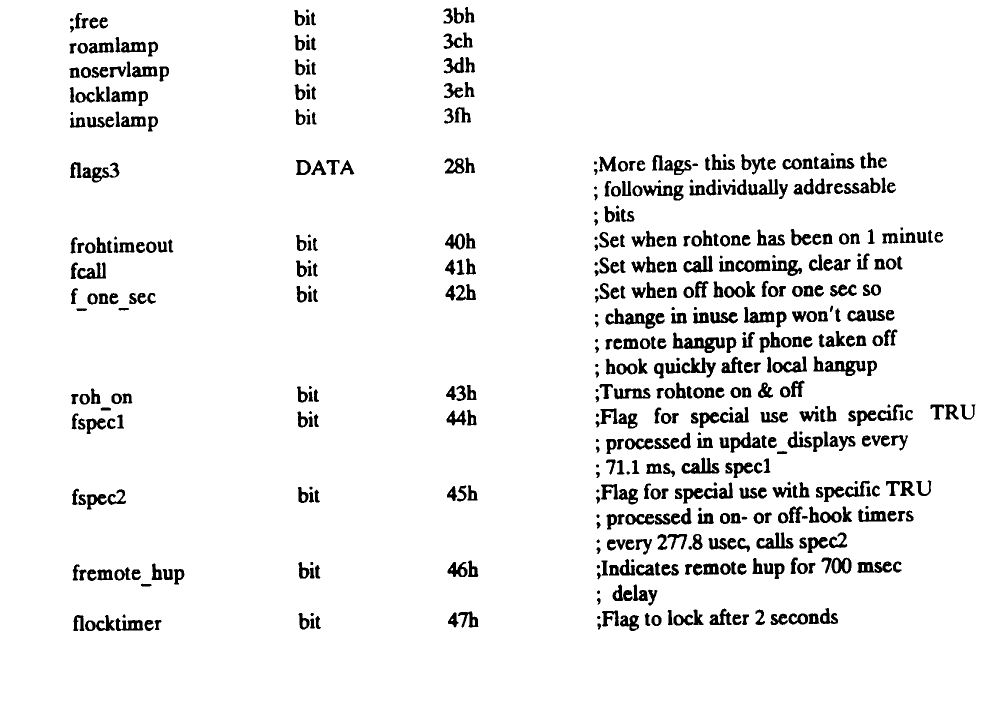

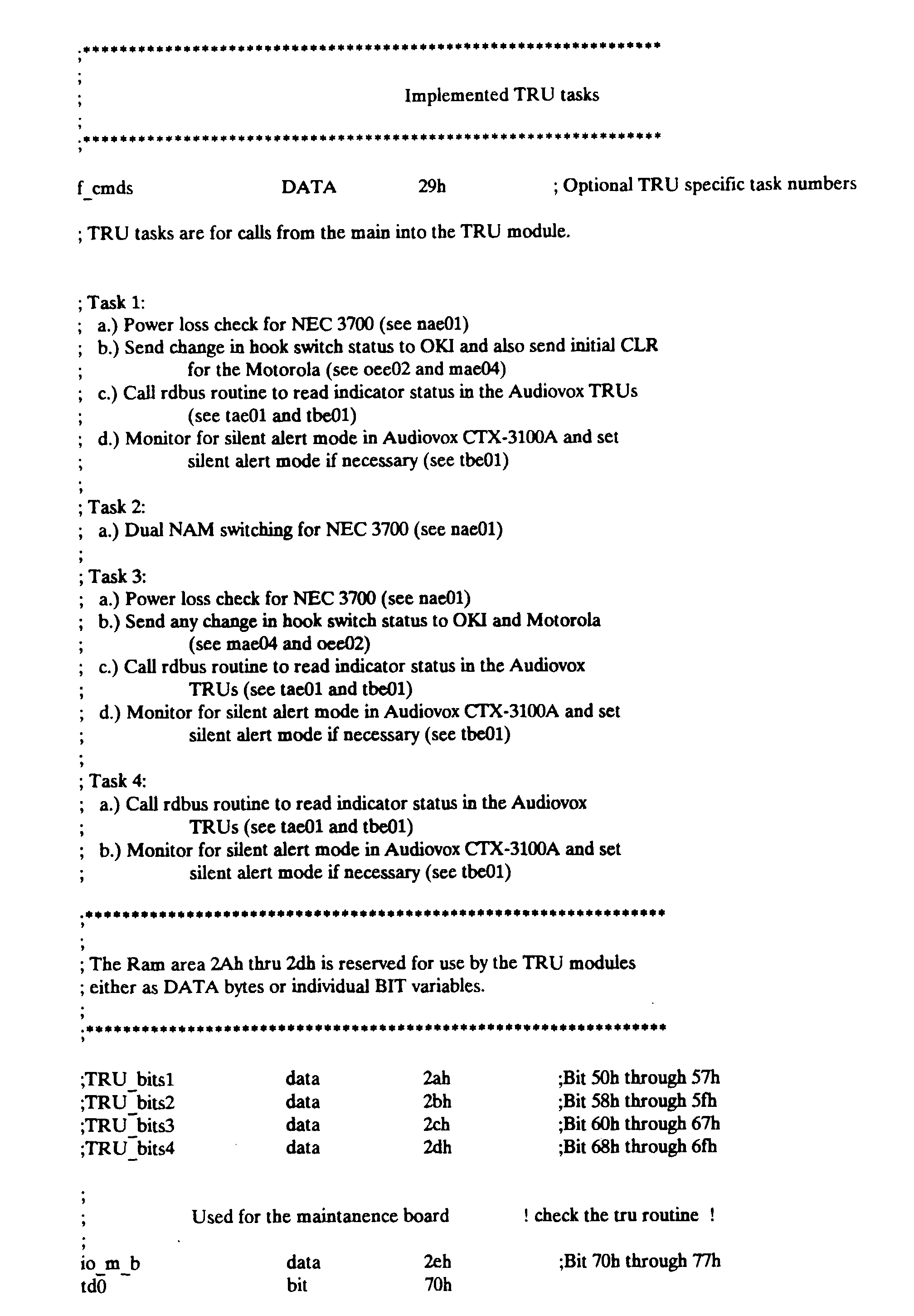

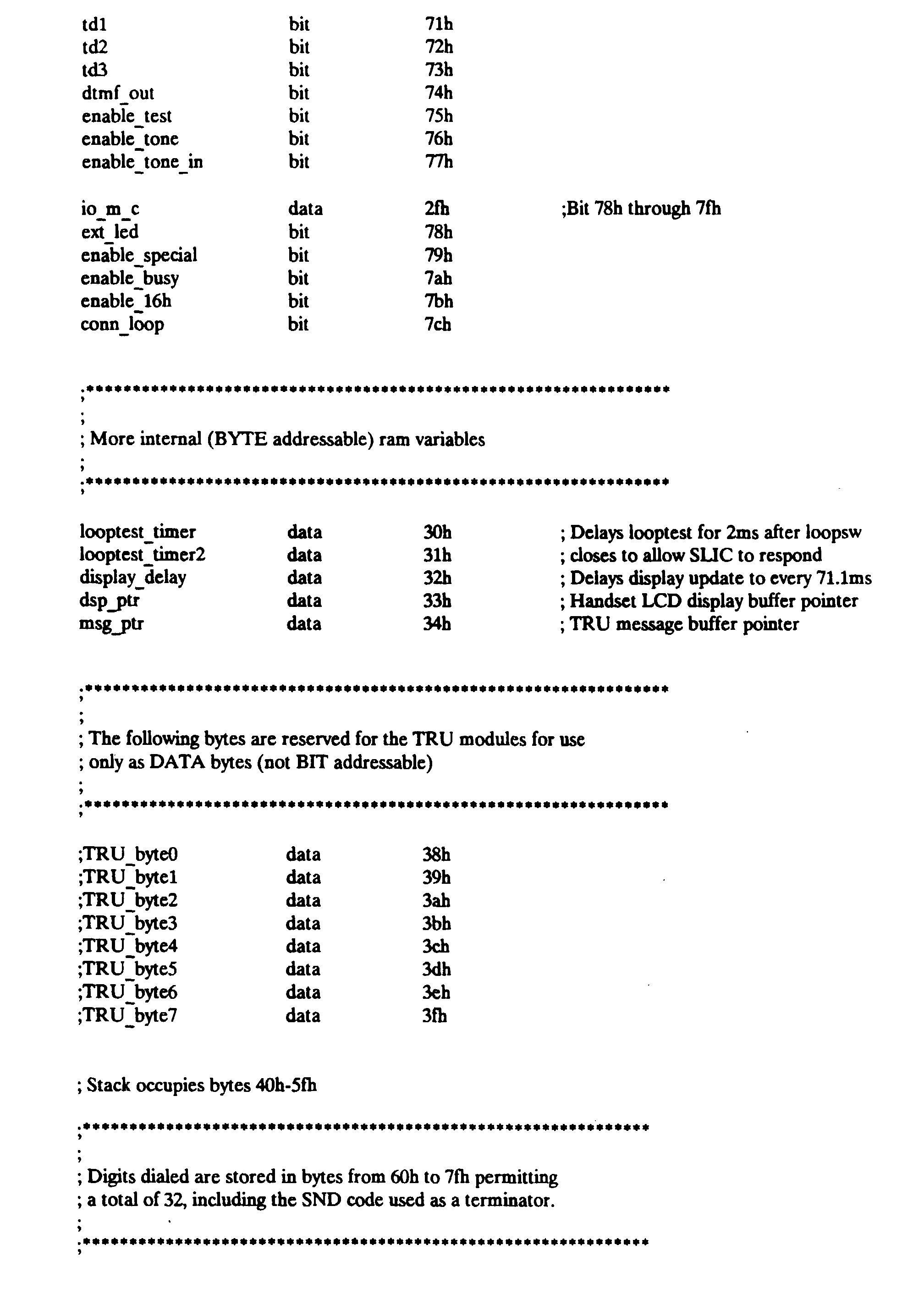

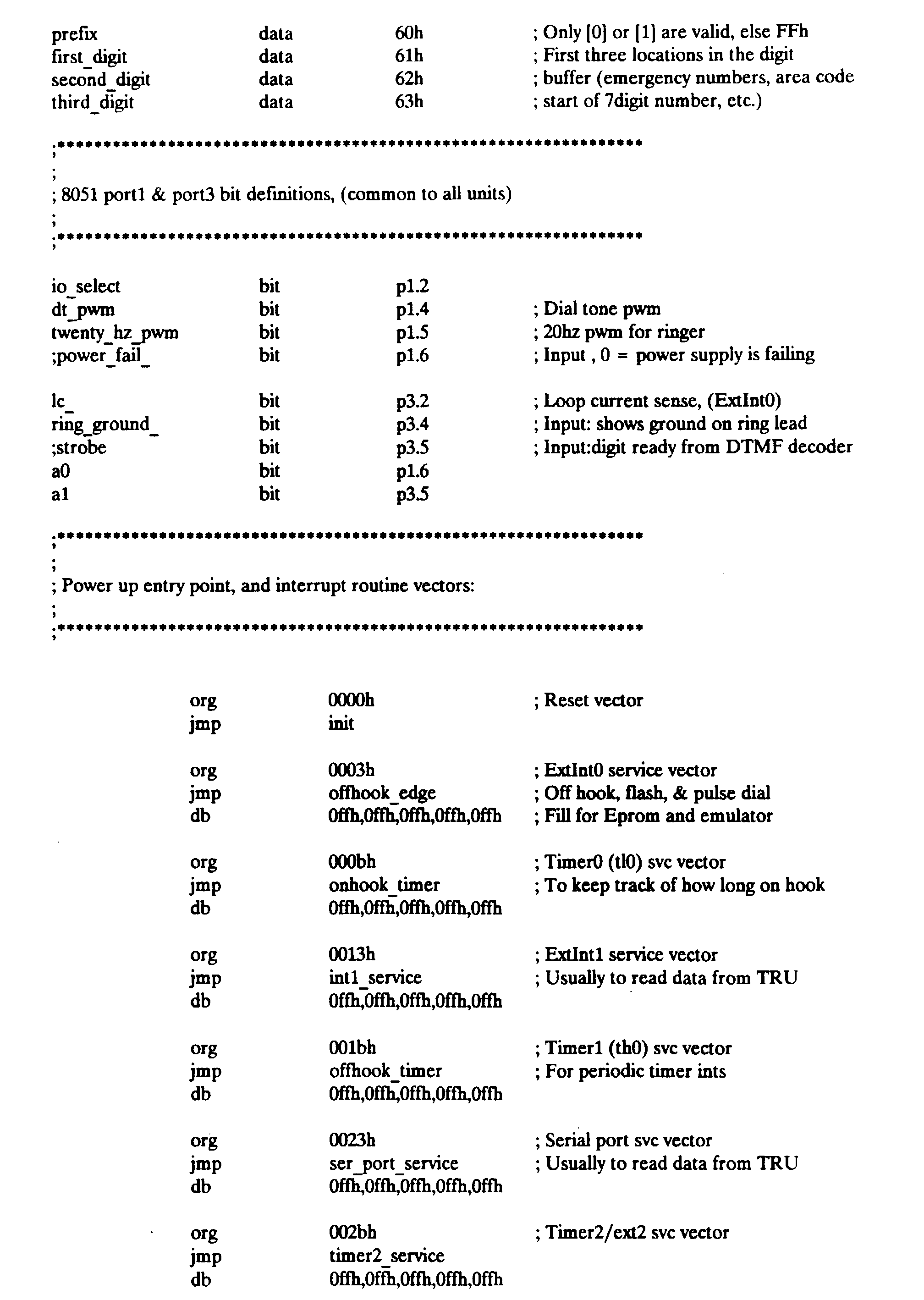

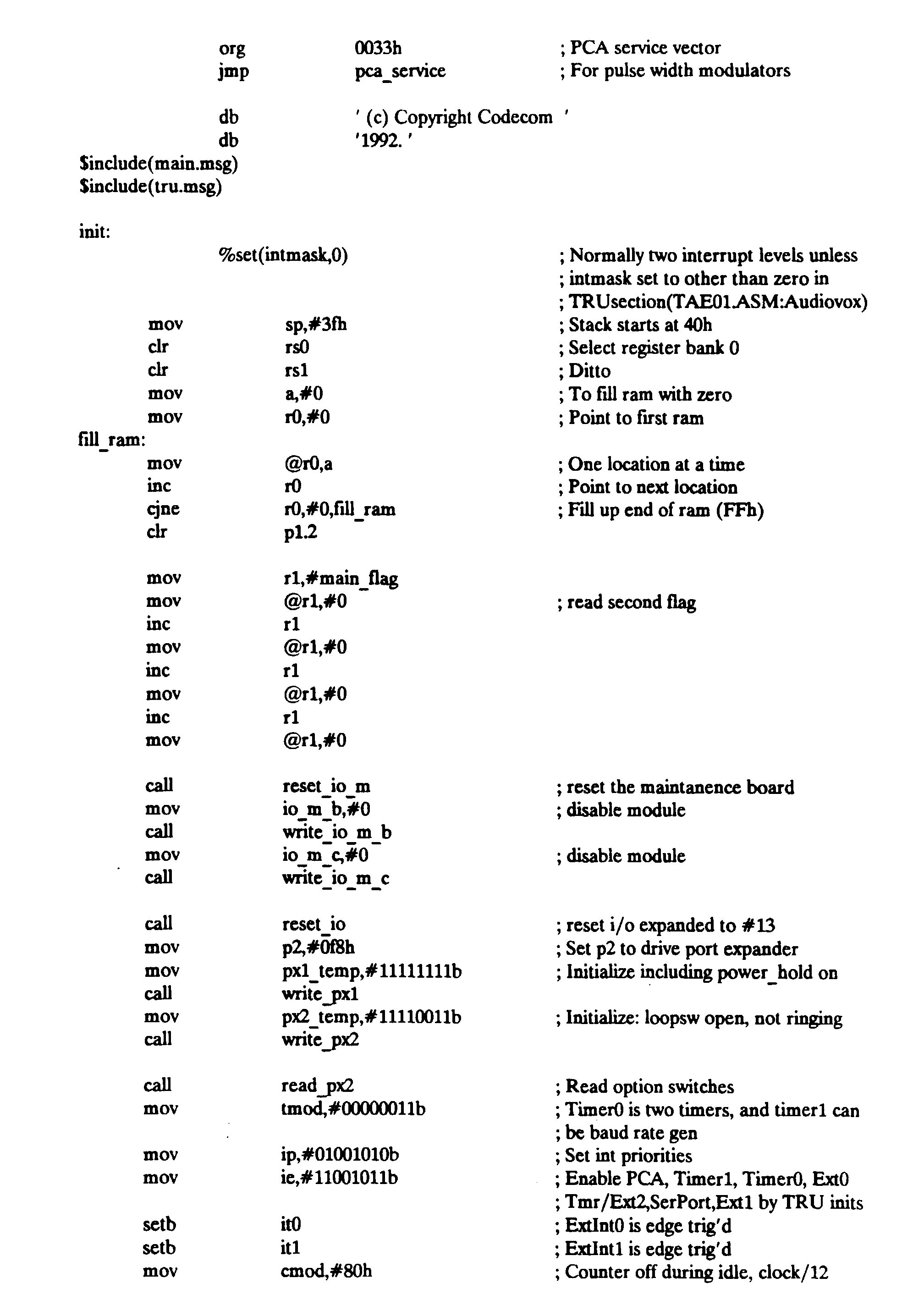

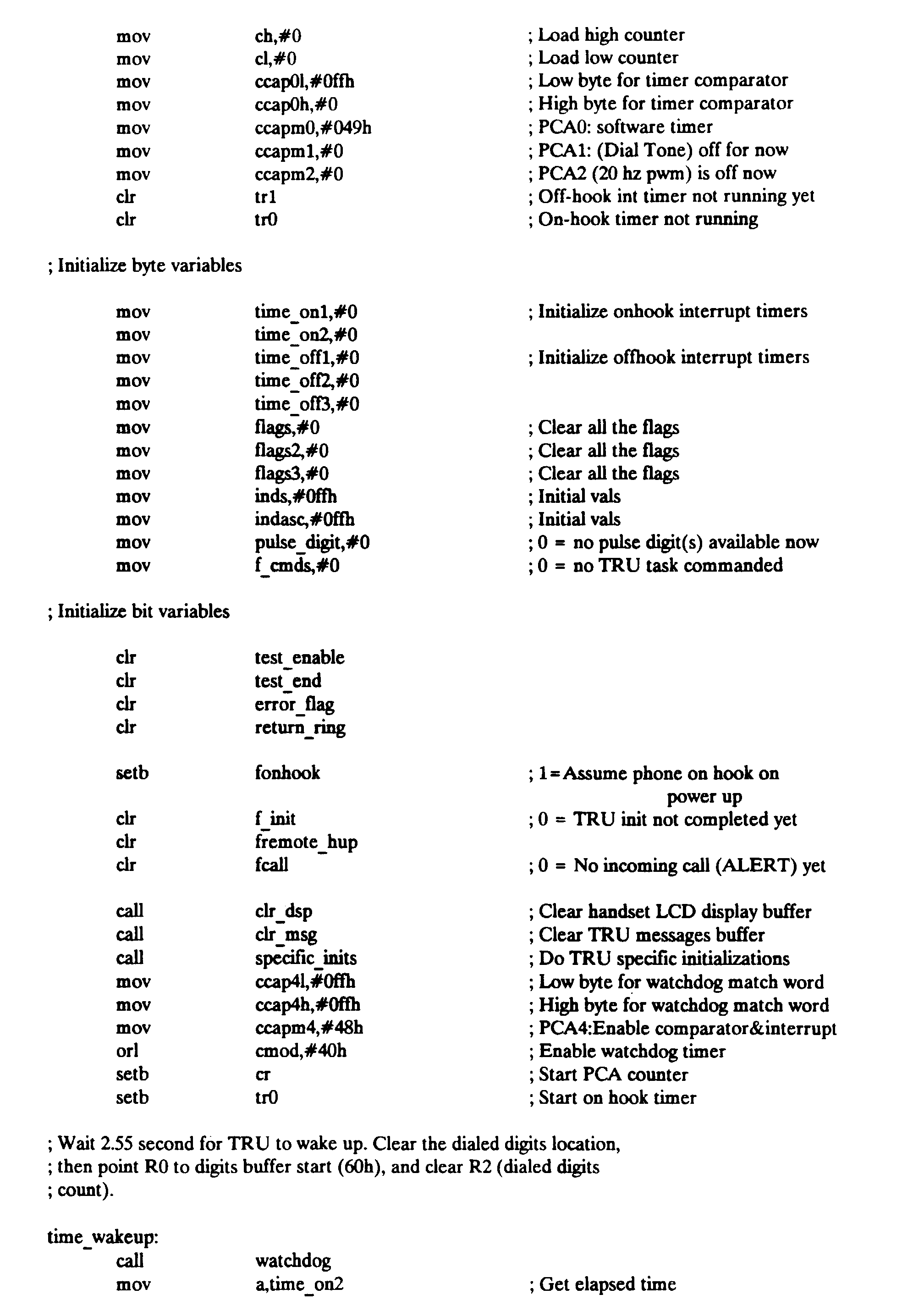

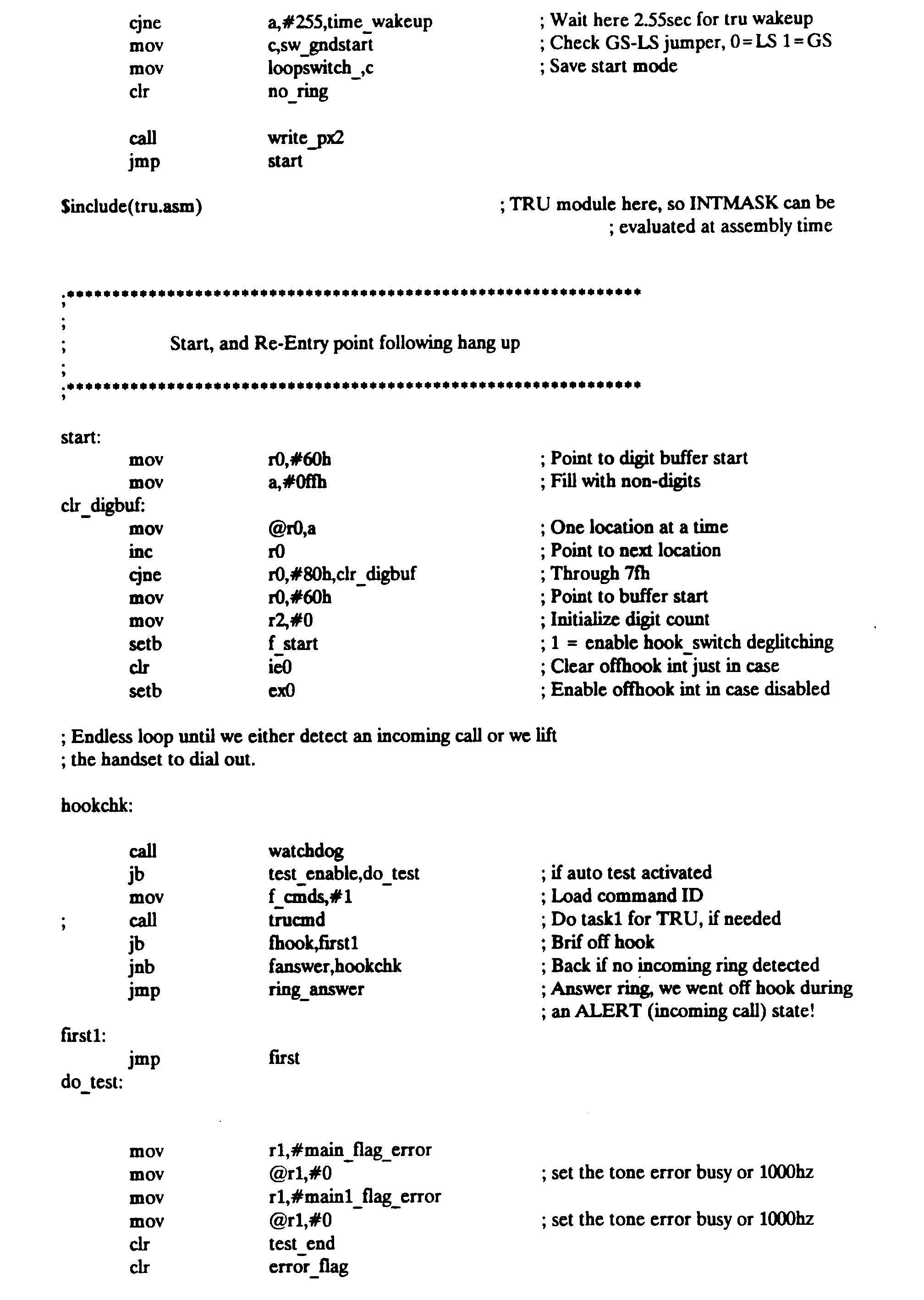

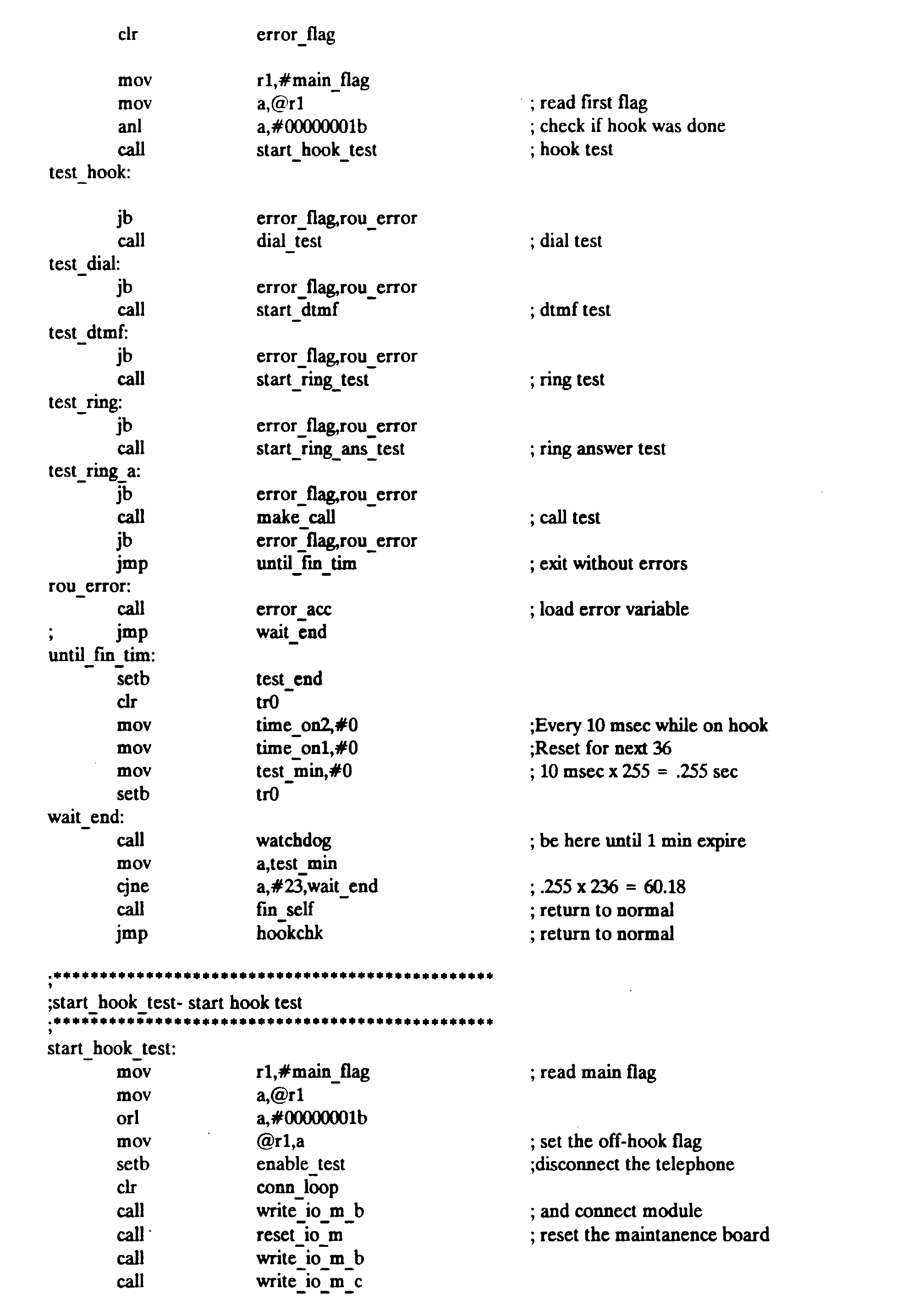

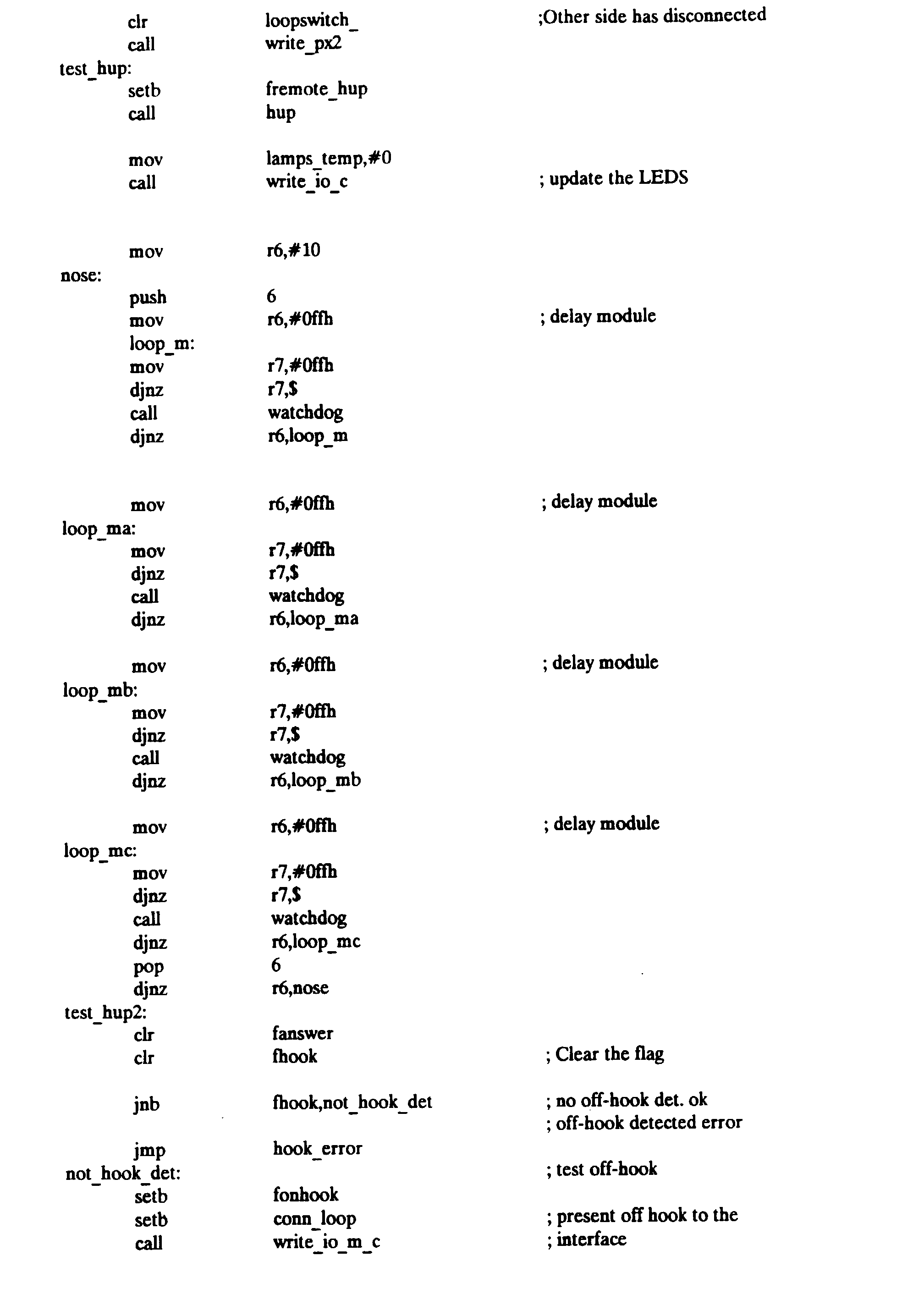

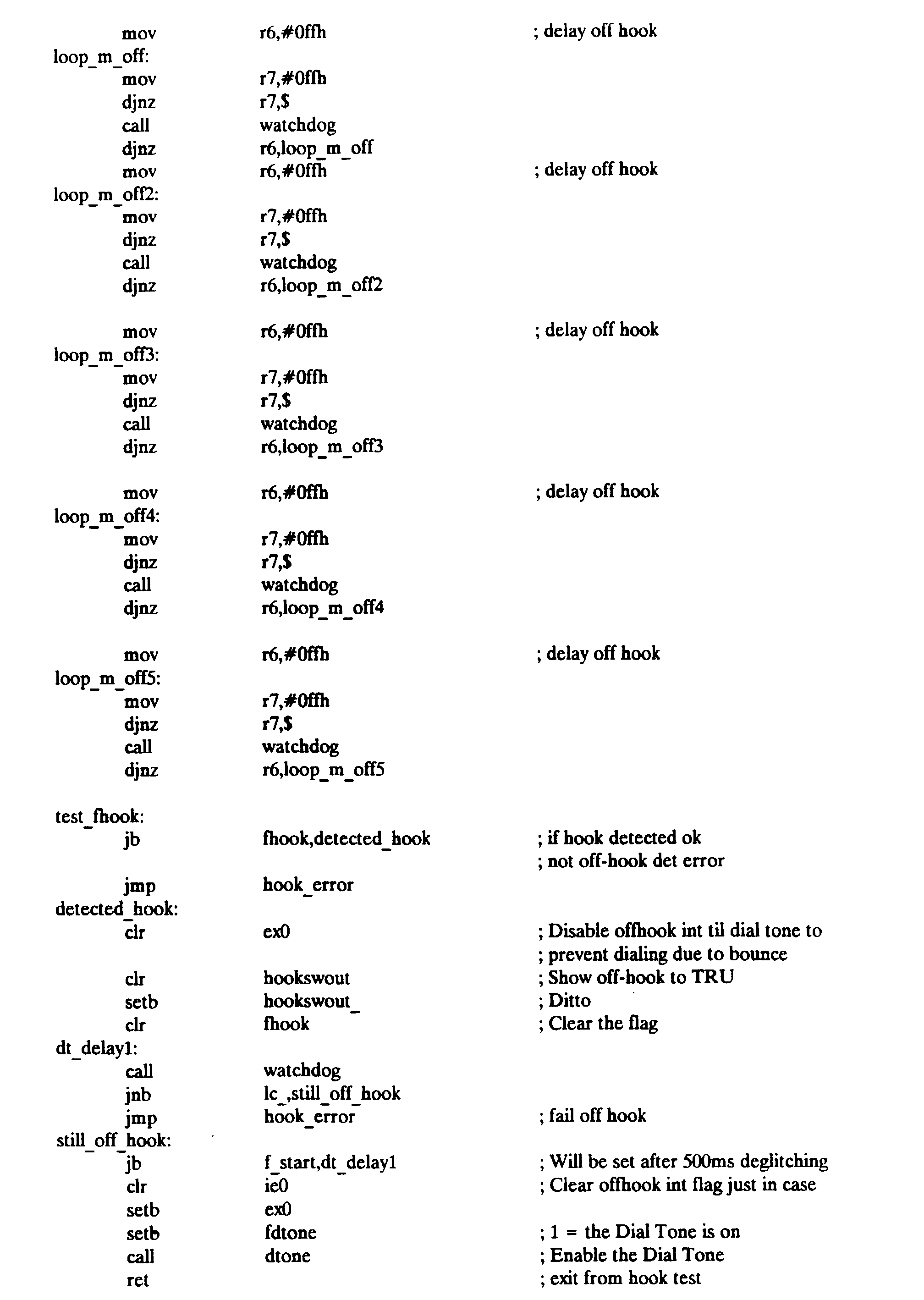

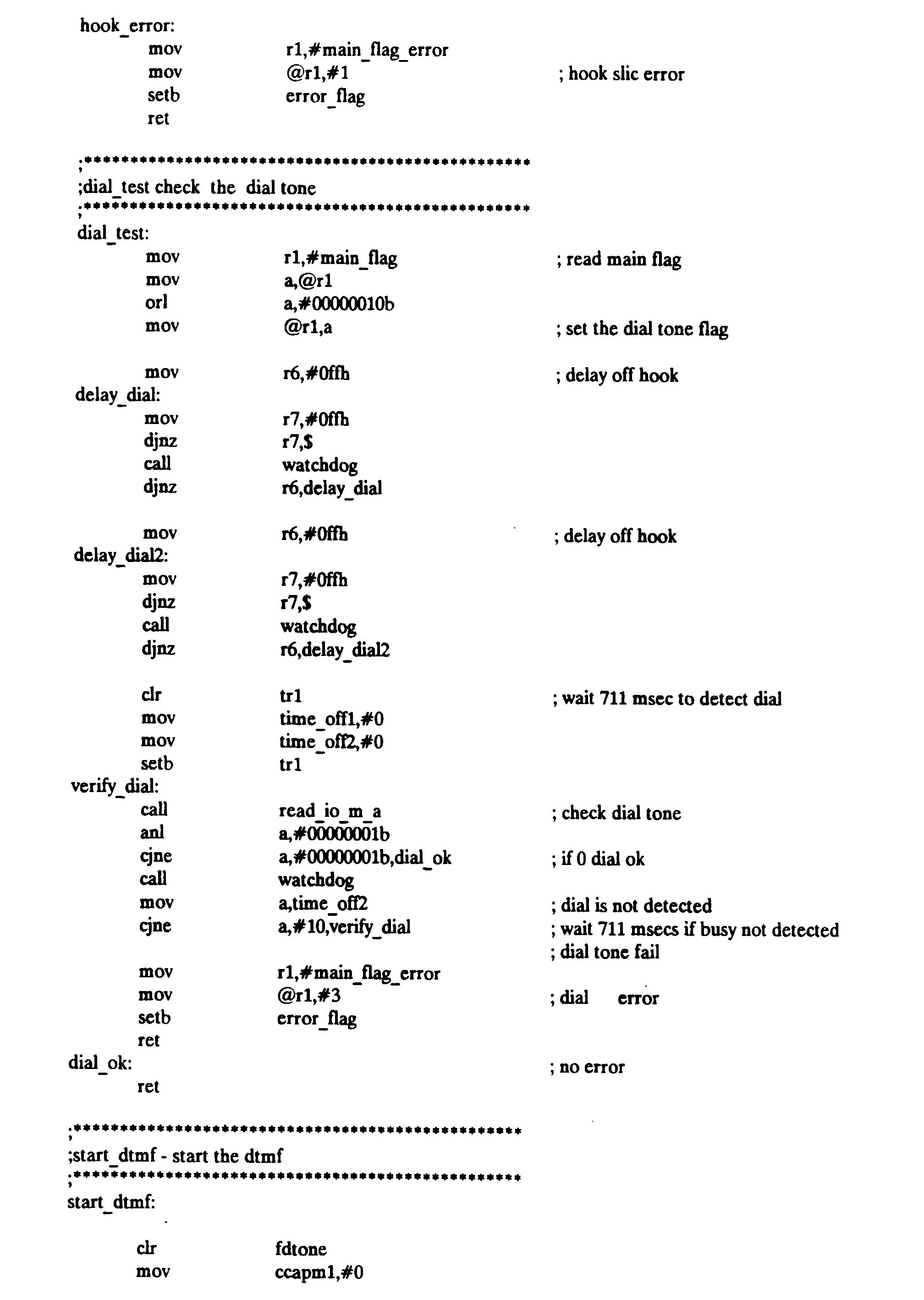

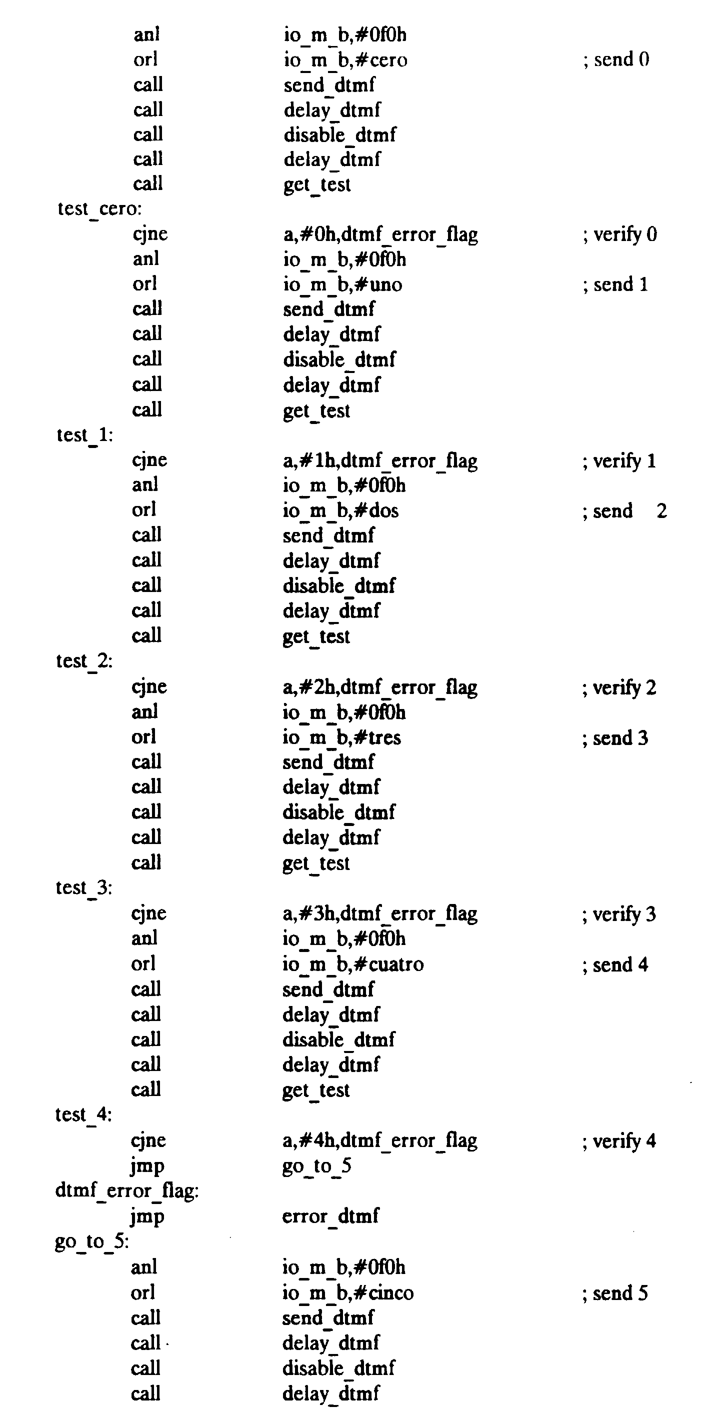

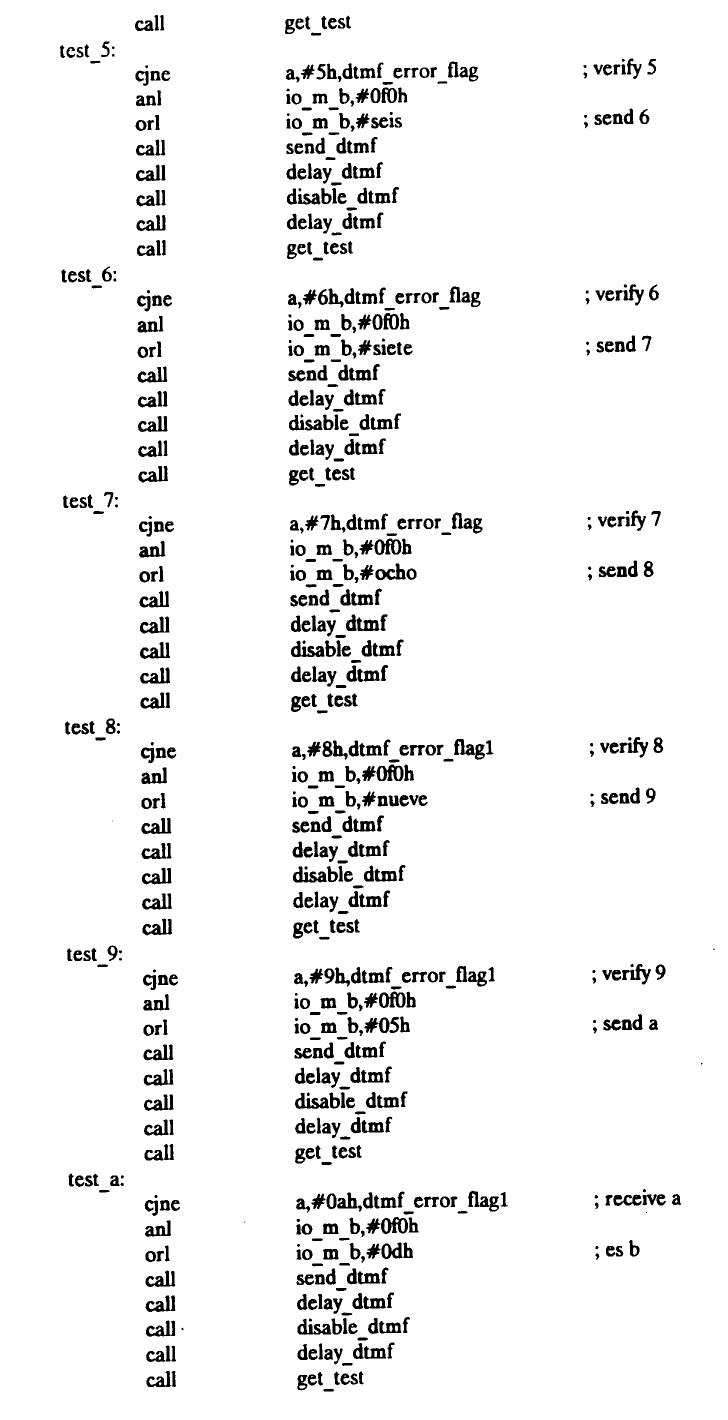

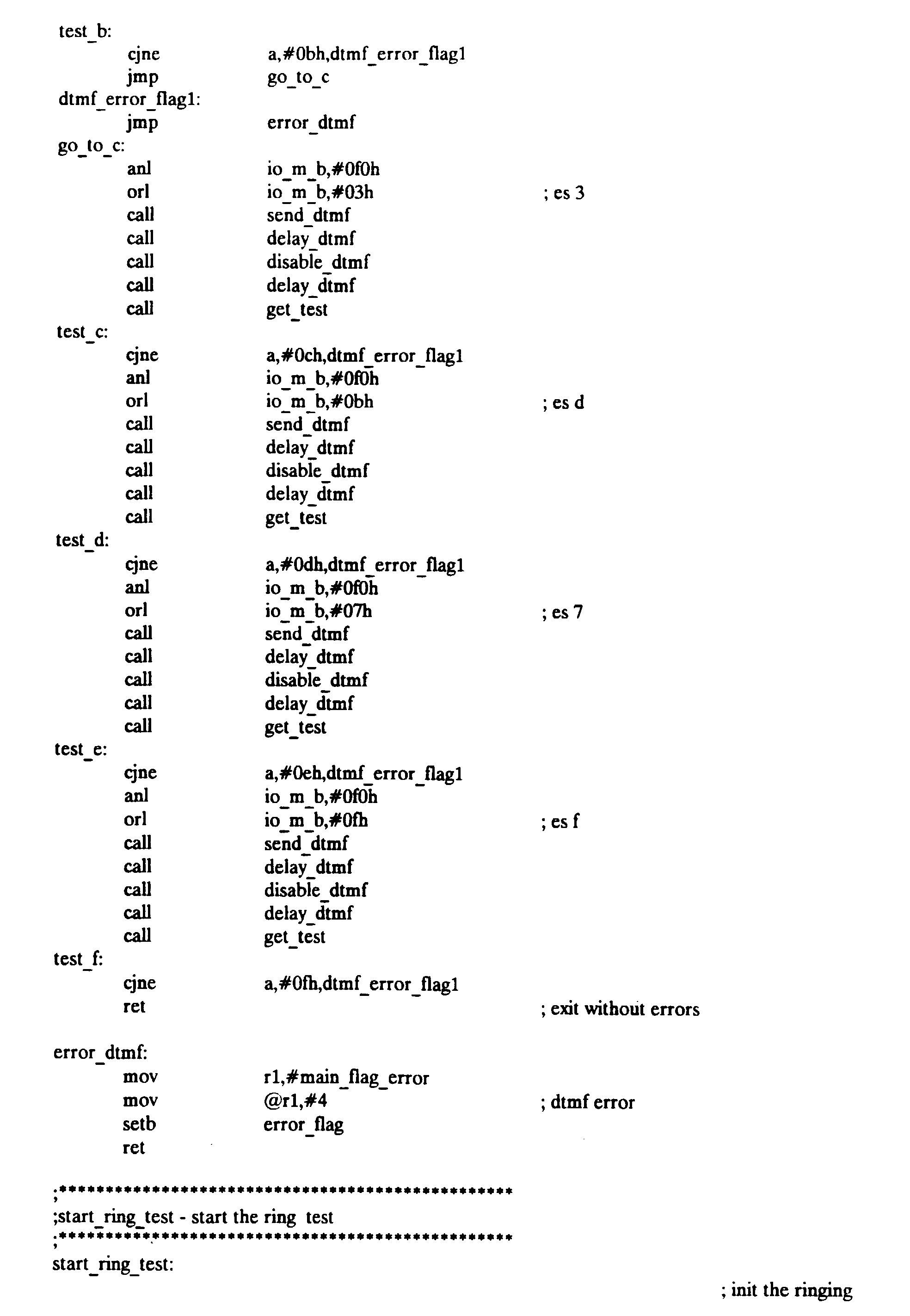

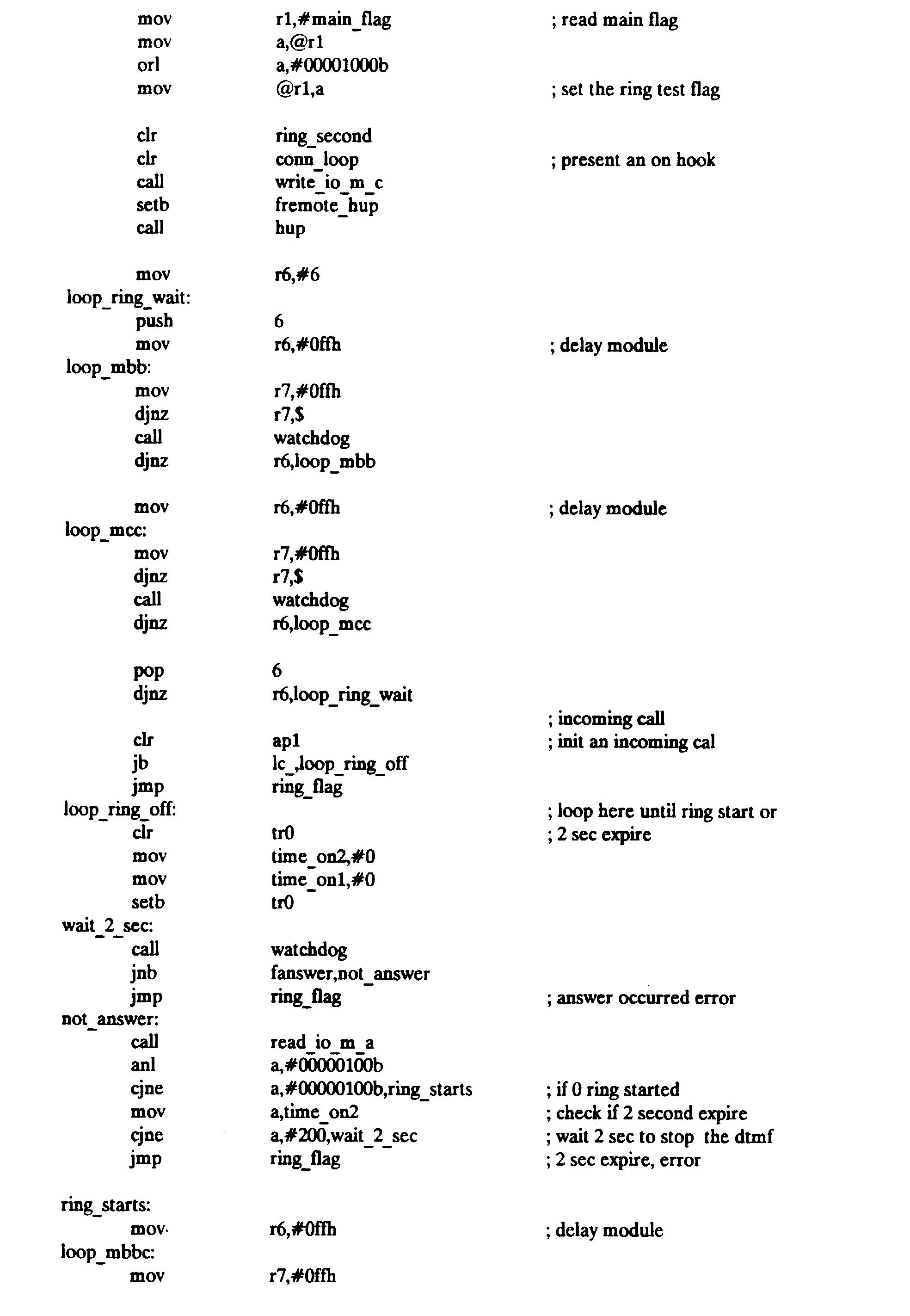

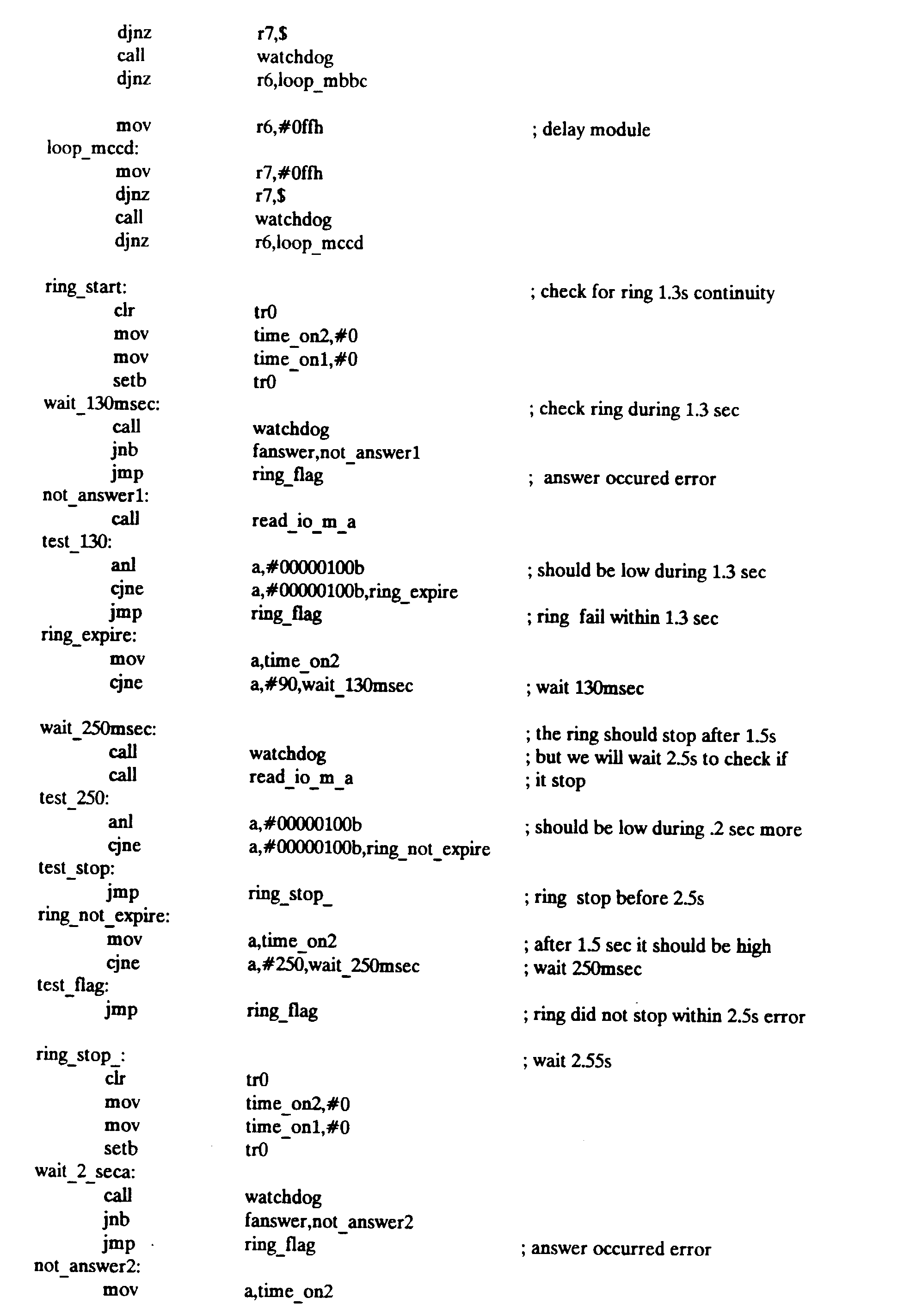

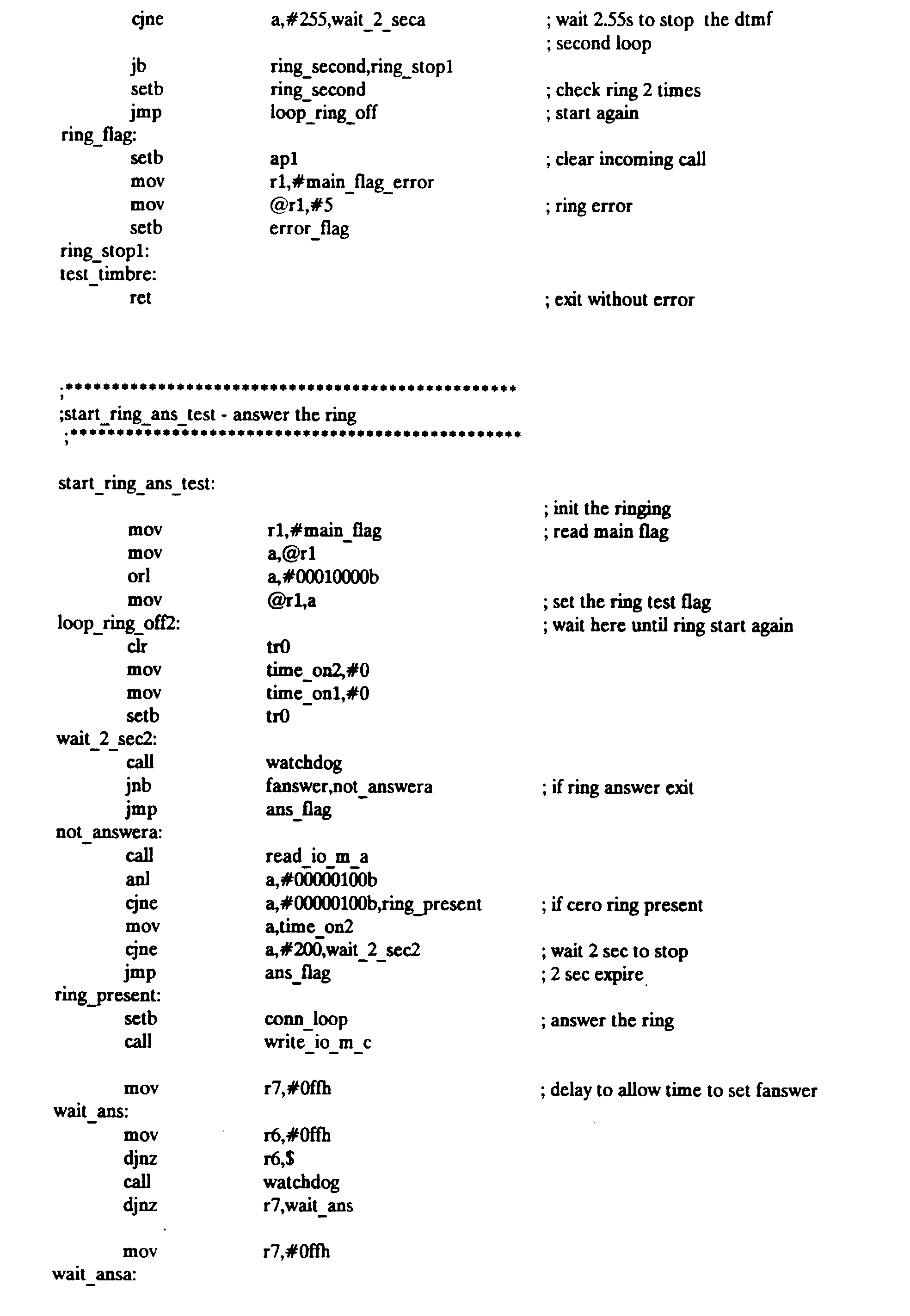

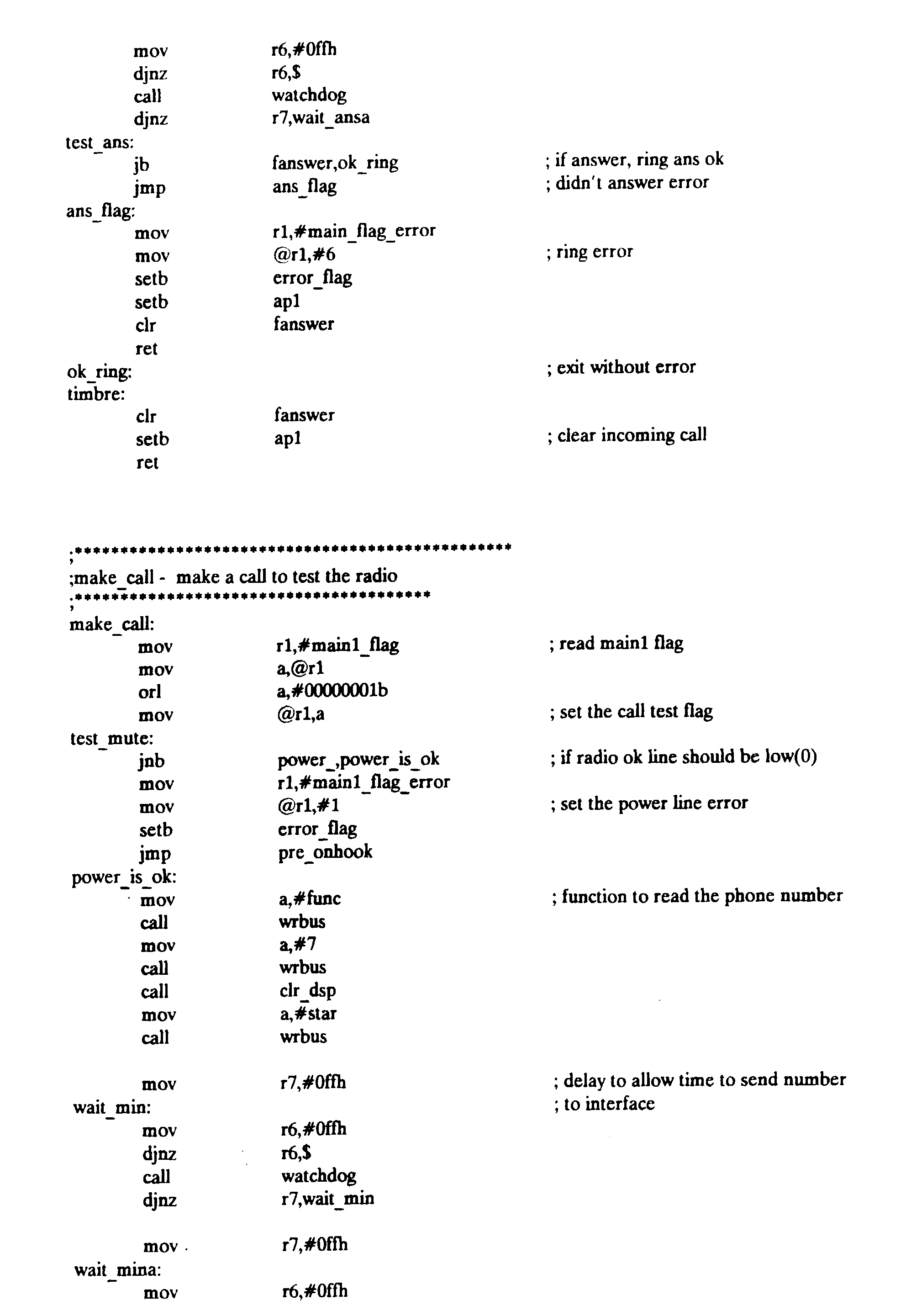

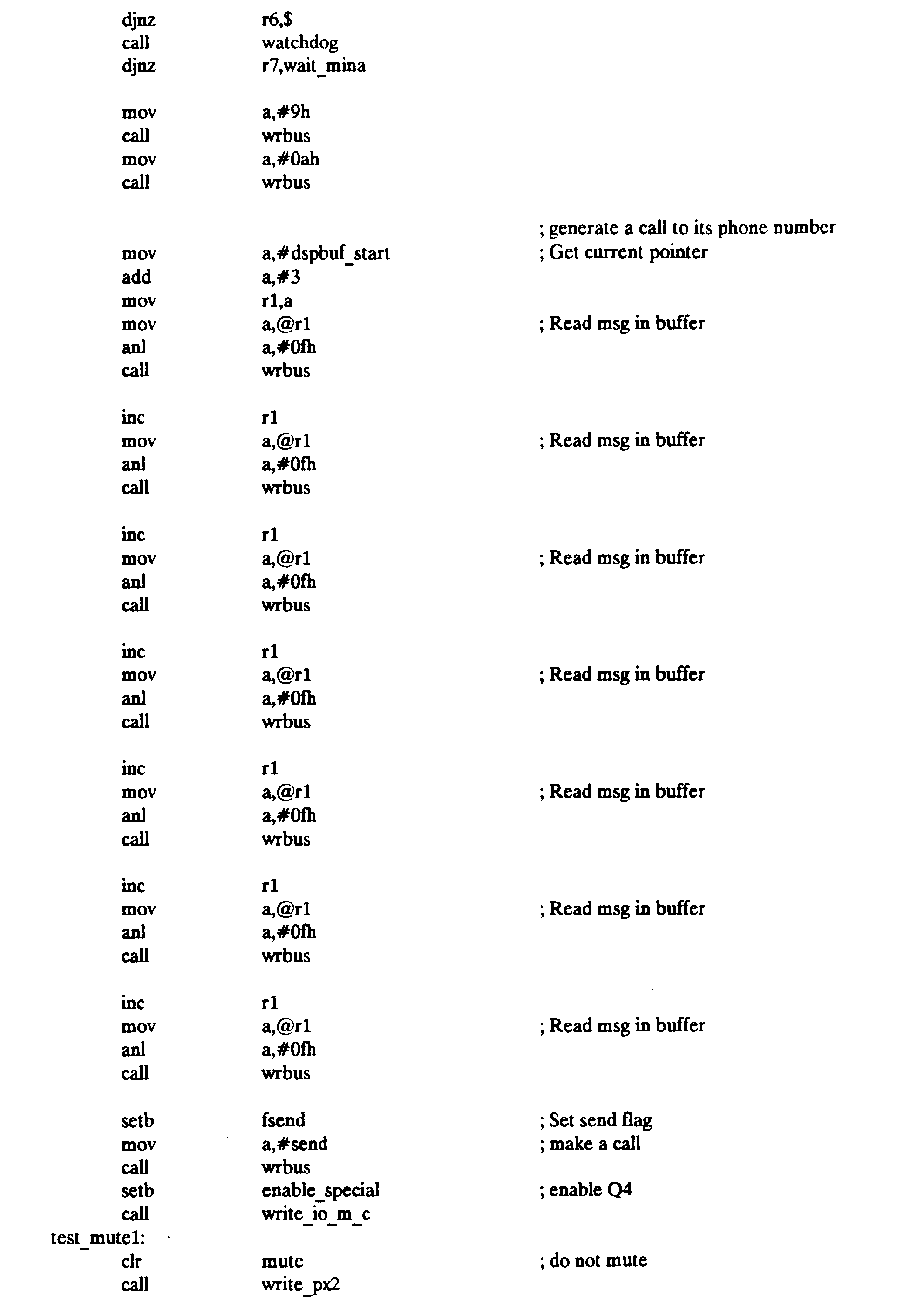

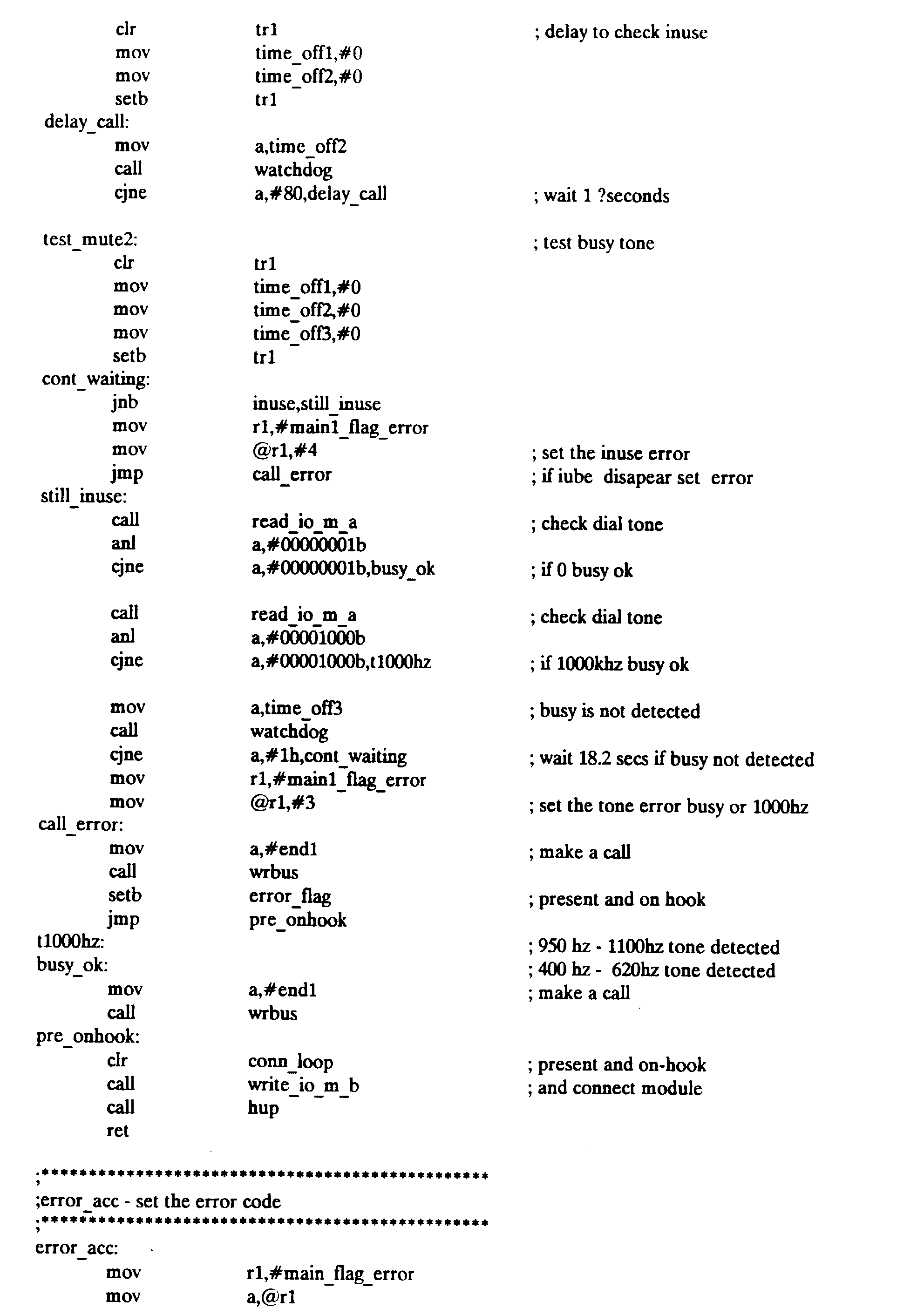

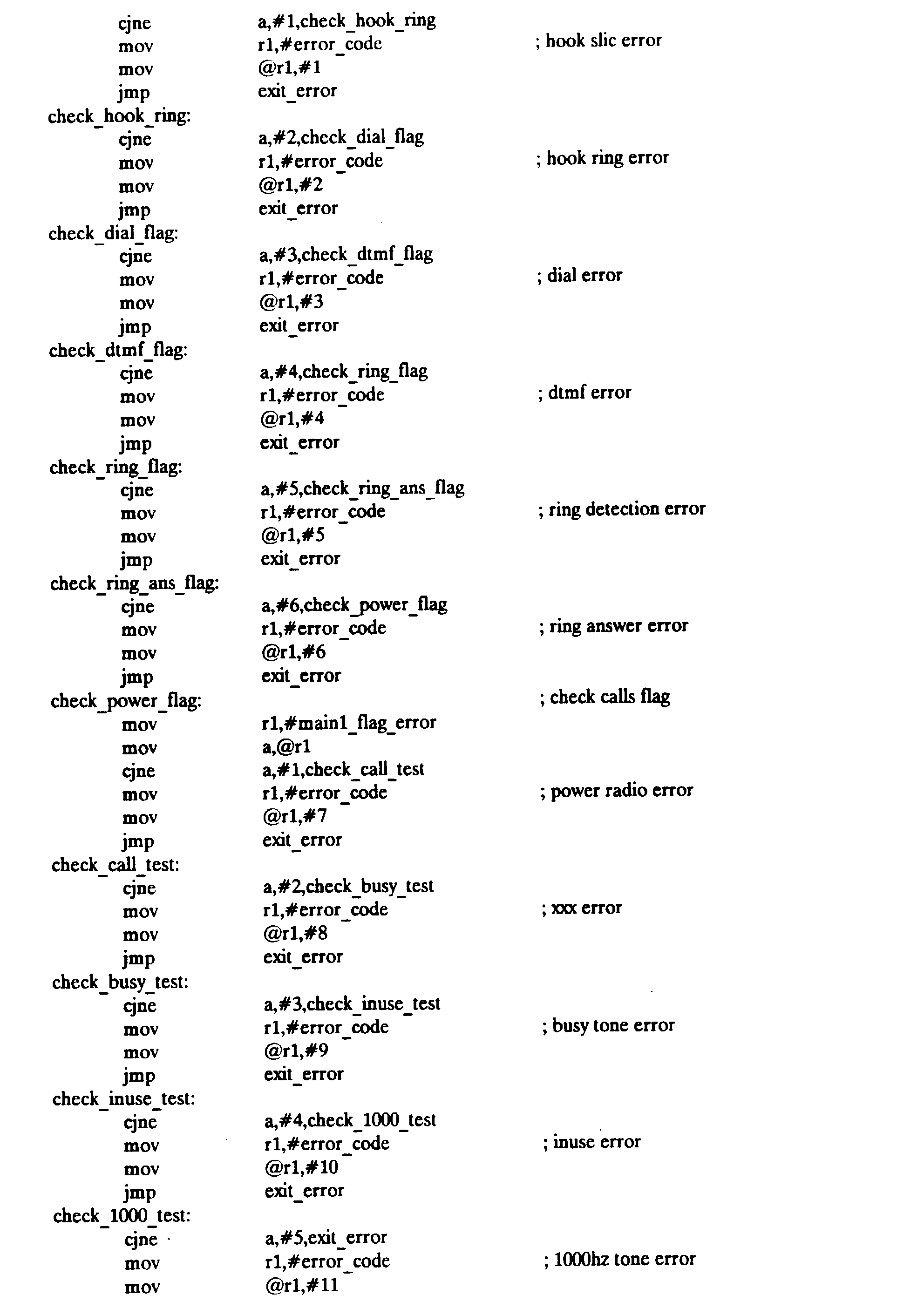

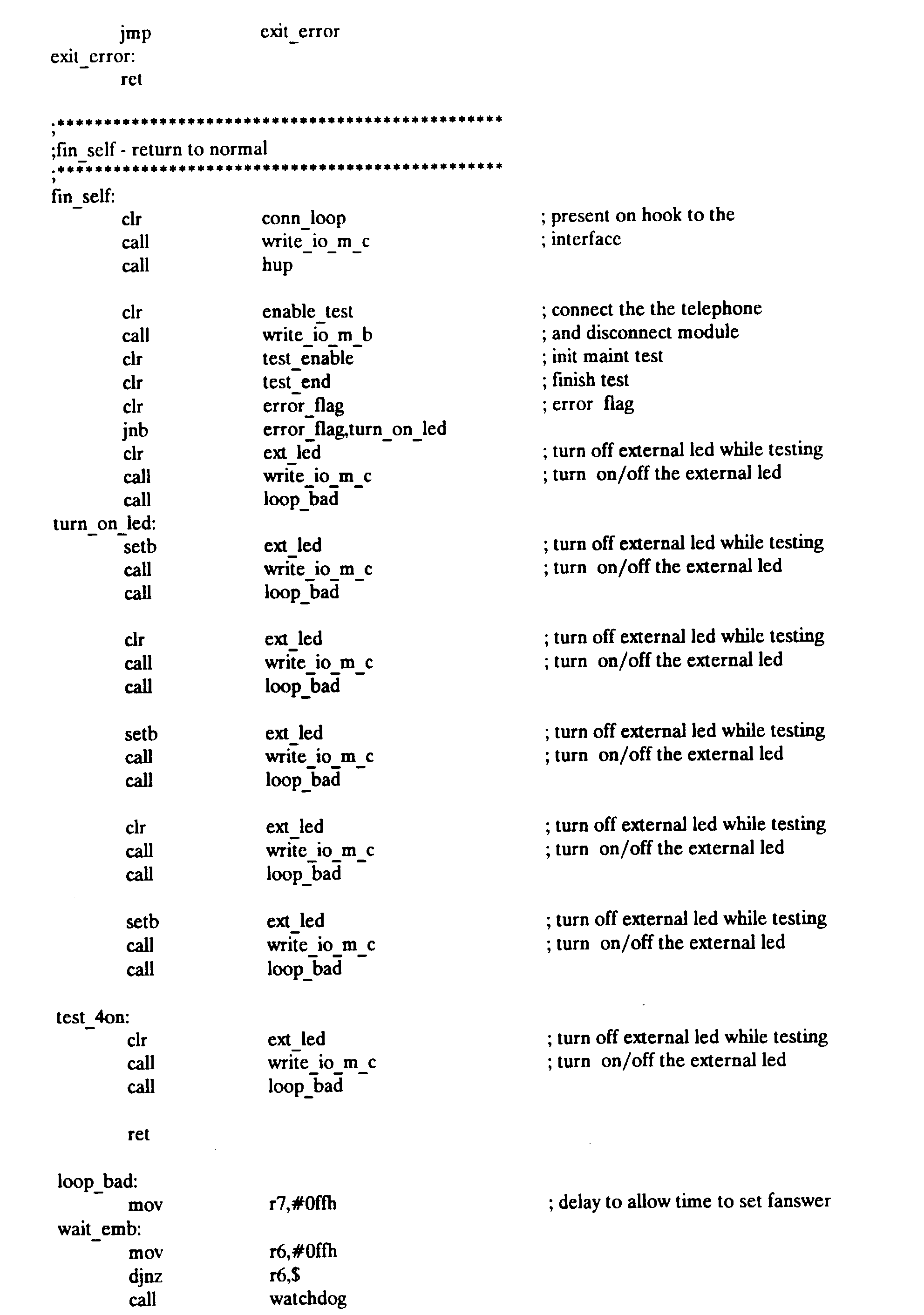

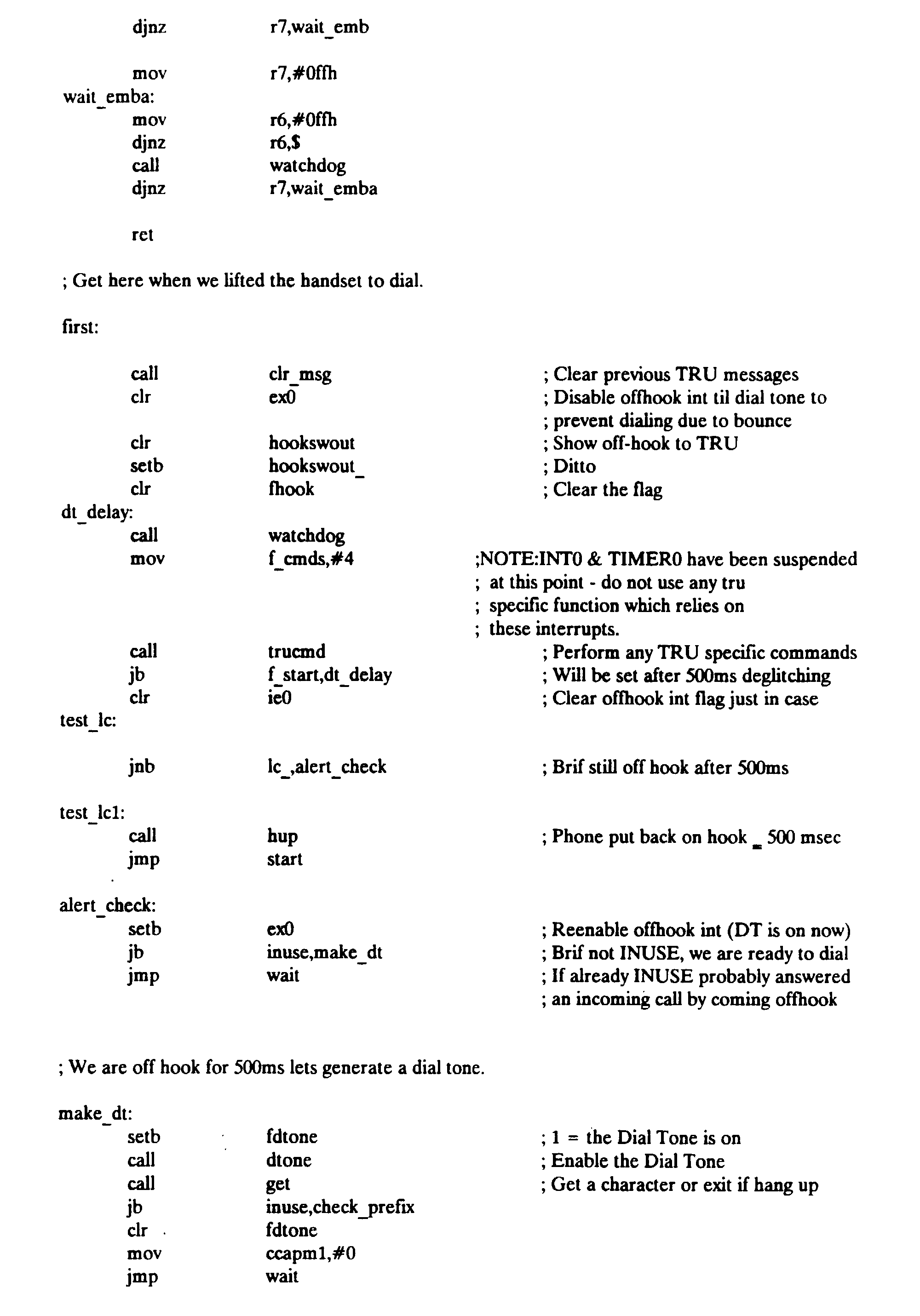

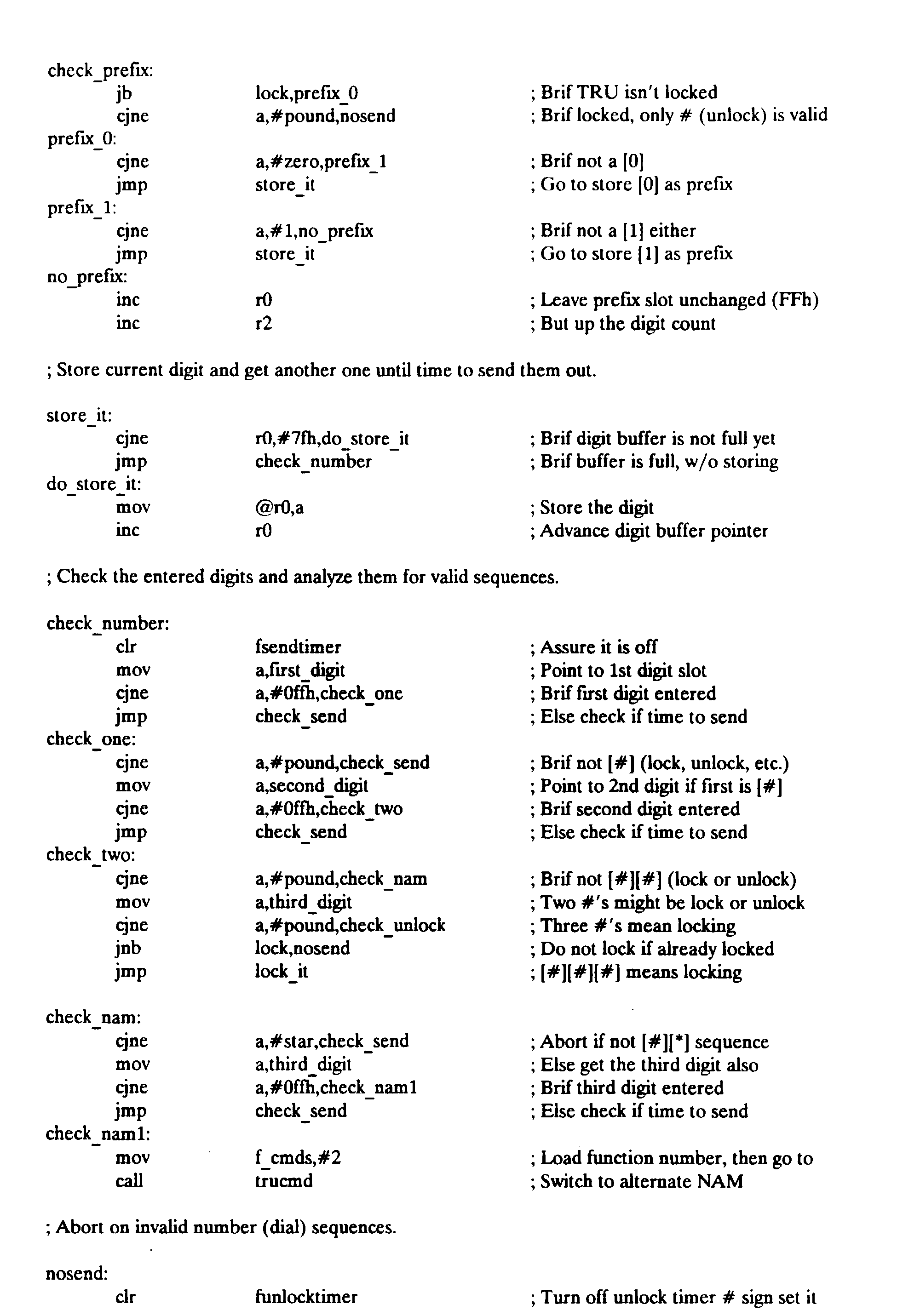

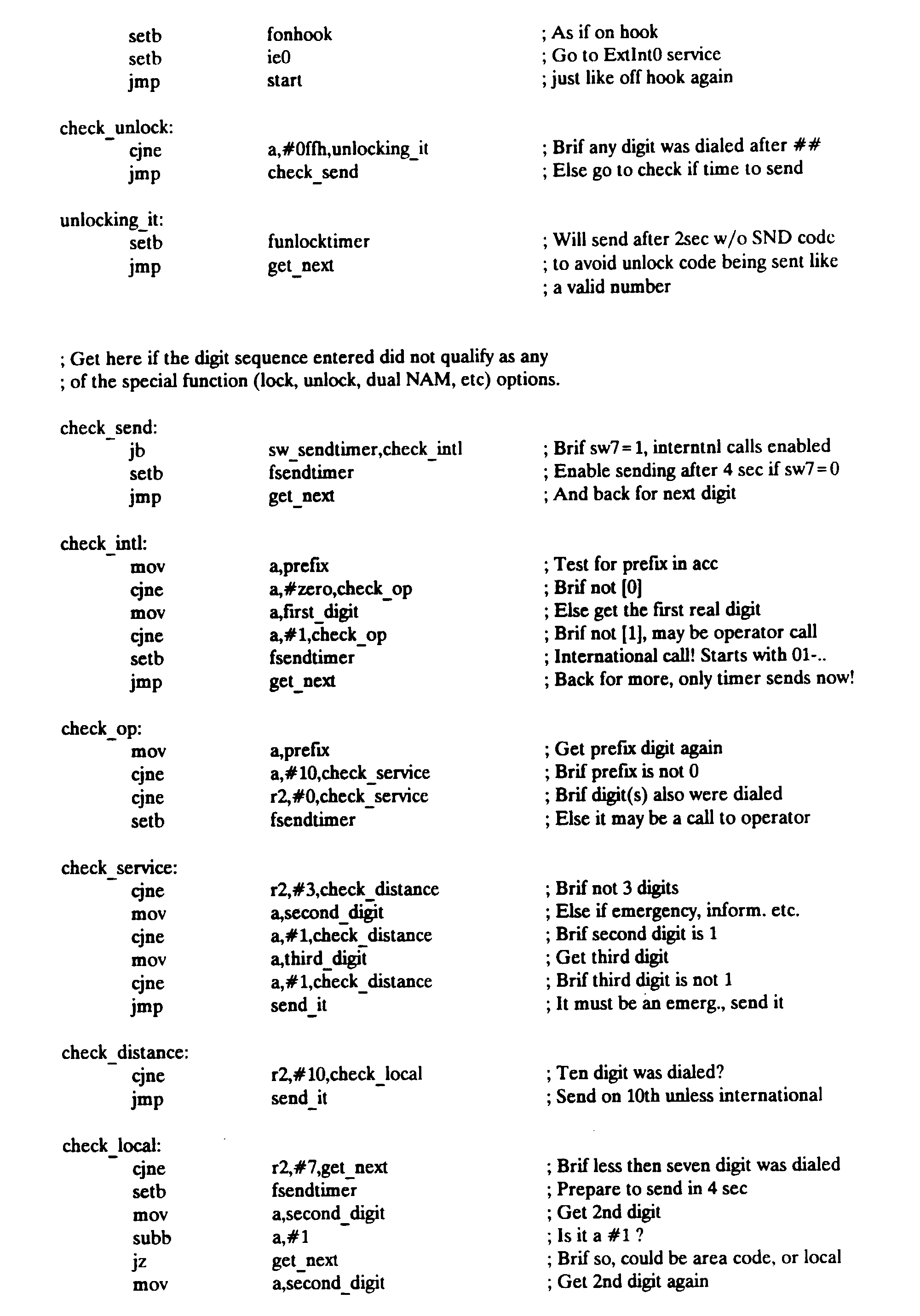

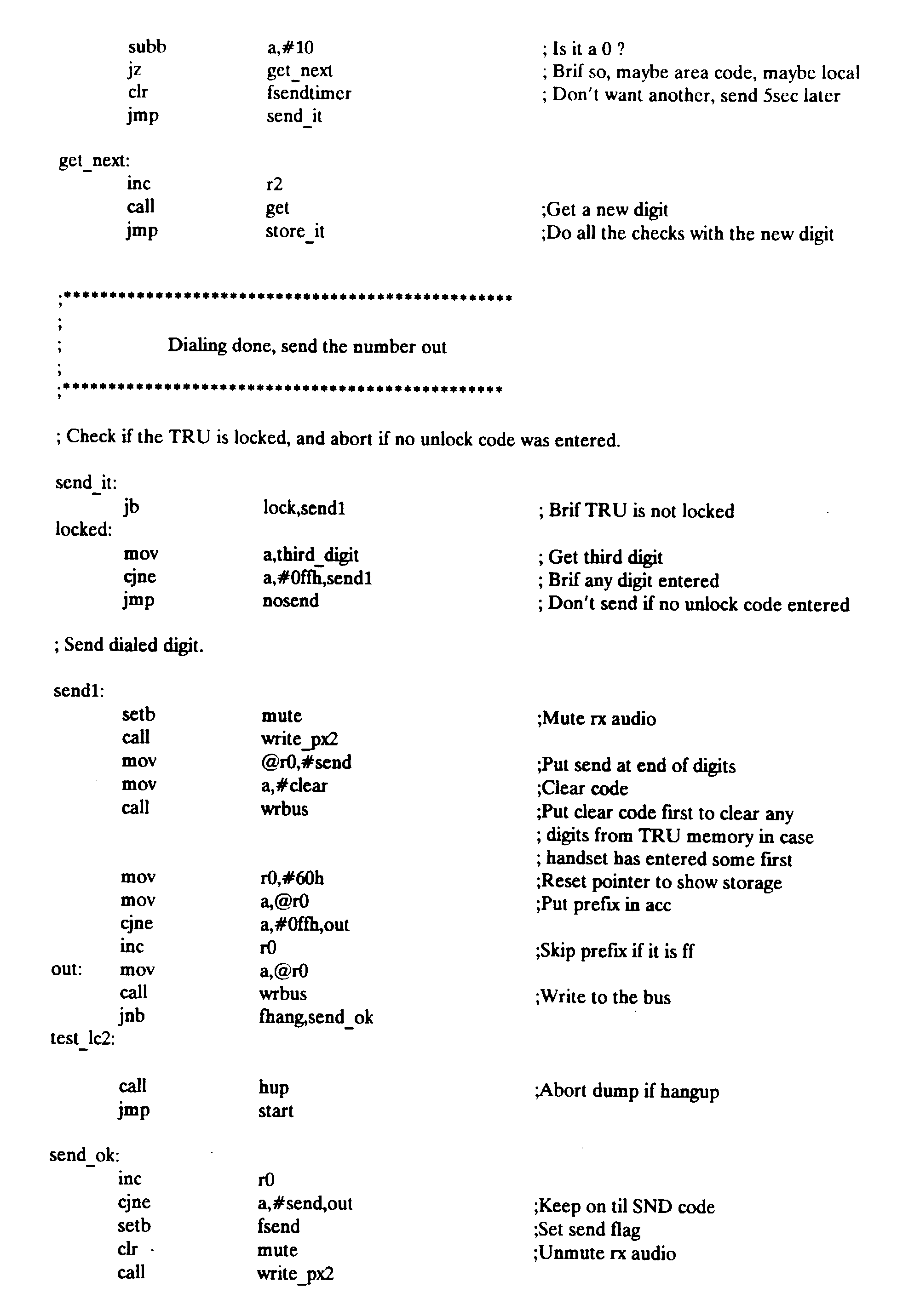

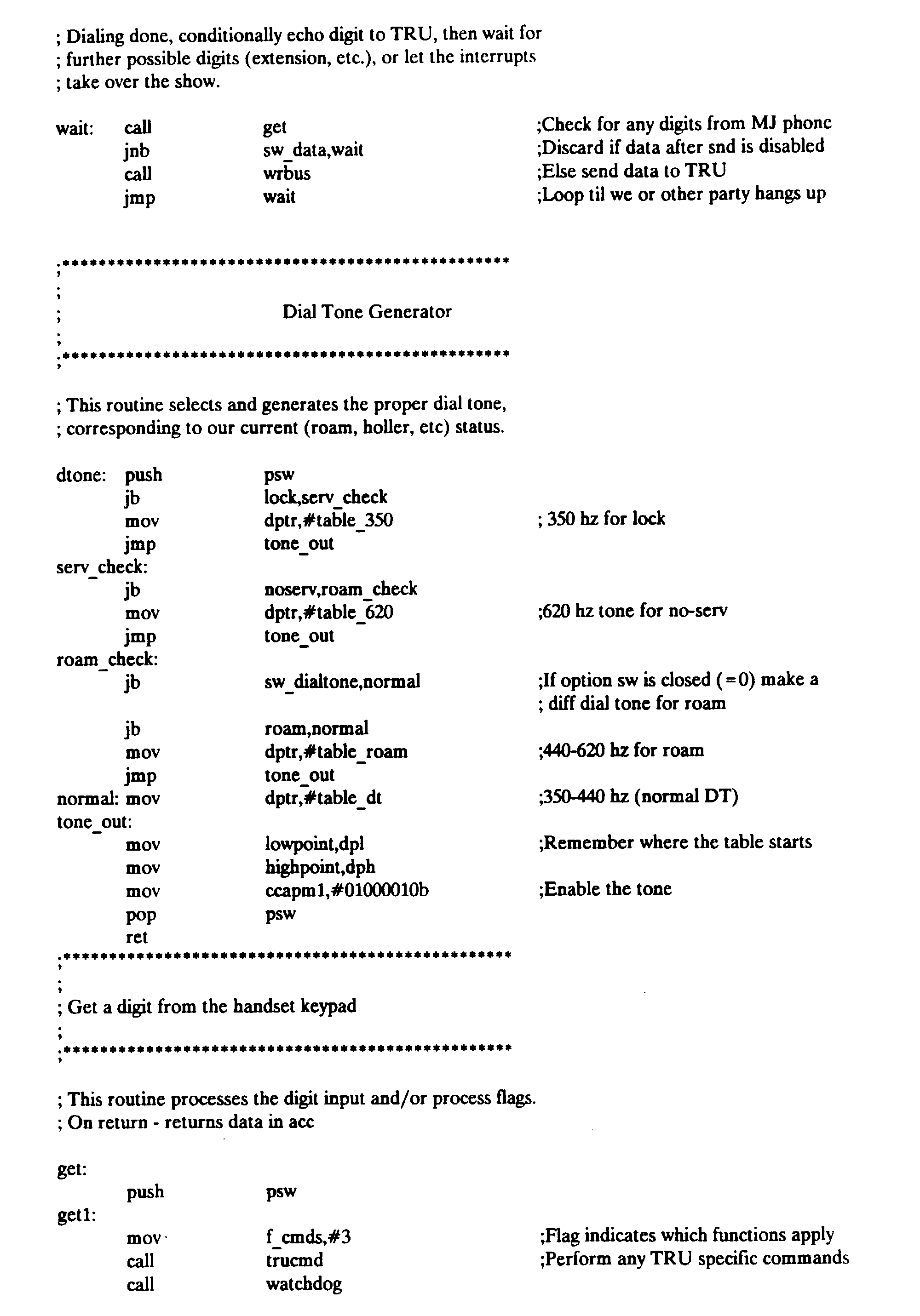

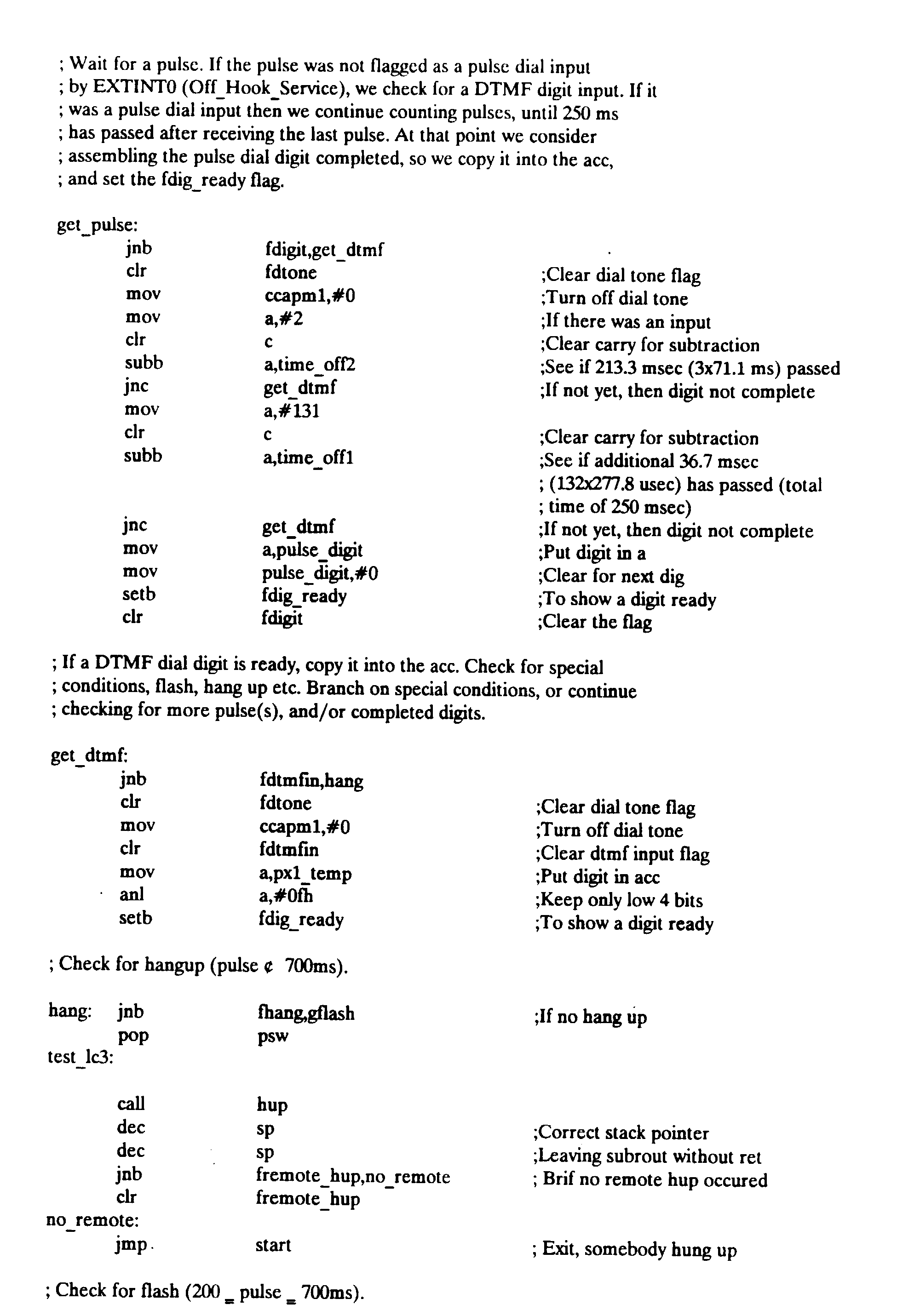

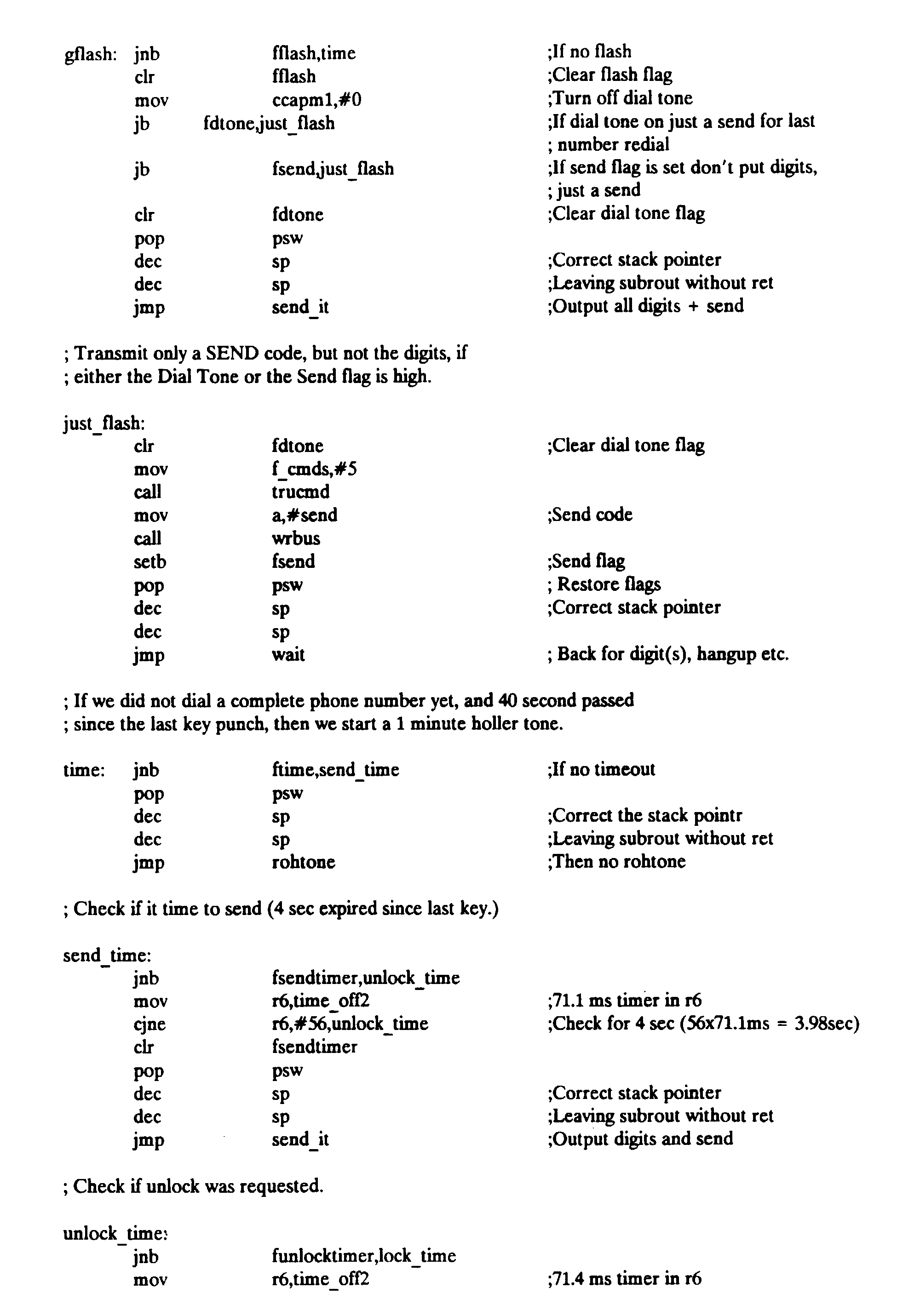

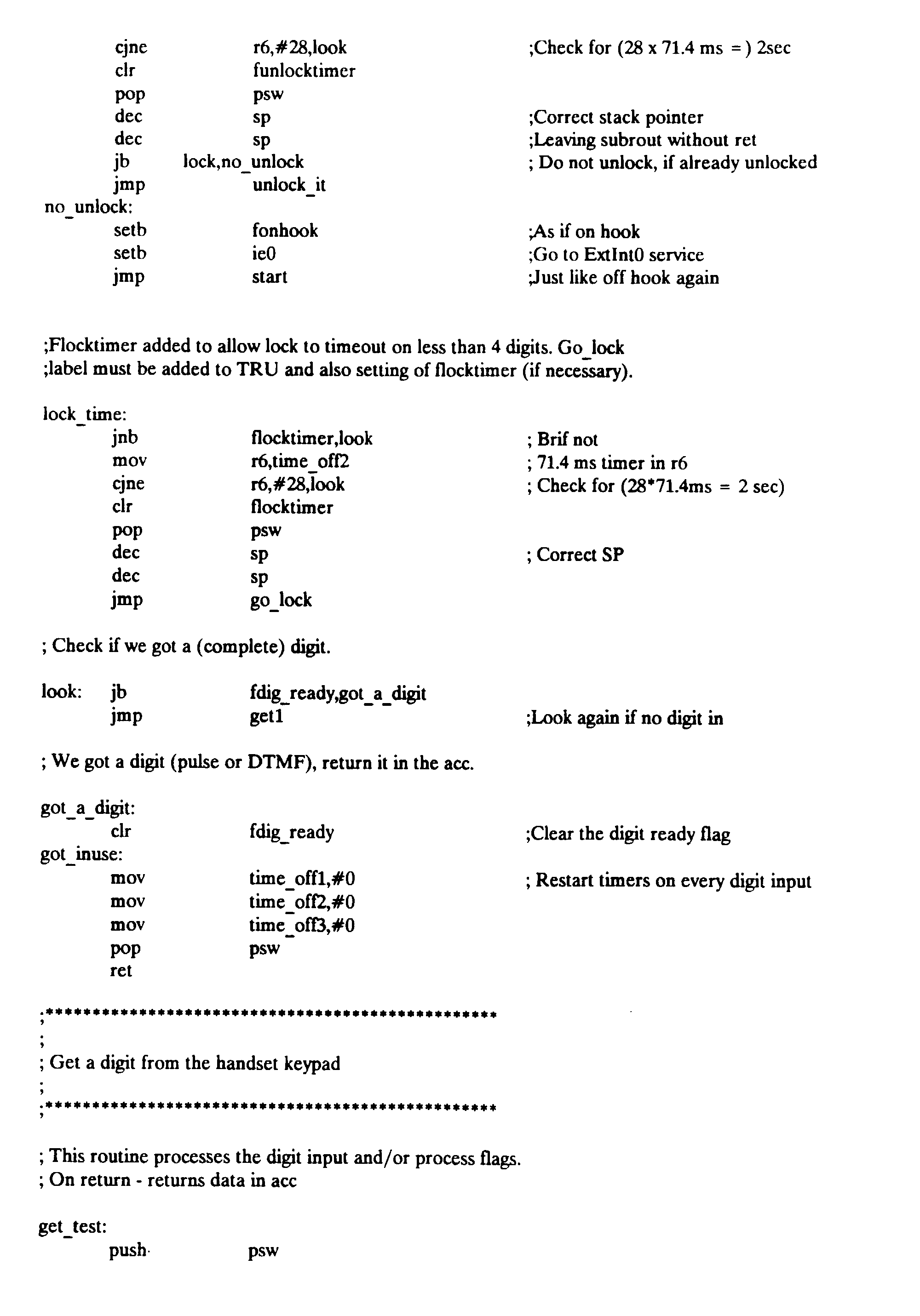

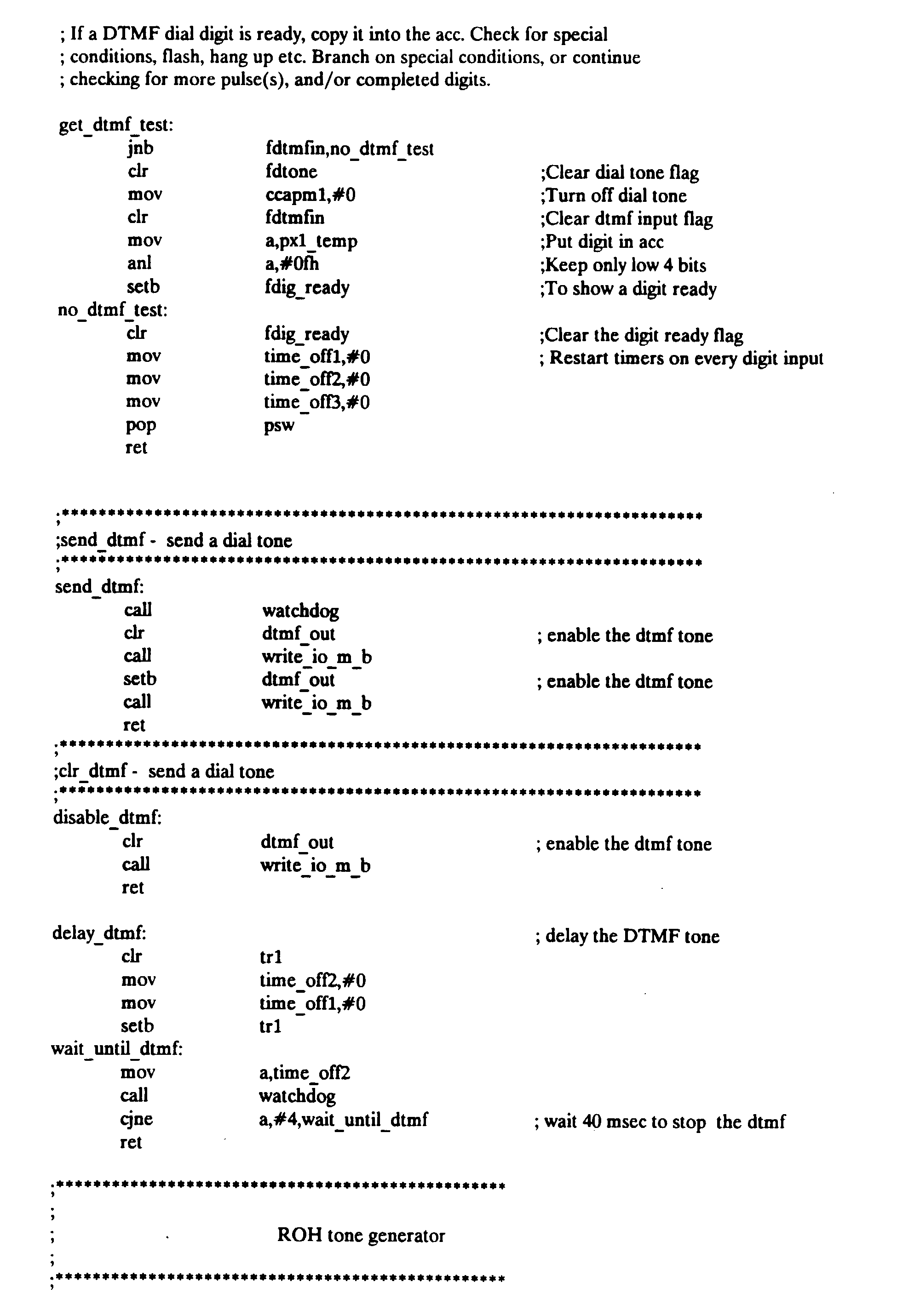

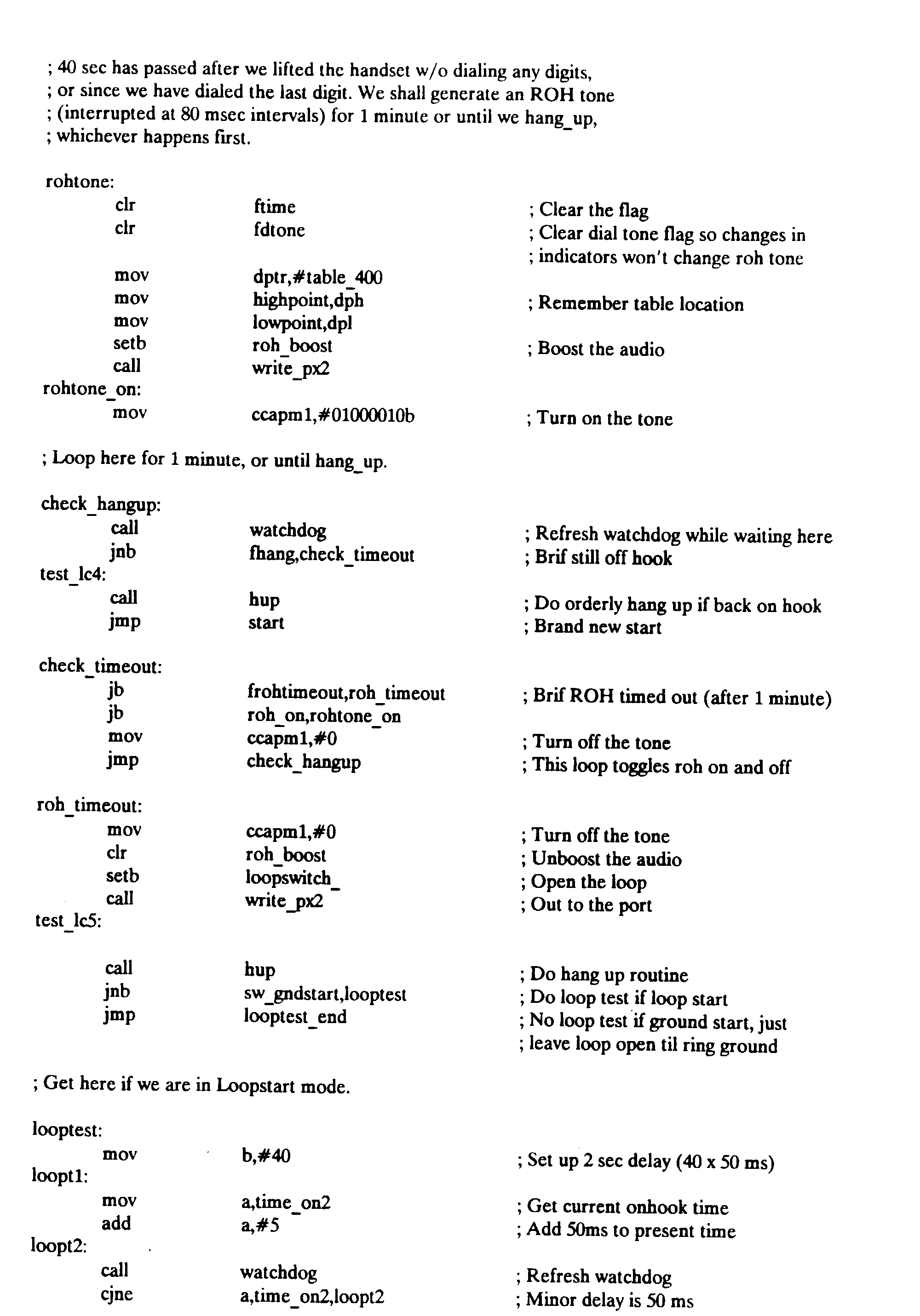

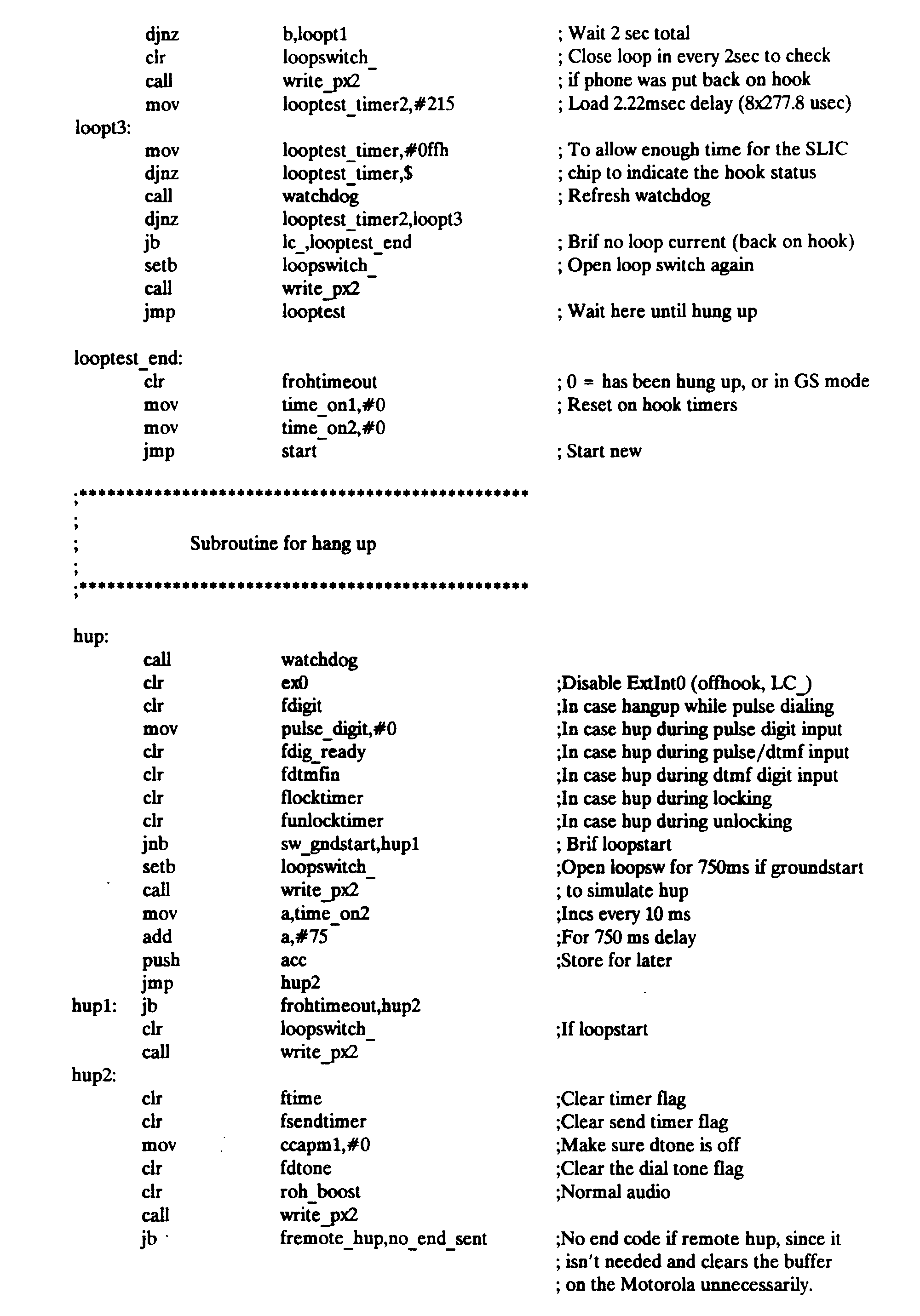

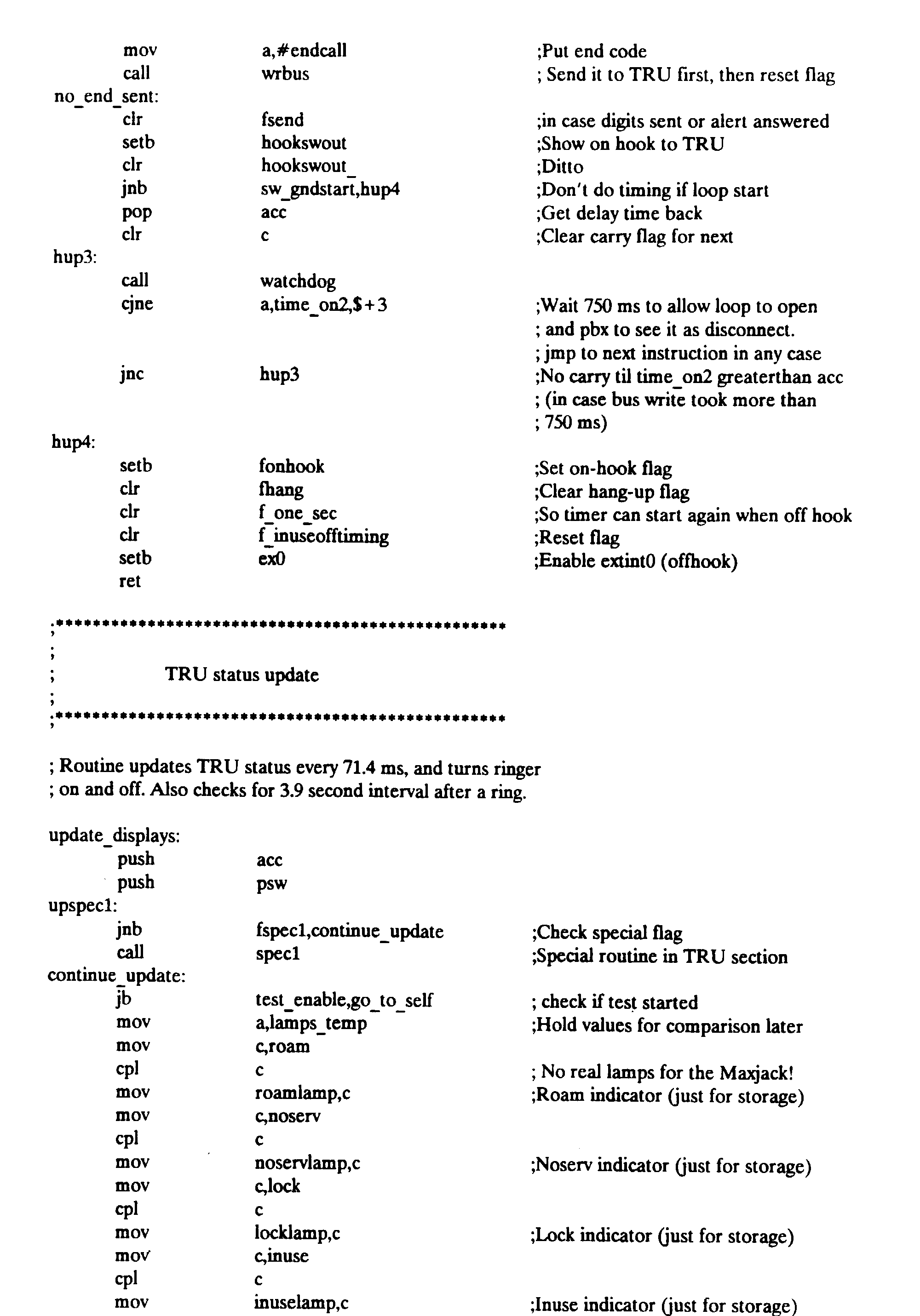

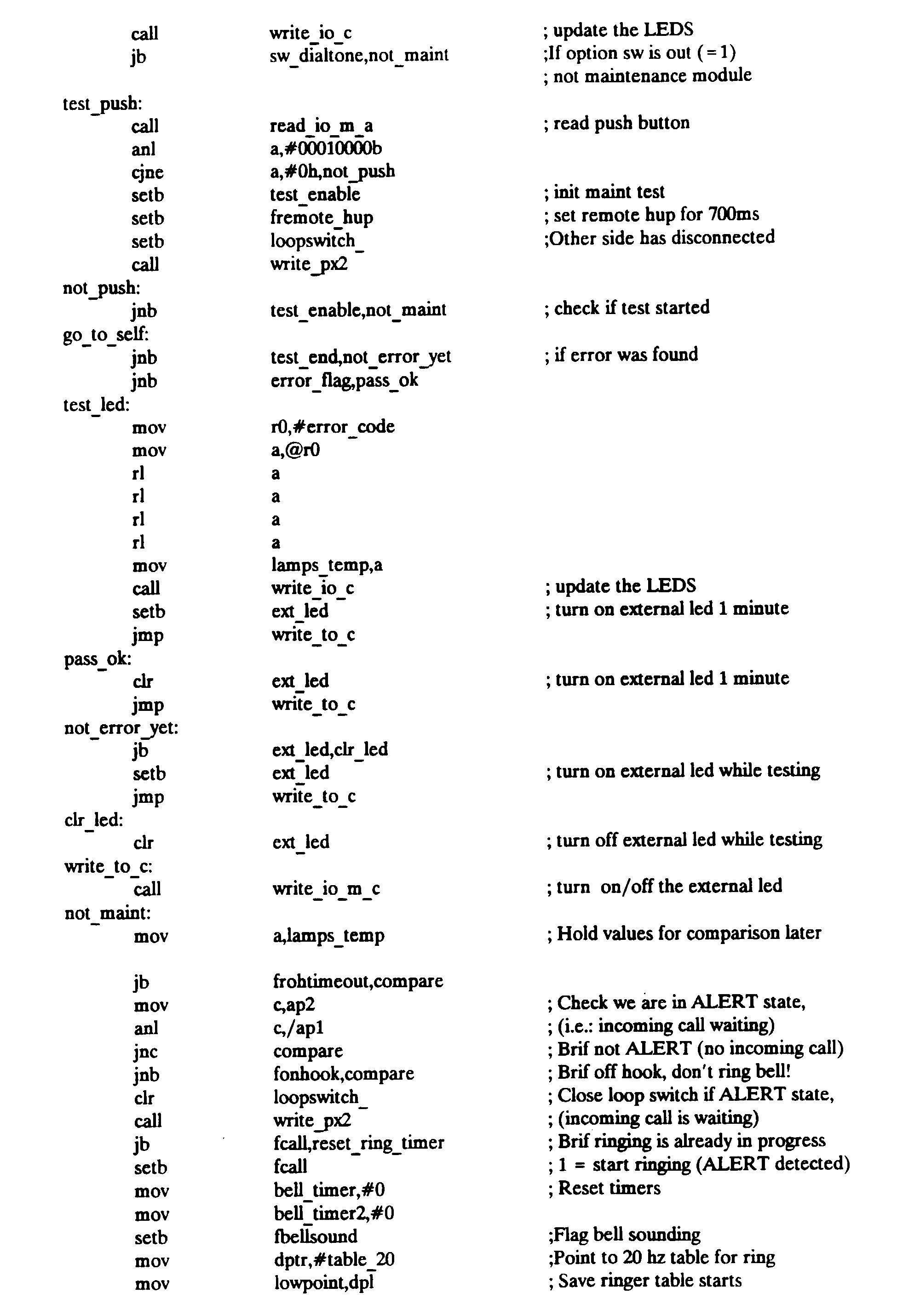

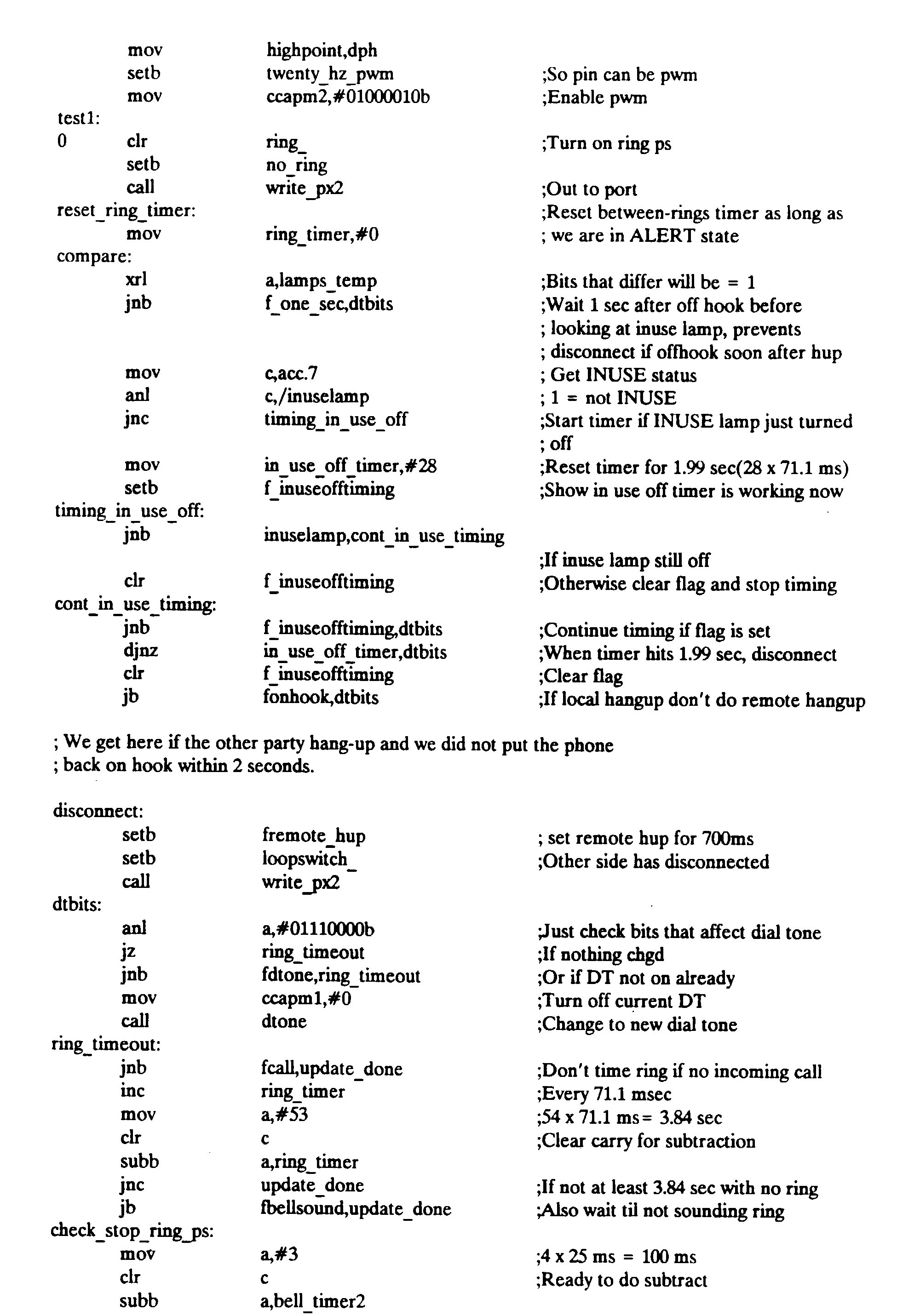

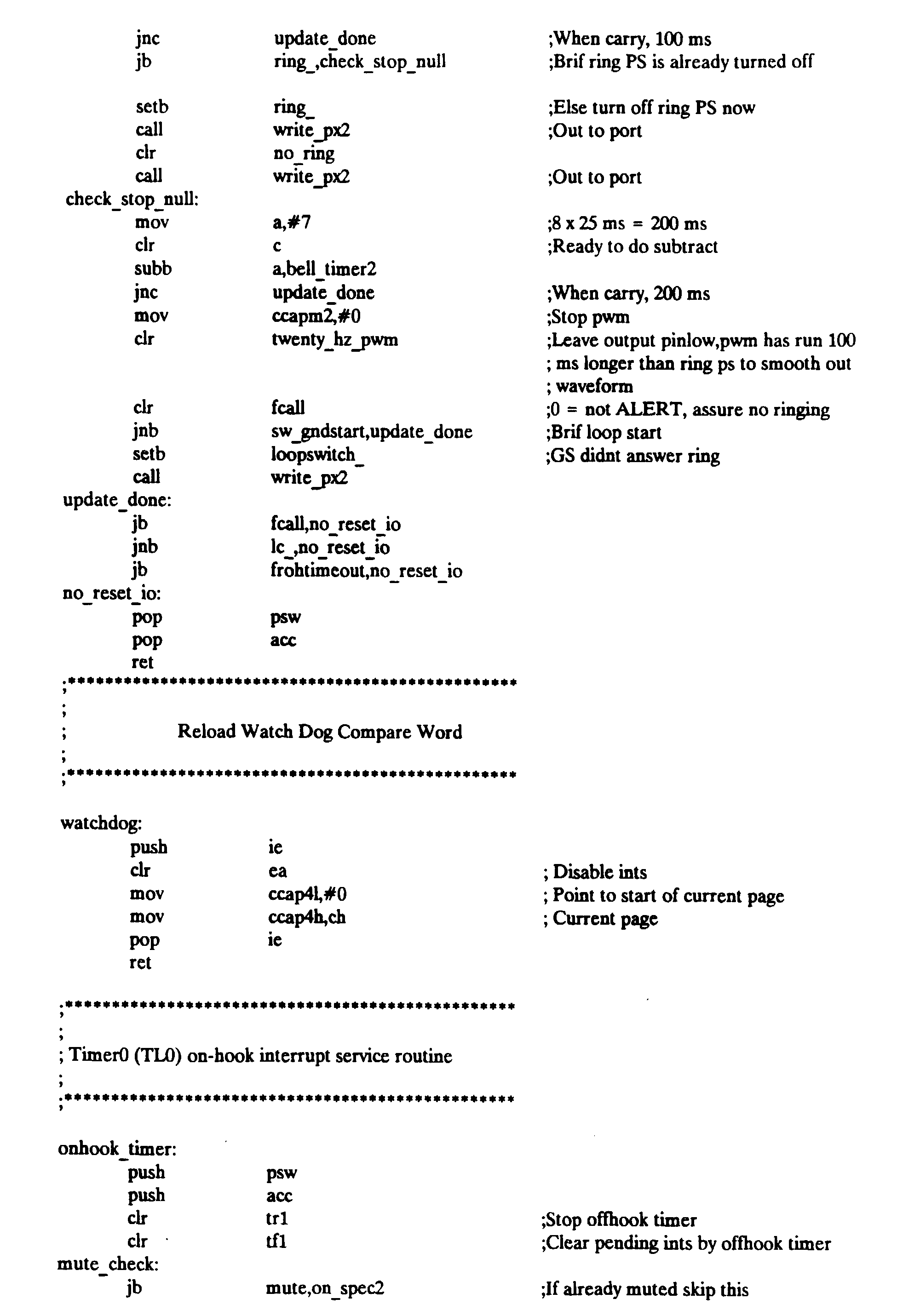

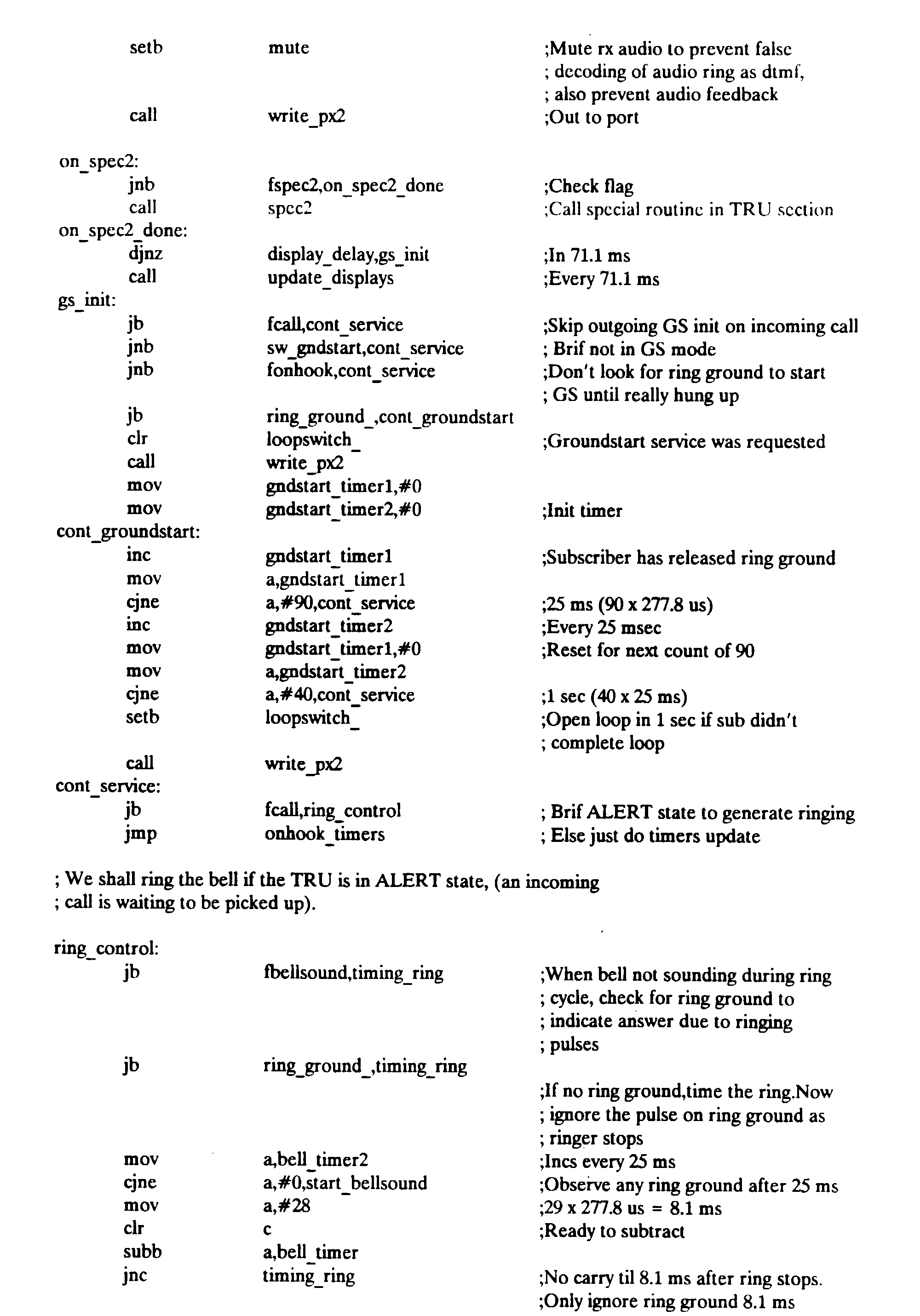

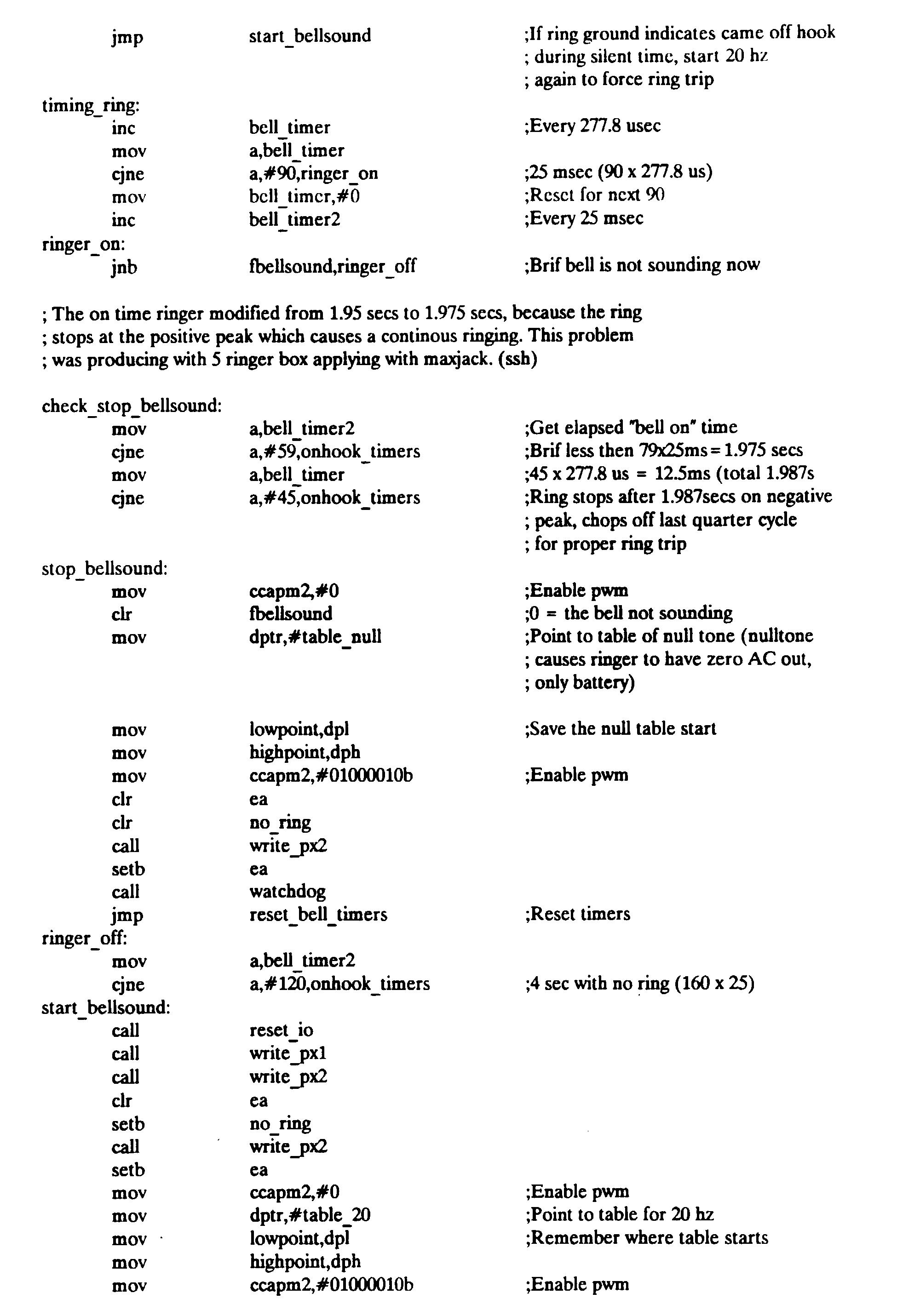

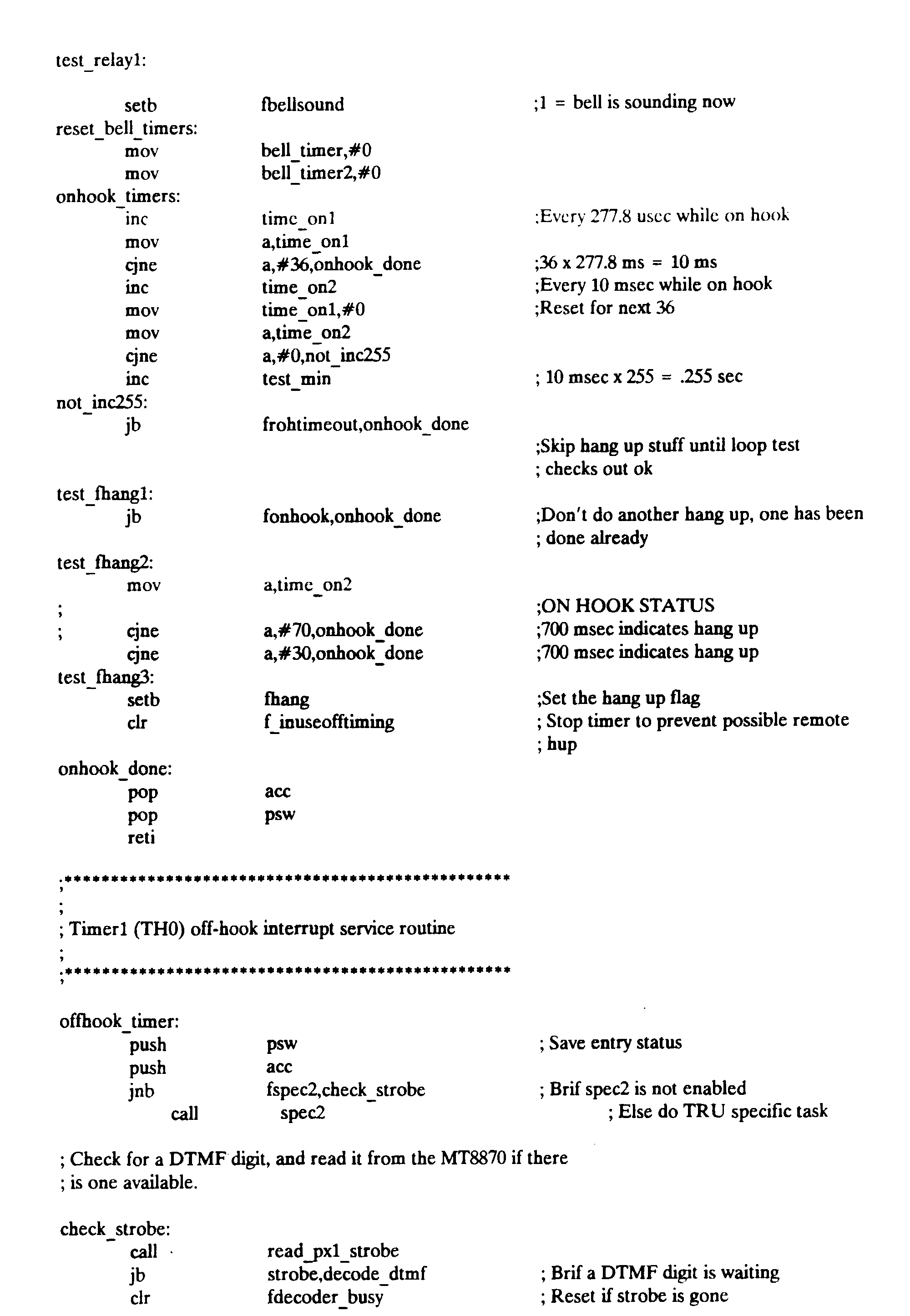

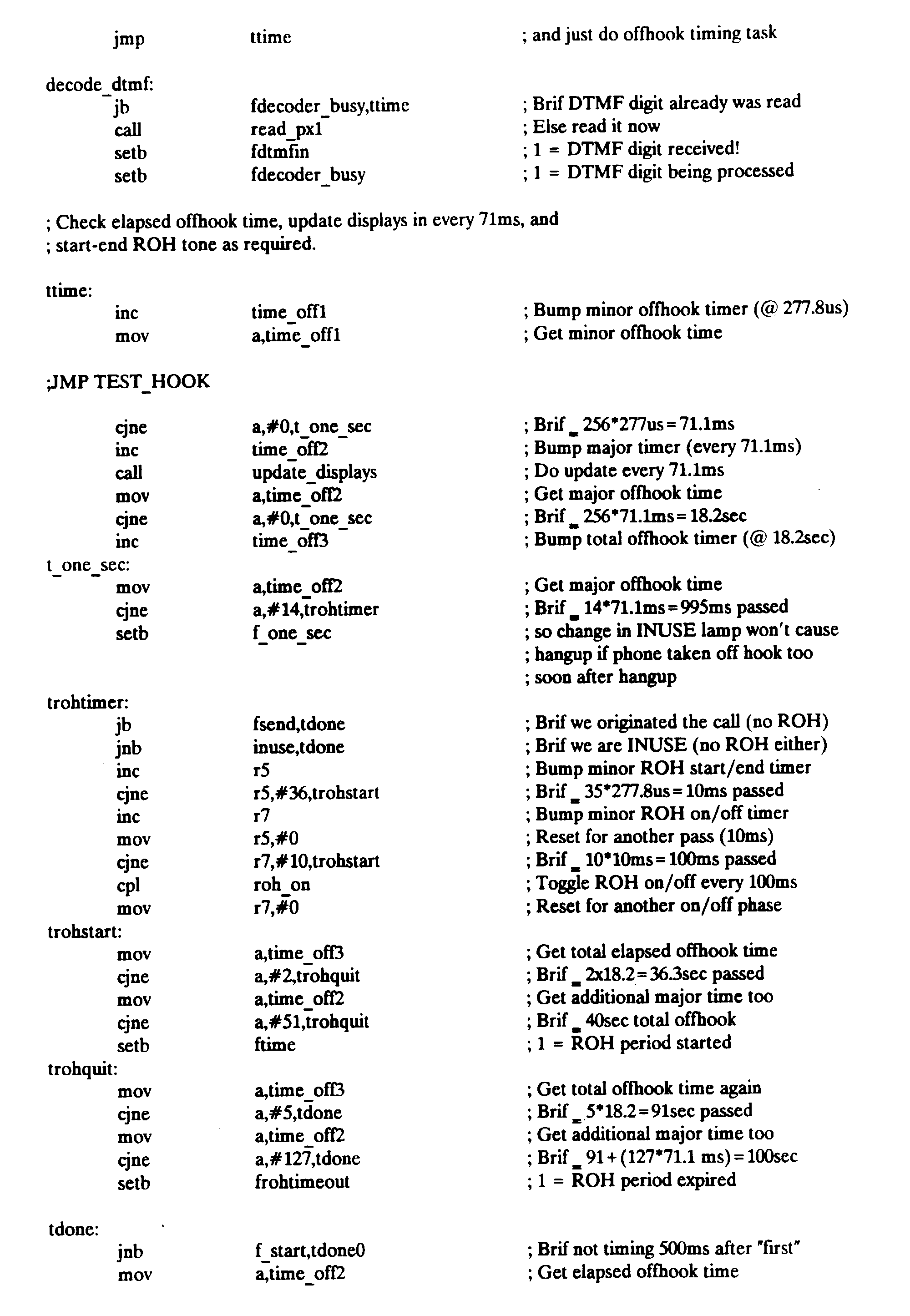

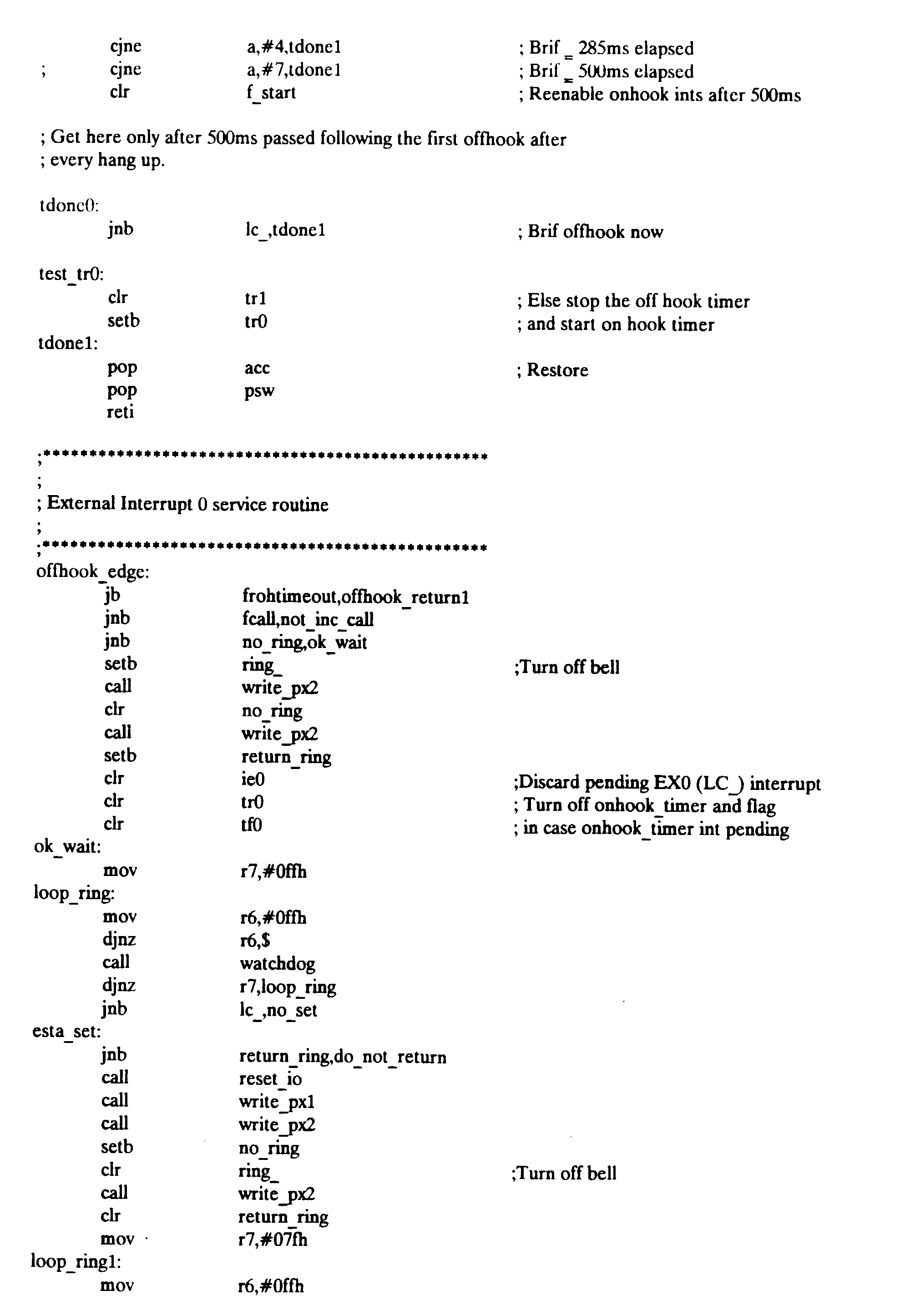

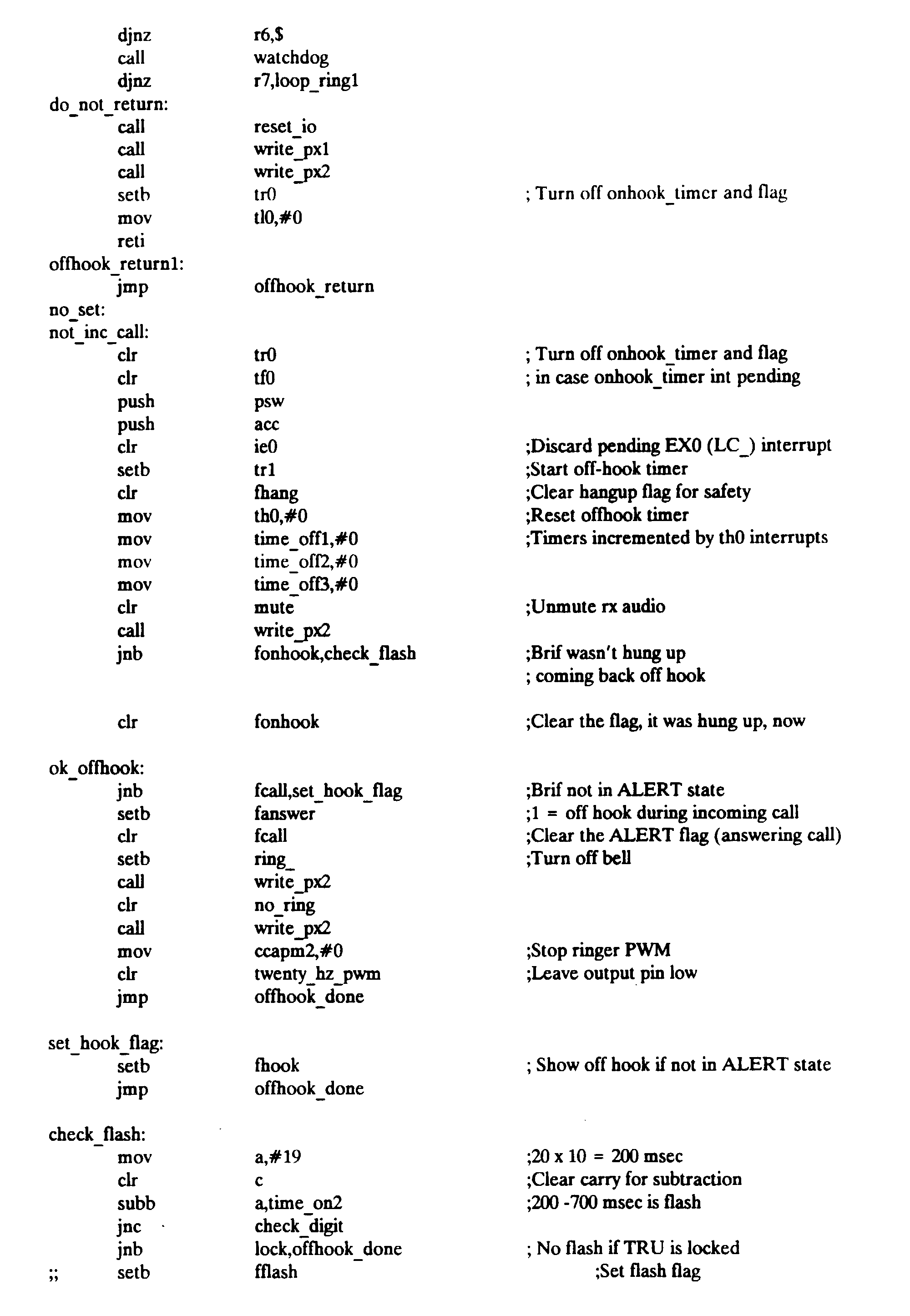

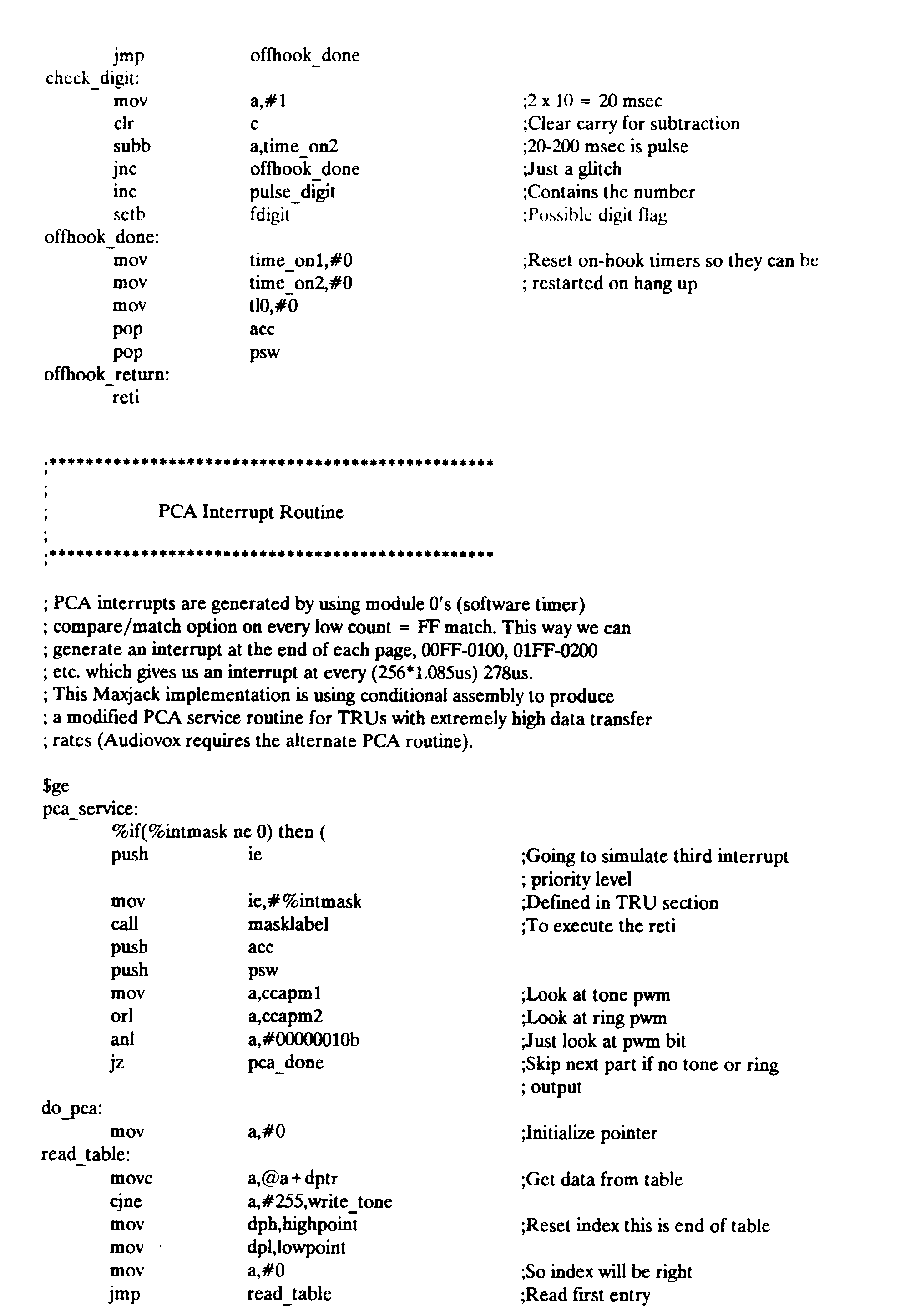

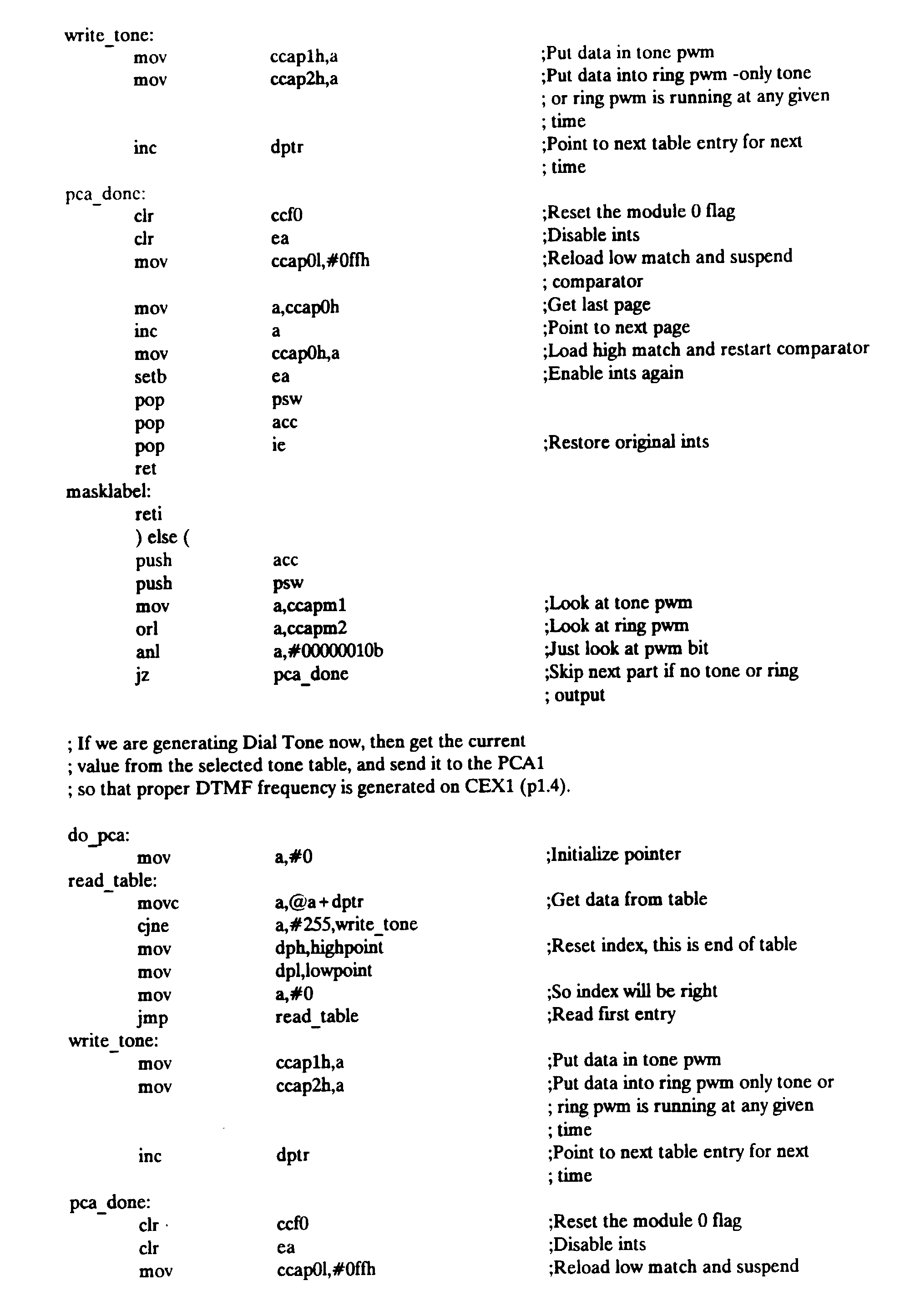

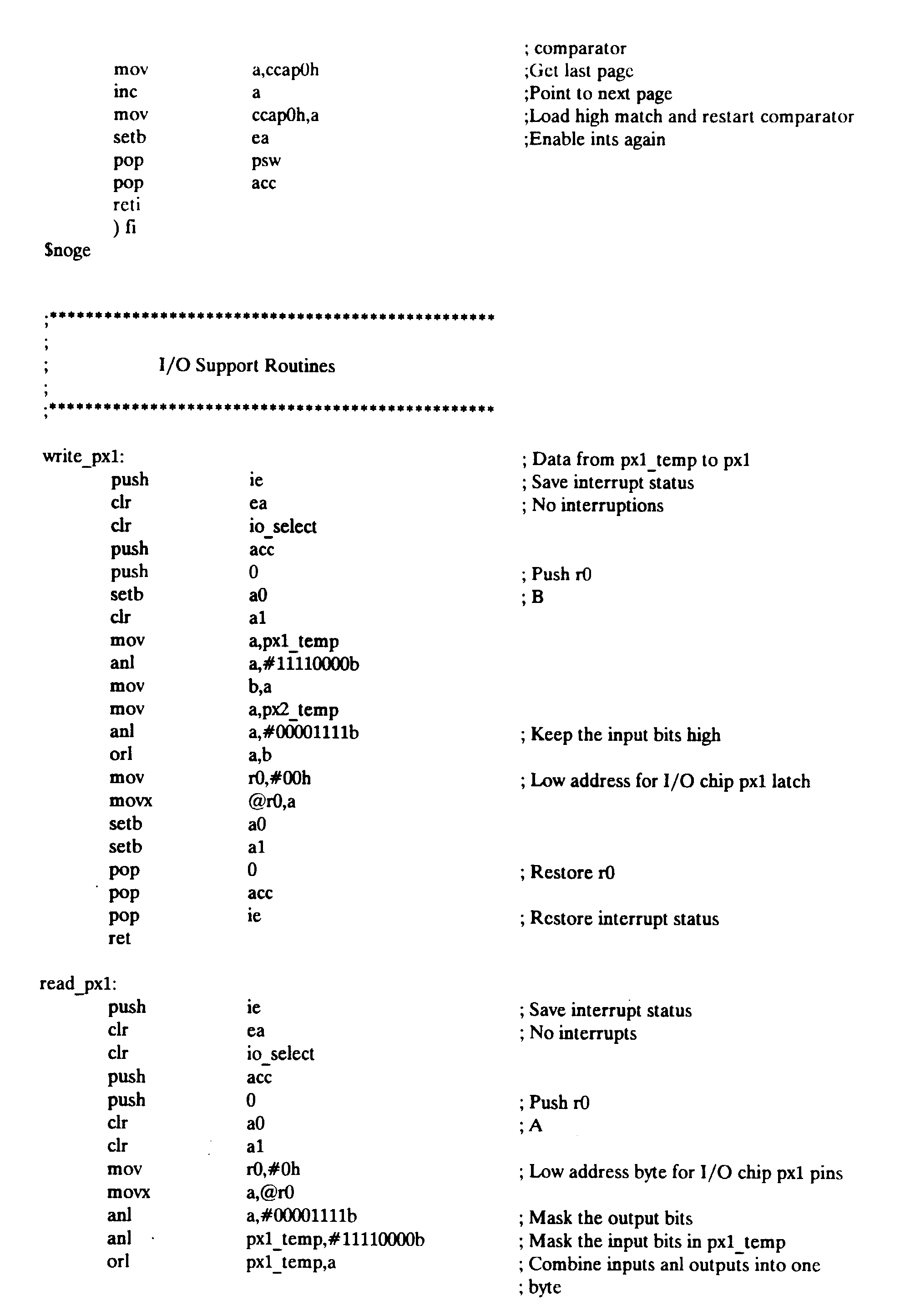

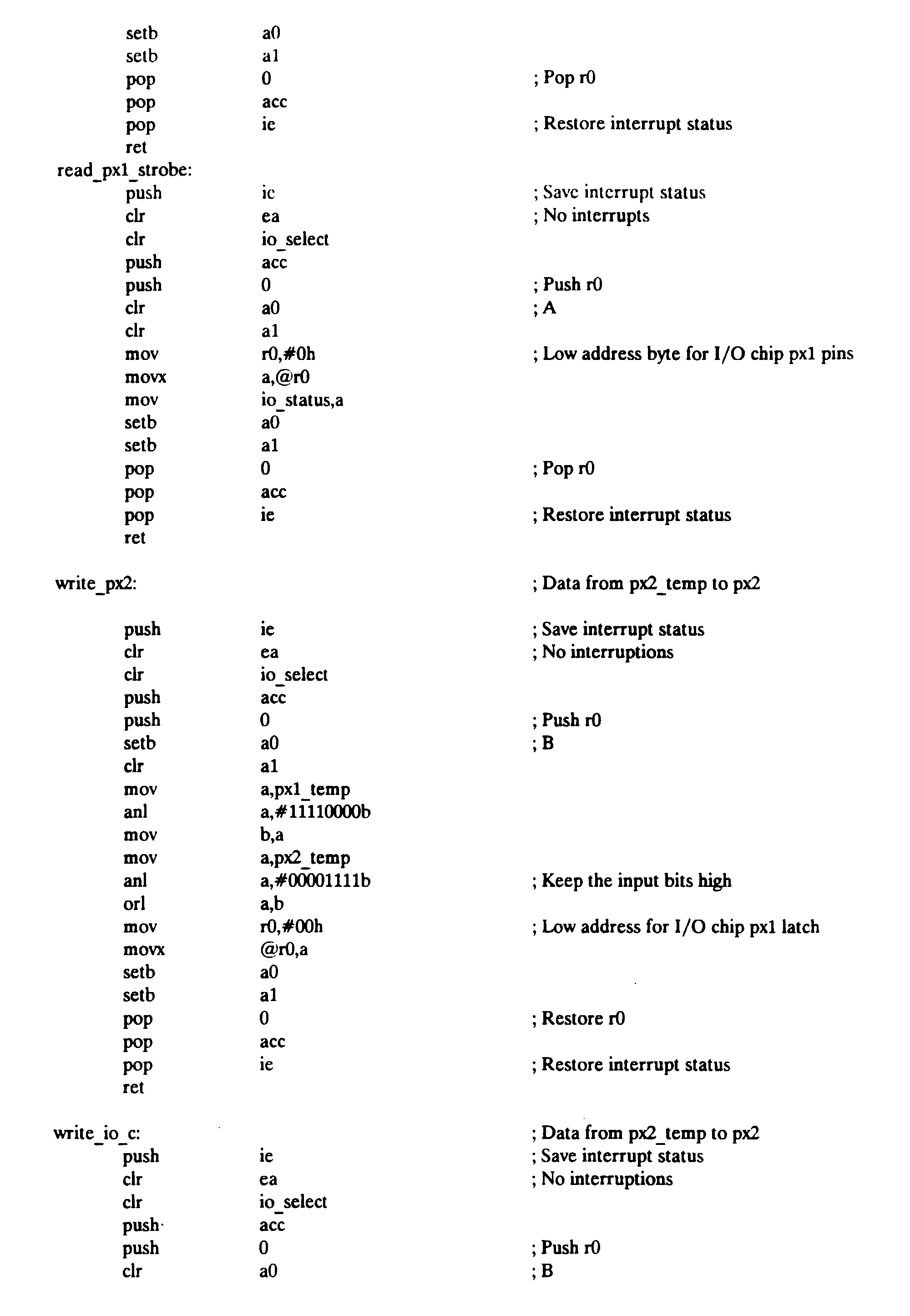

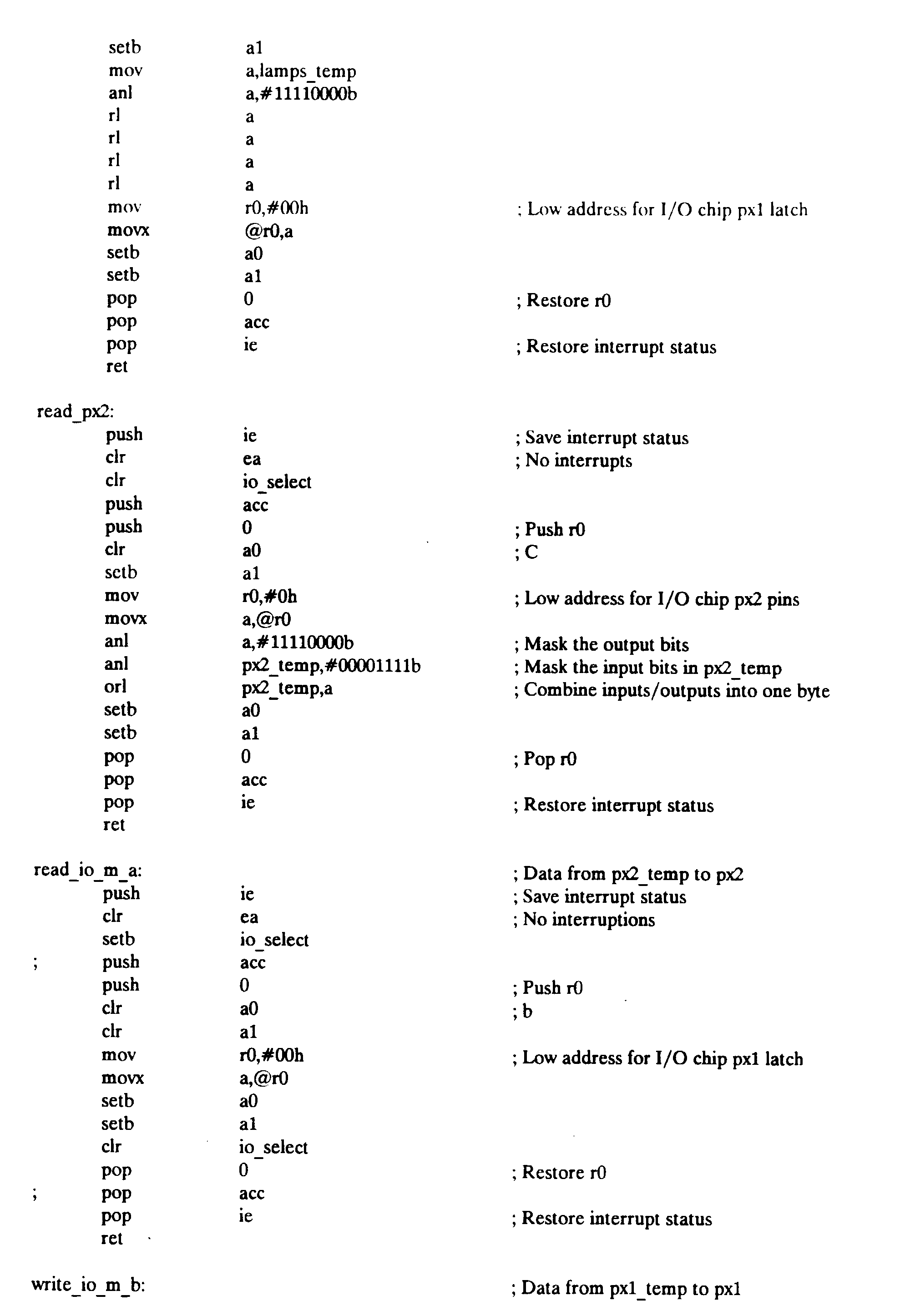

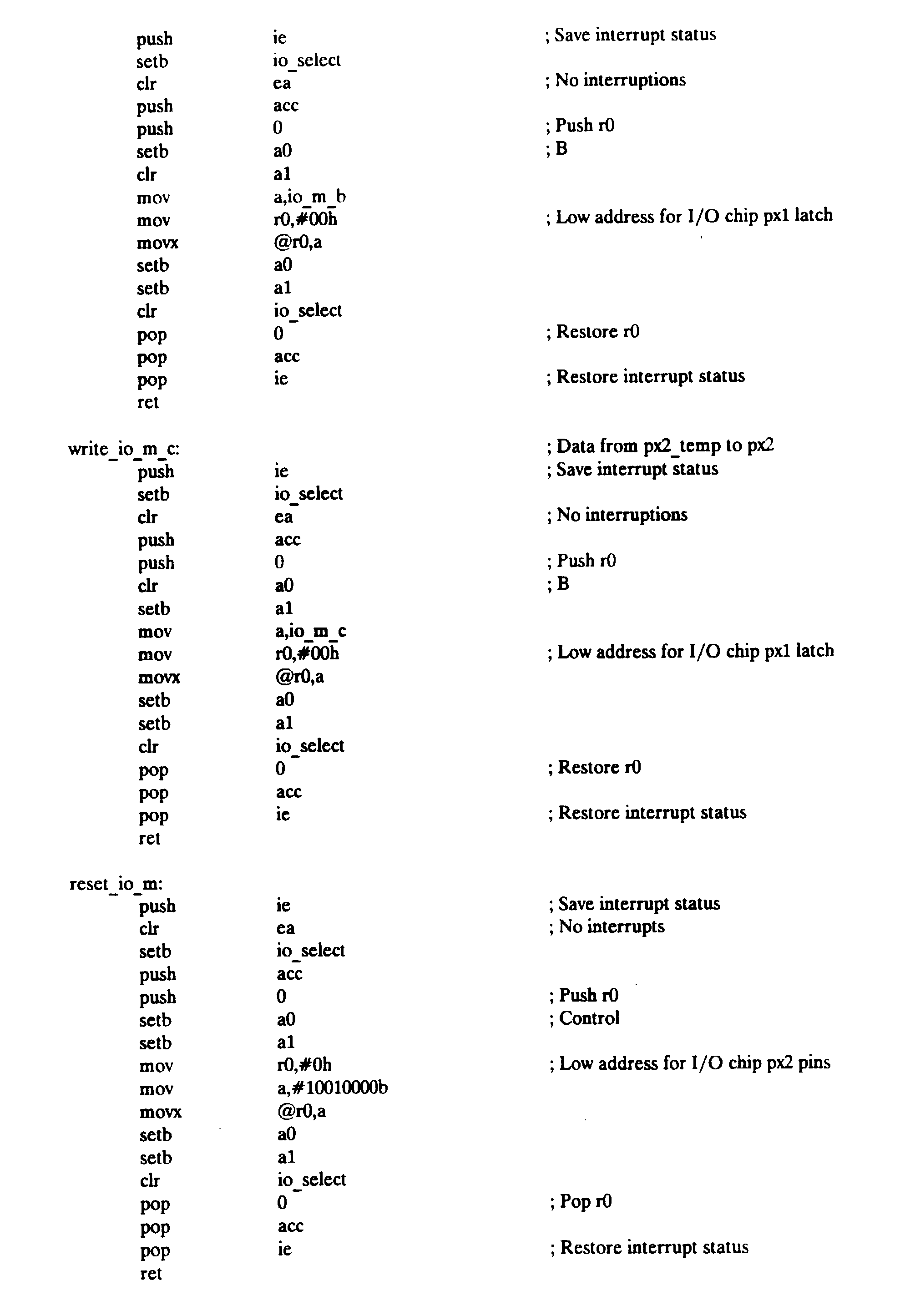

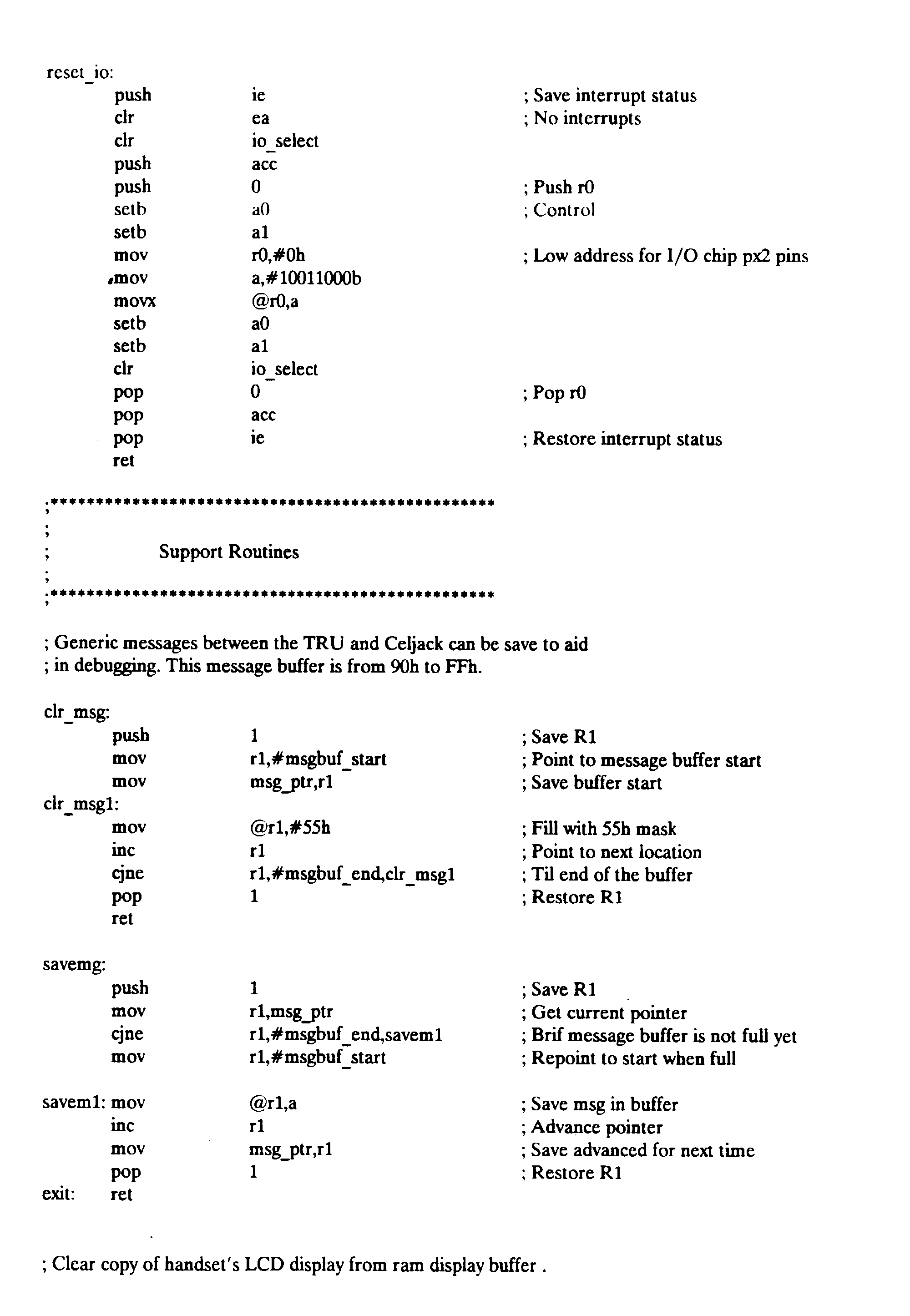

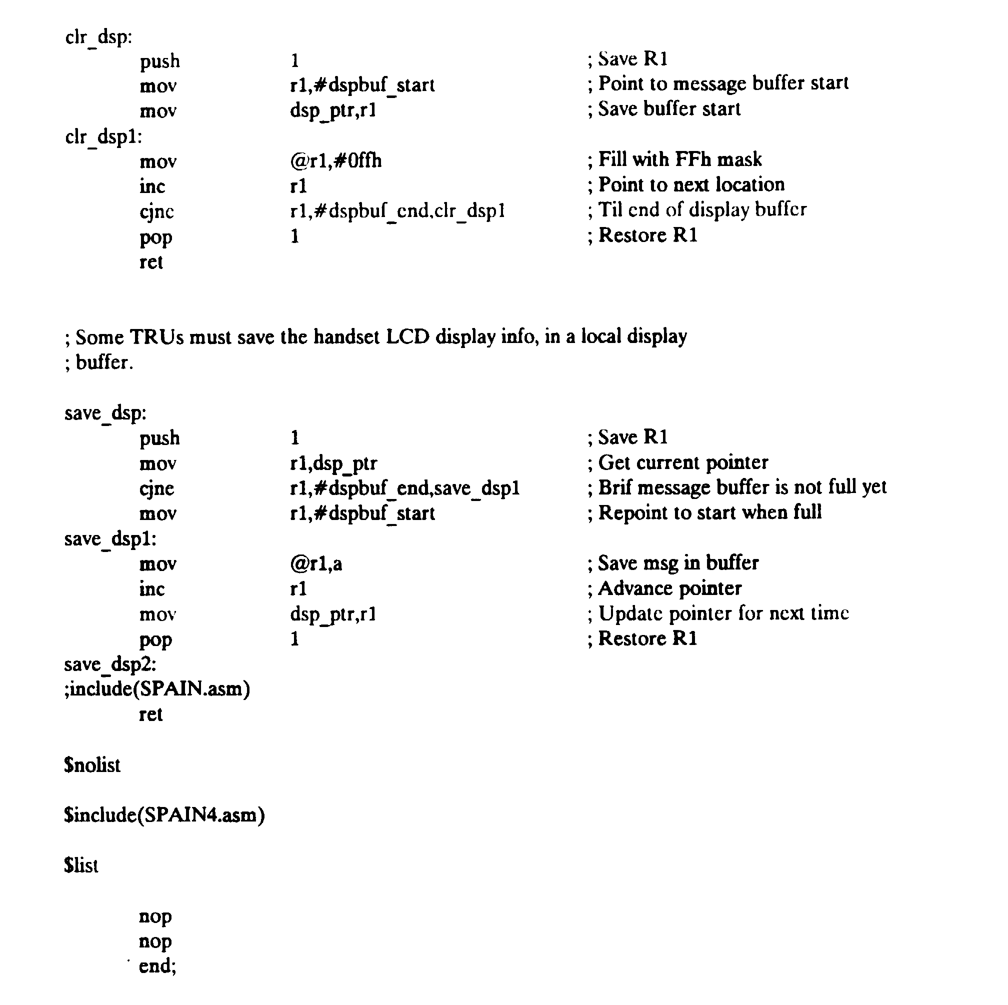

## Claims

1. A testing apparatus (10) for testing the proper operation of a cellular, or cellular-like, interface unit (14), which cellular, or cellular-like, interface unit (14) is capable of being coupled to a land-type telephone or telephone-like instrument, said cellular, or cellular-like, interface unit (14) capable of converting DTMF signals or pulse-type dialing signals from a land-type telephone instrument coupled thereto into digital data format for sending the digital data to a cellular, or cellular-like transceiver, said testing apparatus (10) comprising:
diagnostic means (16, 18, 20, 22, 24, 28, 30) for monitoring and reporting the proper functioning of said cellular, or cellular-like, interface unit (14) and
means for coupling (RELY 1) said diagnostic means to said cellular, or cellular-like, interface unit (14); wherein
said diagnostic means comprising means (SSR1, Q4, U4) for simulating the functions performed by a standard, land telephone-like instrument for generating in said cellular, or cellular-like, interface unit respective, corresponding responses in said cellular, or cellular-like, interface unit (14).

2. The testing apparatus according to claim 1, wherein said means (SSR1, Q4, R4) for simulating the functions performed by said standard land telephone-like instrument comprises means (U4) for generating a DTMF sigal and sending the signal to said cellular, or cellular-like, interface unit.

3. The testing apparatus according to claim 2, wherein said diagnostic means (16, 18, 20, 22, 24, 28, 30) comprises means (U11) for detecting the DTMF signal output by said cellular, or cellular-like, interface unit in response to the DTMF signal generated by said means (U4) for generating a DTMF signal.

4. The testing apparatus according to claim 1, wherein said diagnostic means (16, 18, 20, 22, 24, 28, 30) comprises means for simulating the presence of an incoming telephone call to said transceiver in order to cause said cellular, or cellular-like, interface unit to actuate its ring generator; said diagnostic means comprising means (U2, U9) for detecting the ring-signal produced thereby.

5. The testing apparatus according to claim 1, wherein said diagnostic means (16, 18, 20, 22, 24, 28, 30) comprises means for generating an outgoing telephone call through the cellular, or cellular-like telephone network, when said cellular, or cellular-like, interface unit is coupled to a transceiver, and back to said cellular, or cellular-like transceiver, whereby said diagnostic means causes said cellular, or cellular-like, transceiver to make a telephone call to itself; said diagnostic means further comprises means (U6) for detecting the generation of a busy-signal by the cellular, or cellular-like, transceiver in response to said telephone call; said means for generating an outgoing telephone call calling the telephone number which has been assigned to the transceiver coupled to said cellular, or cellular-like, interface unit (14).

6. A radio transceiver apparatus comprising a radio transceiver, an interface unit (14), and a communication device coupled to said radio transceiver, said interface unit (14) operatively coupling said communications device to said radio transceiver for either calling out or receiving calls through said radio transceiver, characterized in that the apparatus further comprises
auto-diagnostic means (10) for monitoring and reporting the proper functioning of said radio transceiver and said interface unit;
coupling means (RELY 1) for coupling said auto-diagnostic means (10) to said interface unit;
said auto-diagnostic means (10) comprising means (SSR1, Q4, U4) for simulating the functions performed by said communications device for generating in said interface unit (14) respective, corresponding responses in order to determine if said interface unit (14) is operating correctly.

7. The cellular-transceiver apparatus according to claim 6, wherein said auto-diagnostic means (10) comprises means for generating an outgoing telephone call through said interface unit (14) and said transceiver, through the radio telephone system with which said transceiver is associated, and back to said transceiver; said auto-diagnostic means (10) further comprising means (U6) for detecting the generation of a busy-signal by said transceiver in response to said telephone call; said means for generating an outgoing telephone call calling the telephone number which has been assigned to said transceiver with which it is operativly coupled.

8. A method of testing for the proper operationn of a cellular, or cellular-like, interface unit (14) by means of a diagnostic unit (10), which cellular, or cellular-like, interface unit is capable of being coupled to a land-type telephone or telephone-like instrument, said cellular, or cellular-like, interface unit capable of converting DTMF signals or pulse-type dialing signals from a land-type telephone instrument coupled thereto into digital data format for sending the digital data to a cellular, or cellular-like transceiver, said method comprising:
coupling said diagnostic unit (10) to said cellular, or cellular-like, interface unit (14);
simulating in the diagnostic unit functions performed by the land-type telephone or telephone-like instrument for generating in said cellular, or cellular-like, interface unit (14) respective, corresponding responses in said cellular, or cellular-like, interface unit (14);
monitoring and reporting the functions performed by said cellular, or cellular-like, interface unit in order to determine if said cellular, or cellular-like, interface unit is operating correctly.

9. The method according to claim 8, wherein said simulating step comprises generating an off-hook signal.

10. The method according to claim 9, further comprising detecting the presence of a dial-tone digital generated from said cellular, or cellular-like, interface unit in response to said generation of said off-hook signal.

11. The method according to claim 8, wherein said simulating step comprises generating a DTMF signal.

12. The method according to claim 11, further comprising detecting the DTMF signal output by said cellular, or cellular-like, interface unit in response to the DTMF signal generated.

13. The method according to claim 11, wherein said simulating step comprises generating an on-hook signal.

14. The method according to claim 8, including the further step of simulating the presence of an incoming telephone call to said transceiver in order to cause said cellular, or cellular-like, interface unit to actuate its ring generator; and for detecting the ring-signal produced thereby.

15. The method according to claim 14, further including the step of generating an off-hook signal during the time that said cellular, or cellular-like, interface unit (14) is generating its ring-signal, in order to determine that the cellular, or cellular-like, interface unit properly disconnects the ring-signal upon the answering of an incoming telephone call.

16. The method according to claim 8, further including the step of generating an outgoing telephone call through the cellular, or cellular-like, telephone network, when said cellular, or cellular-like, interface unit is coupled to a transceiver, and back to said cellular, or cellular-like, transceiver; said step of generating an outgoing telephone call causing said cellular, or cellular-like, transceiver to make a telephone call to itself; and further comprising detecting the generation of a busy-signal by the cellular, or cellular-like, transceiver in response to said telephone call.

## Patentansprüche

1. Vorrichtung (10) zum Prüfen einer zellularen bzw. einer zellularen ähnlichen Schnittstelleneinheit (14) auf einwandfreien Betrieb, welche zellulare bzw. einer zellularen ähnliche Schnittstelleneinheit (14) mit einem Landtelefon oder einem einem Landtelefon ähnlichen Gerät verbindbar ist und DTMF-Ton- oder Impuls-Wählsignale aus einem angeschlossenen landtelefonartigen Gerät digitalisieren und die digitalen Daten auf ein zellulares bzw. ein einem zellularen ähnliches Sendeempfangsgerät geben kann, mit
einer Diagnoseeinrichtung (16, 18, 20, 22, 24, 28, 30) zum Überwachen der zellularen bzw. einer zellularen ähnlichen Schnittstelleneinheit (14) auf einwandfreie Funktion und zum Berichten ihres Betriebszustands, sowie
einer Einrichtung (RELY1), die die Diagnoseeinrichtung mit der zellularen bzw. der einer zellularen ähnlichen Schnittstelleneinheit (14) verbindet, wobei
die Diagnoseeinrichtung Einrichtungen (SSRI, Q4, U4) zum Simulieren der von einem landtelefonartigen Standardgerät ausgeübten Funktionen aufweist, um in der Schnittstelleneinheit (14) entsprechende Reaktionen auszulösen.

2. Prüfvorrichtung nach Anspruch 1, bei der die Einrichtung (SSRI, Q4, U4) zum Simulieren der von dem landtelefonartigen Standardgerät ausgeübten Funktionen eine Einrichtung (U4) aufweist, die ein DTMF-Tonwählsignal erzeugt und es an die zellulare bzw. einer zellularen ähnliche Schnittstelleneinheit sendet.

3. Prüfvorrichtung nach Anspruch 2, bei der die Diagnoseeinrichtung (16, 18, 20, 22, 24, 28, 30) eine Einrichtung (U11) zum Erfassen des DTMF-Ton-Ausgangssignals aufweist, das die zellulare bzw. einer zellularen ähnliche Schnittstelleneinheit ansprechend auf das DTMF-Tonwahlsignal abgibt, das die Einrichtung (U4) zum Erzeugen eines DTMF-Tonwahlsignals erzeugt hat.

4. Prüfvorrichtung nach Anspruch 1, bei der die Diagnoseeinrichtung (16, 18, 20, 22, 24, 28, 30) eine Einrichtung zum Simulieren eines ankommenden Telefonanrufs an den Sendeempfänger aufweist, damit die zellulare bzw. einer zellularen ähnliche Schnittstelleneinheit ihren Ruftongenerator betätigt, wobei die Diagnoseeinrichtung eine Einrichtung (U2, U9) aufweist, um das so erzeugte Ruftonsignal zu erfassen.

5. Prüfvorrichtung nach Anspruch 1, bei der die Diagnoseeinrichtung (16, 18, 20, 22, 24, 28, 30) eine Einrichtung zum Erzeugen eines abgehenden Telefonanrufs bei an einen Sendeempfänger angeschlossener zellularer bzw. einer zellularen ähnlicher Schnittstelleneinheit über das zellulare bzw. das einem zellularen ähnliche Telefonnetz und zurück an den zellularen bzw. einem zellularen ähnlichen Sendeempfänger aufweist, wobei die Diagnoseeinrichtung den zellularen bzw. einem zellularen ähnlichen Sendeempfänger veranlaßt, einen Anruf an sich selbst zu tätigen, und bei der die Diagnoseeinrichtung weiterhin eine Einrichtung (U6) zum Erfassen eines Besetzt-Signals durch den zellularen bzw. einem zellularen ähnlichen Sendeempfänger ansprechend auf den Telefonanruf aufweist und die Einrichtung zum Erzeugen eines Telefonanrufs die dem an die zellulare bzw. einer zellularen ähnliche Schnittstelleneinheit (14) angeschlossenen Sendeempfänger zugewiesene Rufnummer anruft.

6. Funksendeempfangsgerät mit einem Funksendeempfänger, einer Schnittstelleneinheit (14) und einer an den Funksendeempfänger angeschlossenen Kommunikationseinrichtung, wobei die Schnittstelleneinheit (14) die Kommunikationseinrichtung betrieblich zum Absetzen abgehender und zum Empfang ankommender Telefonanrufe über den Funksendempfänger mit letzterem verbindet, dadurch gekennzeichnet, daß das Gerät weiterhin
eine Selbstdiagnoseeinrichtung (10) zum Überwachen des Funksendeempfängers und der Schnittstelleneinheit auf einwandfreie Funktion und zum Berichten des Betriebszustands und
eine Einrichtung (RELY1) aufweist, die die Selbstdiagnoseeinrichtung (10) mit der Schnittstelleneinheit verbindet, wobei
die Selbstdiagnoseeinrichtung (10) eine Einrichtung (SSR1, Q4, U4) aufweist, mit der die Funktionen der Kommunikationseinrichtung simulierbar sind, mit denen in der Schnittstelleneinheit (14) zum Ermitteln einer einwandfreien Funktion derselben entsprechende Reaktionen hervorgerufen werden.

7. Zellulares Sendeempfangsgerät nach Anspruch 6, bei dem die Selbstdiagnoseeinrichtung (10) Mittel aufweist, um über die Schnittstelleneinheit (14) und den Sendeempfänger, über das Funktelefonnetz, in dem der Sendeempfänger arbeitet, und zurück zum Sendempfänger einen abgehenden Telefonanruf zu erzeugen, wobei die Selbstdiagnoseeinrichtung (10) weiterhin Mittel (U6) aufweist, um die Erzeugung eines Besetzt-Signals durch den Sendeempfänger ansprechend auf den Telefonanruf zu erfassen, und wobei die Mittel zum Erzeugen eines abgehenden Telefonanrufs die dem betrieblich angeschlossenen Sendeempfänger zugeordnete Rufnummer anrufen.

8. Verfahren zum Prüfen einer zellularen bzw. einer einer zellularen ähnlichen Schnittstelleneinheit (14) mittels eine Diagnoseeinheit (10), wobei die zellulare bzw. einer zellularen ähnliche Schnittstelleneinheit mit einem Landtelefon oder einem landtelefonartigen Gerät verbindbar ist und die zellulare bzw. einer zellularen ähnliche Schnittstelleneinheit DTMF-Ton- oder Impulswahlsig-nale aus einem angeschlossenen landtelefonartigen Gerät digitalisieren und die digitalen Daten an einen zellularen bzw. an einen einem zellularen ähnlichen Sendeempfänger senden, nach welchem Verfahren man
die Diagnoseeinheit (10 an die zellulare oder an eine der zellularen ähnliche Schnittstelleneinheit (14) anschließt,
in der Diagnoseeinheit von dem Landtelefon oder dem telefonartigen Gerät ausgeführte Funktionen simuliert, um in der zellularen bzw. der einer zellularen ähnlichen Schnittstelleneinheit (14) entsprechende Reaktionen hervorzurufen, und
die von der zellularen bzw. der einen zellularen ähnlichen Schnittstelleneinheit ausgeführten Funktionen überwacht und berichtet, um zu ermitteln, ob die zellulare bzw. die einer zellularen ähnliche Schnittstelleneinheit einwandfrei arbeitet.

9. Verfahren nach Anspruch 8, bei dem das Simulieren das Erzeugen eines Beginnzeichens beinhaltet.

10. Verfahren nach Anspruch 9, bei dem man weiterhin ansprechend auf das Erzeugen des Beginnsignals das Vorliegen eines von der zellularen bzw. der einer zellularen ähnlichen Schnittstelleneinheit erzeugen Wähltonsignals ermittelt.

11. Verfahren nach Anspruch 8, bei dem das Simulieren das Erzeugen eines DTMF-Tonwahlsignals beinhaltet.

12. Verfahren nach Anspruch 11, bei dem man weiterhin das DTMF-Signal erfaßt, das die zellulare bzw. einer zelluaren ähnliche Schnittstelleneinheit ansprechend auf das erzeugte DTMF-Tonwahlsignal abgibt.

13. Verfahren nach Anspruch 11, bei dem das Simulieren das Erzeugen eines Schlußzeichens beinhaltet.

14. Verfahren nach Anspruch 8, bei dem man weiterhin das Vorhandensein eines ankommenden Telefonanrufs an den Sendeempfänger simuliert, um zu bewirken, daß die zellulare bzw. einer zellularen ähnliche Schnittstelleneinheit einen Ruftongenerator betätigt, und das so erzeugte Ruftonsignal ermittelt.

15. Verfahren nach Anspruch 14, bei dem man weiterhin, während die zellulare bzw. einer zellularen ähnliche Schnittstelleneinheit (14) das Ruftonsignal erzeugt, ein Beginnzeichen erzeugt, um zu bestimmen, ob die Schnittstelleneinheit (14) beim Beantworten eines ankommenden Rufs das Ruftonsignal einwandfrei abschaltet.

16. Verfahren nach Anspruch 8, bei dem man weiterhin bei an einen Sendeempfänger angeschlossener zellularer bzw. einer zellularen ähnlicher Schnittstelleneinheit einen abgehenden Telefonanruf über das zellulare bzw. einem zellularen ähnliche Netz und zurück zu dem zellularen bzw. einem dem zellularen ähnlichen Sendeempfänger erzeugt, wobei das Erzeugen eines abgehenden Telefonanrufs bewirkt, daß der zellulare bzw. einem zellularen ähnliche Sendempfänger einen Telefonanruf an sich selbst tätigt, und bei dem man weiterhin ansprechend auf den Telefonanruf die Erzeugung eines Besetzt-Signals durch den zellularen bzw. einen dem zelluralen ähnlichen Sendeempfänger ermittelt.

## Revendications

1. Dispositif de test (10) pour tester le fonctionnement correct d'une unité d'interface (14) cellulaire, ou du type cellulaire, laquelle unité d'interface (14) cellulaire, ou du type cellulaire, est capable d'être reliée à un téléphone du type terrestre ou à un appareil du type téléphone, ladite unité d'interface (14) cellulaire, ou du type cellulaire, étant capable de convertir des signaux DTMF ou des signaux de numérotation du type pulsé provenant d'un poste téléphonique du type terrestre relié à celle-ci en un format de données numériques pour envoyer les données numériques vers un transcepteur cellulaire, ou du type cellulaire, ledit dispositif de test (10) comportant :
des moyens de diagnostic (16, 18, 20, 22, 24, 28, 30) pour contrôler et transmettre le fonctionnement correct de ladite unité d'interface (14) cellulaire, ou du type cellulaire, et
des moyens pour relier (RELY1) lesdits moyens de diagnostic à ladite unité d'interface (14) cellulaire, ou du type cellulaire, à la place dudit téléphone du type terrestre ou de l'appareil du type téléphone ; dans lequel
lesdits moyens de diagnostic comportant des moyens (SSR1, Q4, U4) pour simuler les fonctions réalisées par un appareil du type téléphone terrestre, standard pour produire dans ladite unité d'interface respective cellulaire, ou du type cellulaire, des réponses correspondantes dans ladite unité d'interface (14) cellulaire, ou du type cellulaire.

2. Dispositif de test selon la revendication 1, dans lequel lesdits moyens (SSR1, Q4, U4) pour simuler les fonctions réalisées par ledit appareil du type téléphone terrestre standard comportent des moyens (U4) pour émettre un signal DTMF et envoyer le signal vers ladite unité d'interface cellulaire, ou du type cellulaire.

3. Dispositif de test selon la revendication 2, dans lequel lesdits moyens de diagnostic (16, 18, 20, 22, 24, 28, 30) comportent des moyens (U11) pour détecter le signal DTMF émis par ladite unité d'interface cellulaire, ou du type cellulaire, en réponse au signal DTMF émis par lesdits moyens (U4), pour émettre un signal DTMF.

4. Dispositif de test selon la revendication 1, dans lequel lesdits moyens de diagnostic (16, 18, 20, 22, 24, 28, 30) comportent des moyens pour simuler la présence d'un appel téléphonique entrant au niveau dudit transcepteur dans le but d'amener l'unité d'interface cellulaire, ou du type cellulaire, à activer son générateur de sonnerie ; lesdits moyens de diagnostic comportant des moyens (U2, U9) pour détecter le signal de sonnerie émis par celui-ci.

5. Dispositif de test selon la revendication 1, dans lequel lesdits moyens de diagnostic (16, 18, 20, 22, 24, 28, 30) comportent des moyens pour produire un appel téléphonique sortant à travers le réseau téléphonique cellulaire, ou du type cellulaire, lorsque ladite unité d'interface cellulaire, ou du type cellulaire, est reliée à un transcepteur, et le faire revenir vers ledit transcepteur cellulaire, ou du type cellulaire, de sorte que lesdits moyens de diagnostic entraînent ledit transcepteur cellulaire, ou du type cellulaire, à faire un appel téléphonique vers lui-même ; lesdits moyens de diagnostic comportent de plus des moyens (U6) pour détecter l'émission d'un signal d'occupation par le transcepteur cellulaire, ou du type cellulaire, en réponse audit appel téléphonique ; lesdits moyens pour produire un appel téléphonique sortant appelant le numéro de téléphone qui a été assigné au transcepteur relié à ladite unité d'interface (14) cellulaire, ou du type cellulaire.

6. Dispositif de transcepteur radio comportant un transcepteur radio, une unité d'interface (14), et un dispositif de communications relié audit transcepteur radio, ladite unité d'interface (14) reliant de manière opérationnelle ledit dispositif de communications audit transcepteur radio pour émettre ou recevoir des appels à travers ledit transcepteur radio, caractérisé en ce que le dispositif comporte de plus
des moyens d'autodiagnostic (10) pour contrôler et transmettre le fonctionnement correct dudit transcepteur de radio et de ladite unité d'interface ;
des moyens de couplage (RELY1) pour relier lesdits moyens d'autodiagnostic (10) à ladite unité d'interface à la place dudit dispositif de communications ;
lesdits moyens d'autodiagnostic (10) comportant des moyens (SSR1, Q4, U4) pour simuler les fonctions réalisées par ledit dispositif de communications pour produire dans ladite unité d'interface (14) respective, des réponses correspondantes dans le but de déterminer si l'unité d'interface (14) fonctionne correctement.

7. Dispositif de transcepteur cellulaire selon la revendication 6, dans lequel lesdits moyens d'autodiagnostic (10) comportent des moyens pour produire un appel téléphonique sortant à travers ladite unité d'interface (14) et ledit transcepteur, à travers le système téléphonique radio avec lequel ledit transcepteur est associé, et le faire revenir vers ledit transcepteur ; lesdits moyens d'autodiagnostic (10) comportant de plus des moyens (U6) pour détecter l'émission d'un signal d'occupation par ledit transcepteur en réponse audit appel téléphonique ; lesdits moyens pour produire un appel téléphonique sortant appelant le numéro de téléphone qui a été assigné audit transcepteur avec lequel il est relié de manière opérationnelle.

8. Procédé pour tester le fonctionnement correct d'une unité d'interface (14) cellulaire, ou du type cellulaire, par l'intermédiaire d'une unité de diagnostic (10), laquelle unité d'interface cellulaire, ou du type cellulaire, est capable d'être reliée à un téléphone du type terrestre ou à un appareil du type téléphone, ladite unité d'interface cellulaire, ou du type cellulaire, étant capable de convertir des signaux DTMF ou des signaux de numérotation du type pulsé provenant d'un poste téléphonique du type terrestre relié à celle-ci en un format de données numériques pour envoyer les données numériques vers un transcepteur cellulaire, ou du type cellulaire, ledit procédé comportant les étapes consistant à :
relier ladite unité de diagnostic (10) à ladite unité d'interface (14) cellulaire, ou du type cellulaire, à la place dudit téléphone du type terrestre ou dudit appareil du type téléphone,
simuler dans l'unité de diagnostic des fonctions réalisées par le téléphone du type terrestre ou l'appareil du type téléphone pour produire dans ladite unité d'interface respective (14) cellulaire, ou du type cellulaire, des réponses correspondantes dans ladite unité d'interface (14) cellulaire, ou du type cellulaire,
contrôler et transmettre les fonctions réalisées par ladite unité d'interface cellulaire, ou du type cellulaire, dans le but de déterminer si ladite unité d'interface cellulaire, ou du type cellulaire, fonctionne correctement.

9. Procédé selon la revendication 8, dans lequel ladite étape de simulation comporte l'émission d'un signal de décrochage.

10. Procédé selon la revendication 9, comportant de plus la détection de la présence d'un signal de tonalité émis par ladite unité d'interface cellulaire, ou du type cellulaire, en réponse à ladite émission dudit signal de décrochage.

11. Procédé selon la revendication 8, dans lequel ladite étape de simulation comporte l'émission d'un signal DTMF.

12. Procédé selon la revendication 11, comportant de plus la détection du signal DTMF émis par ladite unité d'interface cellulaire, ou du type cellulaire, en réponse au signal DTMF émis.

13. Procédé selon la revendication 11, dans lequel ladite étape de simulation comporte l'émission d'un signal de raccrochage.

14. Procédé selon la revendication 8, comportant l'étape supplémentaire consistant à simuler la présence d'un appel téléphonique entrant vers ledit transcepteur dans le but d'amener l'unité d'interface cellulaire, ou du type cellulaire, à activer son générateur de sonnerie ; et pour détecter le signal de sonnerie émis par celui-ci.

15. Procédé selon la revendication 14, comportant de plus l'étape consistant à émettre un signal de décrochage pendant le temps où ladite unité d'interface (14) cellulaire, ou du type cellulaire, émet son signal de sonnerie, dans le but de déterminer si l'unité d'interface cellulaire, ou du type cellulaire, déconnecte correctement le signal de sonnerie lors de la réponse à un appel téléphonique entrant.

16. Procédé selon la revendication 8, comportant de plus l'étape consistant à produire un appel téléphonique sortant à travers le réseau téléphonique cellulaire, ou du type cellulaire, lorsque ladite unité d'interface cellulaire, ou du type cellulaire, est reliée à un transcepteur, et le faire revenir vers ledit transcepteur cellulaire, ou du type cellulaire ; ladite étape consistant à produire un appel téléphonique sortant amenant ledit transcepteur cellulaire, ou du type cellulaire, à faire un appel téléphonique vers lui-même ; et comportant de plus la détection de l'émission d'un signal d'occupation par le transcepteur cellulaire, ou du type cellulaire, en réponse audit appel téléphonique.
